# EUROPEAN PATENT APPLICATION

(11) **EP 4 552 918 A1**
(43) Date of publication of application: **14.05.2025**
(21) Application number: 23835544.0
(22) Date of filing: 04.07.2023
(51) Int. Cl.: B60N 2/14, B60N 2/90, A47C 3/18

(54) **ROTATION DEVICE AND METHOD FOR MANUFACTURING SAME**

(30) Priority: 06.07.2022 US 202263358575 P; 30.09.2022 US 202263411759 P; 04.11.2022 US 202263422545 P; 10.11.2022 US 202263424238 P; 16.11.2022 JP 2022183270; 16.11.2022 US 202263425758 P; 24.02.2023 JP 2023027374; 05.04.2023 JP 2023061642; 26.06.2023 JP 2023104529
(71) Applicant: TS Tech Co., Ltd., Asaka-shi, Saitama 351-0012 (JP)
(72) Inventor: KATORI,Takayoshi, Shioya-gun, Tochigi 329-1217 (JP)
(74) Representative: Dehns
(86) International application number: PCT/JP2023/024840
(87) International publication number: WO 2024/010013

(57) **Abstract**

To provide a rotation device that can secure a space on the side of the seat cushion a method for manufacturing the same.

The rotation device 2 is provided between a floor 5 and a seat cushion 11 to rotatably support the seat cushion with respect to the floor. The rotation device 2 includes a base plate 56 provided on a side the floor, a rotatable plate 71 provided on a side of the seat cushion and rotatably supported by the base plate, a rotation actuator 53 that rotates the rotatable plate with respect to the base plate, and a rotation lock device 54 that selectively prohibits rotation of the rotatable plate with respect to the base plate, wherein the rotation actuator and the rotation lock device are attached to a lower surface of the base plate.

## Description

### TECHNICAL FIELD

The present invention relates to a rotation device and a manufacturing method therefor.

### BACKGROUND ART

Patent Document 1 discloses a car seat device that is rotatable around a vertical axis with respect to a floor. The car seat device includes a base part provided on the floor via a slide device, a rotatable part provided on the seat cushion and rotatably supported by the base part, and a rotation actuator that rotates the rotatable part with respect to the base part.

### PRIOR ART DOCUMENT(S)

### PATENT DOCUMENT(S)

Patent Document 1: JP2020-132093A

### SUMMARY OF THE INVENTION

### TASK TO BE ACCOMPLISHED BY THE INVENTION

When the rotation actuator is provided above the rotatable part, the available space between the seat cushion and the rotatable part is reduced. In this case, a problem is created in that other devices such as an electronic control device and a blower cannot be easily installed under the seat cushion. Further, the rotation device is often provided with a rotation lock device for restricting the rotation of the rotatable part with respect to the base part. When the rotation lock device is provided above the rotatable part, a problem is created that the space between the seat cushion and the rotatable part becomes even smaller.

In view of the above background, it is an object of the present invention to provide a rotation device that can secure a space on the side of the seat cushion. Another object of the present invention is to provide a method for manufacturing a rotation device.

### MEANS TO ACCOMPLISH THE TASK

To accomplish such a task, an aspect of the present invention provides a rotation device (2) provided between a floor (5) and a seat cushion (11) to rotatably support the seat cushion with respect to the floor, comprising: a base plate (56) provided on a side the floor; a rotatable plate (71) provided on a side of the seat cushion and rotatably supported by the base plate; a rotation actuator (53) that rotates the rotatable plate with respect to the base plate; and a rotation lock device (54) that selectively prohibits rotation of the rotatable plate with respect to the base plate, wherein the rotation actuator and the rotation lock device are attached to a lower surface of the base plate.

According to this aspect, since the rotation actuator and the rotation lock device are positioned under the base plate, a space can be secured on the side of the seat cushion.

**In** the above aspect, preferably, the rotation lock device includes a holder (122) that protrudes downward from a lower surface of the base plate and a lock claw (121) that is rotatably supported by the holder and configured to pass through the base plate into engagement with the rotatable plate, the holder includes a peripheral wall (123) extending in a circumferential direction centered on a first axis (A) which is a rotational axis of the rotatable plate, and a pair of end walls (124) extending radially inward from two ends of the peripheral wall (123) toward the first axis, and the lock craw is rotatably supported by the end walls and provided with a pair of arm part (121A) that are rotatably supported by and in sliding contact with the corresponding end walls.

According to this aspect, rattling of the lock claws in the rotational direction with respect to the holder can be suppressed. Thereby, rattling of the rotatable plate relative to the base plate in the rotational direction can be suppressed.

In the above aspect, preferably, each of the end walls passes through an opening (126) formed in the base plate and extends above the base plate, and a second axis (B) which is a rotational axis of the arm parts is positioned above the base plate.

According to this aspect, the distance between the rotational axis of the lock claw and the tip of the lock claws can be reduced. Thereby, the space required for rotation of the lock claws can be reduced.

In the above aspect, preferably, a gear (116) centered on the rotational axis is provided on a lower surface of the rotatable plate, and the rotation actuator has a pinion (115) that meshes with the gear, the second axis being placed above the gear.

According to this aspect, the distance between the rotational axis of the lock claw and the tip of the lock claw can be further reduced.

In the above aspect, preferably, the rotation actuator includes an electric motor (111) and a speed reduction mechanism (112) that reduces a rotational speed of the electric motor and transmits a rotation of the electric motor to the pinion, and the electric motor and the speed reduction mechanism are positioned below the base plate.

According to this aspect, a space can be secured on the seat cushion side of the rotatable plate.

In the above aspect, preferably, the rotation actuator and the rotation lock device are arranged at point-symmetrical positions about the first axis.

According to this aspect, interference between the rotation actuator and the rotation lock device can be avoided.

In the above aspect, preferably, the base plate is formed in a circular shape, an annular fixing member (66) is attached to an outer peripheral edge of the base plate, a pair of laterally extending cross members (57) are attached to a front end and a rear end of the base plate, respectively, and the cross members are connected to a member on a side of the floor.

According to this aspect, the base plate can be supported by the floor side member in a stable manner against a fore and aft load applied to the rotatable plate from the seat cushion side members.

In the above aspect, preferably, the fixing member includes a cylindrical tube wall (67) centered on the first axis, an inner flange (68) extending from an upper edge of the tube wall above an upper surface of the rotatable plate, and a plurality of connecting pieces (69) extending from a lower edge of the tube wall below a lower surface of the base plate, a slidable member (85) is provided on the inner flange, and the slidable member includes a vertical wall portion (85A) that abuts an inner peripheral edge of the inner flange and extends in a vertical direction, a lower wall portion (85B) extending radially outward from a lower end of the vertical wall portion with respect to the first axis along a lower surface of the inner flange, and an upper wall portion (85C) extending radially outward from an upper end of the vertical wall portion with respect to the first axis along an upper surface of the inner flange, the lower wall portion being longer than the upper wall portion in a radial direction centering on the first axis.

According to this aspect, the sliding contact area between the rotatable plate and the lower wall portion of the slidable member can be maximized. As a result, the peripheral edge of the rotatable plate can be supported by the slidable member in a stable manner.

In the above aspect, preferably, the rotatable plate is provided with a plurality of lock holes (132) that can be selectively engaged by the lock claw, a reinforcing plate (155) is provided at a position corresponding to one of the lock holes (132A) of the rotatable plate, and the reinforcing plate is provided with a through hole (155A) at a position opposing the lock hole.

According to this aspect, the lock hole can be reinforced. Thereby, rotation of the rotatable plate relative to the base plate can be reliably restricted.

In the above aspect, preferably, the lock claw is provided with a claw part (121C) that is configured to project into the lock hole from below, and the claw part has a tapered shape having a width getting progressively narrower toward a tip thereof.

According to this aspect, since the claw part of the lock claw can fit into the lock hole with minimum play, rotation of the rotatable plate relative to the base plate can be restricted in a reliable manner.

In the above aspect, preferably, the reinforcing plate has a greater thickness than the rotatable plate, and the through hole is shorter than the lock hole along a circumferential direction with respect to the first axis.

According to this aspect, the claw part of the lock claw comes into contact with the reinforcing member having a high rigidity so that damage to the rotatable plate can be minimized.

In the above aspect, preferably, the rotatable plate is attached to the seat cushion via a fixing bracket (72), and a plurality of rollers (166) is interposed between the cross member and the fixing bracket.

According to this aspect, since the outer peripheral part of the fixing bracket is supported by the rollers from below, tilting and deformation of the fixing bracket are suppressed so that the position of the seat cushion can be stabilized.

**In** the above aspect, preferably, the rollers are arranged on an imaginary circle (C) centered on the first axis, the imaginary circle entirely overlapping with the fixing bracket when viewed from a direction of the first axis.

According to this aspect, when the rotatable plate rotates with respect to the base plate, the rollers can always support the fixing bracket from below.

Another aspect of the present invention provides a method for manufacturing a rotation device (2) that is provided between a floor (5) and a seat cushion (11) to rotatably support the seat cushion with respect to the floor, wherein the rotation device comprises a base plate (56), a rotatable plate (71) opposing the base plate, an annular bearing (78) interposed between the base plate and the rotatable plate, and a fixing member (66) attached to an outer peripheral edge of the base plate, wherein the fixing member includes a tubular tube wall (67) received by the base plate and the rotatable plate, an inner flange (68) extending from an upper edge of the tube wall above the rotatable plate, and a plurality of connecting pieces (69) provided on a lower edge of the tube wall, the method comprising the steps of: placing the base plate, the bearing, and the rotatable plate in a layered arrangement with the fixing member positioned along outer peripheral edges of the base plate and the rotatable plate; bending the connecting pieces radially inward with respect to the tube wall with the base plate and the rotatable plate interposed between the inner flange and the connecting pieces, welding the connecting pieces to the base plate.

According to this aspect, the base plate, the bearing, the rotatable plate, and the fixing member are integrally assembled by bending the connecting pieces. This facilitates the welding of the connecting pieces and the base plate.

**In** the above aspect, preferably, the connecting pieces are bent toward the base plate from a direction perpendicular to the base plate.

According to this aspect, the connecting pieces can be easily bent.

A patent document (JP2019-181977A) discloses a car seat in which a holder for retaining a connector of an electric component is provided under a seat cushion. A vehicle-side wire harness is connected to the connector. This facilitates the connection between the vehicle-side wire harness and the electric component.

When the seat cushion is provided on the floor via a rotation device, the position of the connector changes according to the rotation of the seat cushion. This causes a problem in that the wire harness on the vehicle side is pulled and slackened.

In view of the above background, another aspect of the present invention has a task to suppress pulling and slackening of a wire harness in a car seat having a rotation device.

The other aspect of the present invention provides a car seat (301), comprising a seat main body (303) and a rotation device (302) provided between a floor (305) and the seat main body to rotatably support the seat main body, the rotation device including a base part (351) provided on a side of the floor and a rotatable part (352) rotatably supported by the base part and attached to the seat main body, wherein at least one of the seat main body and the rotatable part is provided with an electric device (501) and a connector (509) is provided at an end of a wire harness (508) extending from the electric device, the connector is supported by the base part.

According to this aspect, since the connector is provided on the base part that does not rotate with respect to the floor, the connector does not rotate even when the seat main body rotates. Thereby, in a car seat having a rotation device, tension and slacking of the wire harness can be avoided.

In the above aspect, preferably, the base part is connected to a center plate (357) and a pair of side parts of the center plate that are attached to the floor, and a holder (521) extending laterally and connected to the left and right side plates, and the rotatable part includes a rotatable plate (371) rotatably supported by the center plate and a fixing bracket (372) connected to both the rotatable plate and the seat main body, the connector being supported by the holder.

According to this aspect, the holder can be attached to the base part with good stability. Further, the left and right side plates can be reinforced by the holder.

In the above aspect, preferably, the center plate is connected to upper surfaces of the side plates, and the holder is connected to lower surfaces of the side plates.

According to this aspect, the holder can be placed by taking advantage of the space defined under the left and right side plates and the center plate.

In the above aspect, preferably, the fixing bracket is provided vertically between the rotatable plate and the seat main body, and the electric device is provided on the upper surface of the fixing bracket.

According to this aspect, the electric device can be accommodated in the space defined between the fixing bracket and the seat main body.

In the above aspect, preferably, the electric device is an air blower (501) having an air inlet port (501A) at a lower surface thereof, and the fixing bracket is provided with an opening (504) vertically opposing the air inlet port.

According to this aspect, the air blower can draw air from the opening provided in the fixing bracket.

In the above aspect, preferably, the seat main body is provided with a seat cushion (311) connected to the fixing bracket, the electric device consists of an air blower (501) provided in a lower part of the seat cushion, an air inlet port (501A) is provided on a lower surface of the air blower, and the fixing bracket is provided with an opening (504) vertically passed therethrough so as to oppose the air inlet port.

According to this aspect, the air blower can draw air from the air inlet port through the opening provided in the fixing bracket.

In the above aspect, preferably, the rotation device is provided on the floor via a slide device (304), the slide device is provided with a pair of lower rails (337) fixed to the floor and extending in a fore and aft direction on either side and a pair of upper rails (338) slidably supported by the respective lower rails, and the side plates (358) are connected to the left and right upper rails, respectively.

According to this aspect, the seat main body can be provided on the floor so as to be slidable in the fore and aft direction.

In the above aspect, preferably, the center plate is formed into a disk shape, the left and right side plates protrude forward beyond a front end of the center plate, and a holder is connected to front ends of the left and right side plates.

According to this aspect, the holder can be accommodated in the space defined in front of the center plate.

In the above aspect, preferably, the seat main body includes a seat cushion (311) and a seat back (312), the seat cushion includes a seat cushion frame (314) forming a skeletal structure, a pad supported by the seat cushion frame, and a skin material covering the pad, the seat cushion frame includes a pair of seat cushion side members (318) extending in a fore and aft direction on either side, a front member (319) extending laterally between front ends of the left and right seat cushion side members, and a rear member (321) extending laterally between rear ends of the left and right seat cushion side members, a flexible support member (322) that supports a user's buttocks is spanned between the front member and the rear member, the rotation device is provided with a support tube (387) that extends vertically along a rotational axis of the rotation device and is open at both ends, the center plate and the rotatable part are provided on an outer periphery of the support tube, one of the center plates and the rotatable part is rotatable relative to the support tube, and the wire harness extends through the support tube from above the rotatable plate to below the center plate.

According to this aspect, since the wire harness passes near the rotational axis of the rotation device, displacement of the wire harness extending between the electric device and the connector is minimized when the rotation device rotates. Further, the wire harness can be protected by the support tube.

In the above aspect, preferably, the base part includes a center plate (357) and a pair of side plates (358) connected to either side of the center plate and attached to the floor, and the rotatable part includes a rotatable plate (371) rotatably supported by the center plate, and a fixing bracket (372) connected to the rotatable plate and the seat main body, the connector being connected to a lower surface of the center plate.

According to this aspect, the holder can be accommodated in a space defined under the center plate.

A patent document (JP2022-144716A) discloses a car seat device having an expansion/retraction device at the front end of a seat cushion. The seat cushion expands forward as the expansion/retraction device extends forward.

It is conceivable to apply both a rotation device and an expansion/retraction device to a car seat device. However, when the expansion/retraction device is in the expanded state, the expansion/retraction device may interfere with a structure inside the vehicle in such a manner that rotation of the rotation device may be obstructed.

In view of the above background, yet another aspect of the present invention has a task to smoothly perform a rotation operation in a car seat device having both a rotation device and an expansion/retraction device.

In order to accomplish such a task, yet another aspect of the present invention provides a car seat device (601) comprising a seat main body (603) including a seat cushion (611), a seat back (612), and an expansion/retraction device that moves forward and backward in a horizontal direction, a rotation device (602) provided between a floor (605) and the seat cushion to support the seat cushion rotatably about a first axis extending in a vertical direction, a control device (820) for controlling the expansion/retraction device and the rotation device, and an operation switch (862) configured to be operated by a user and to forward a rotation command to the control device for rotating the rotation device, wherein the control device executes rotation control of the rotation device based on a signal from the rotation operation switch and executes expansion/retraction control of the expansion/retraction device in relation with the rotation control.

According to this aspect, since the control device executes the expansion/retraction control in relation with the rotation control, it is possible to prevent the expansion/retraction device from interfering with a structure inside the vehicle when the rotation device is rotated. Thereby, the car seat device can smoothly rotate.

In the above aspect, preferably, the control device starts the rotation control of the rotation device after the expansion control has caused a horizontal expansion amount of the expansion device to be equal to or less than a preset upper limit expansion amount.

According to this aspect, since the rotation device starts rotating after the expansion/retraction device is retracted, interference between the expansion/retraction device and a structure inside the vehicle can be reliably avoided.

In the above aspect, preferably, the control device starts the rotation control of the rotation device simultaneously as starting the expansion/retraction control for reducing an expansion amount of the expansion/retraction device to be equal to or less than a preset upper limit expansion amount.

According to this aspect, the rotation device can quickly start rotating.

In the above aspect, preferably, the control device reduces the expansion amount of the expansion/retraction device to be equal to or less than the upper limit expansion amount by the expansion/retraction control before the rotation control of the rotation device is completed.

According to this aspect, the rotation device can be rotated while avoiding interference between the expansion/retraction device and a structure inside the vehicle.

In the above aspect, preferably, the control device executes the rotation control and the expansion/retraction control such that the expansion amount of the expansion/retraction device at each rotational angle is kept equal to or less than the upper limit expansion amount according to a map that defines a relationship between the rotational angle of the rotation device and the maximum expansion amount of the expansion/retraction device.

According to this aspect, interference between the expansion/retraction device and a structure inside the vehicle can be reliably avoided at each rotational angle of the rotation device.

In the above aspect, preferably, the control device does not execute the expansion/retraction control in relation to the rotational control when the seat main body rotates outward from an initial position facing forward of the vehicle.

According to this aspect, the seat main body can cause the expansion/retraction device to protrude toward the outer side of the vehicle. This makes it easier for the user to get on and off the vehicle.

In the above aspect, preferably, the seat device further comprises a proximity sensor (870) that detects an approach state between the expansion/retraction device and a structure inside the vehicle, and the expansion/retraction device executes the expansion/retraction control so that a distance between the expansion/retraction device and the structure is kept equal to or greater than a predetermined lower limit value based on a signal from the proximity sensor.

According to this aspect, interference between the expansion/retraction device and the structure inside the vehicle can be reliably avoided at each rotational angle of the rotation device. Furthermore, interference between the expansion/retraction device and articles temporarily placed in the vehicle can be avoided.

In the above aspect, preferably, a pair of lower rails (637) is provided on the floor to support respective upper rails (638) in a slidable manner, the upper rails being connected to each other by a pair of cross members (657), and the rotation device includes a base plate (656) connected to the cross members, a rotatable plate (671) rotatably supported by the base plate, and a plate-shaped fixing bracket (672) having a vertically facing surface at which the fixing bracket is connected to the rotatable plate (671), the seat cushion being connected to an upper surface of the fixing bracket.

According to this aspect, the seat main body can be slid and rotatably supported on the floor.

In the above aspect, preferably, a lighting device (851) is provided on a lower surface of the fixing bracket, and the control device turns on the lighting device during execution of the rotation control.

According to this aspect, the lighting device can alert the user that the seat main body is rotating. Since the lighting device illuminates the floor, it is less likely to annoy the user.

In the above aspect, preferably, the cross members are connected to each other by a connecting member (853), a lighting device (851) is provided on a lower surface of the connecting member, and the control device turns on the lighting device while executing the rotation control.

According to this aspect, the lighting device can alert the user that the seat main body is rotating. Since the lighting device illuminates the floor, it is less likely to annoy the user.

In the above aspect, preferably, the base plate and the rotatable plate are rotatably supported by a support tube (687) that extends vertically and is open at both ends, and the expansion/retraction device includes a movable member (801) provided on a frame of the seat cushion so as to be slidable in a fore and aft direction, an airbag (813) that expands when supplied with compressed air to move the movable member, and a compressor (817) that supplies compressed air to the airbag via a tube (818), the tube extending through the support tube.

According to this aspect, the compressor can be placed on the floor. Furthermore, since the tube passes near the rotational axis of the rotation device, the tube is prevented from swinging even when the rotation device rotates.

In the above aspect, preferably, the rotation device includes a rotation lock device (654) that selectively prohibits rotation of the rotatable plate with respect to the base plate, the rotation lock device includes a holder (722) that protrudes downward from a lower surface of the base plate and a lock claw (721) that is rotatably supported by the holder to engage the rotatable plate by extending through the base plate, the holder is provided with an end wall portion (724) projecting above the base plate through the opening (726) formed in the base plate, the lock claw is rotatably supported by the end wall portion about a second axis (B2), the rotatable plate is supported on an upper surface of the base plate via a bearing (678), and the second axis is positioned at a same elevation as the bearing.

According to this aspect, since the second axis is positioned at the same elevation as the bearing, the vertical dimension of the rotation device can be minimized.

In the above aspect, preferably, the rotatable plate is formed with a lock hole (732) that can be selectively engaged by the lock claw, the base plate is formed with an insertion hole (731), the lock claw is rotatable between a lock position in which the lock claw passes through the insertion hole and enters the lock hole and a release position in which the lock claw is released from the insertion hole and the lock hole, a biasing member (734) is provided between the lock claw and the holder, and the biasing member (734) extends radially with respect to the first axis such that an end of the biasing member on a side of the first axis overlaps with the second axis or an imaginary line extended from the second axis when viewed from top.

According to this aspect, the lock claw, the holder, and the biasing member can be arranged compactly in the radial direction with respect to the first axis.

In the above aspect, preferably, a gear (716) centered on the first axis is provided on a lower surface of the rotatable plate, and the second axis is located radially outward of the gear with respect to the first axis.

According to this aspect, interference between the lock claw and the gear can be avoided when the lock claw rotates.

Another aspect of the present invention provides a method for controlling a car seat device (601), the car seat device comprising a seat main body (603) including a seat cushion (611), a seat back (612), and an expansion/retraction device that moves forward and backward in a horizontal direction, a rotation device (602) provided between a floor (605) and the seat cushion to support the seat cushion rotatably about a first axis extending in a vertical direction, a control device (820) for controlling the expansion/retraction device and the rotation device, and an operation switch (862) configured to be operated by a user and to forward a rotation command to the control device for rotating the rotation device, wherein the control device executes rotation control of the rotation device based on a signal from the rotation operation switch and executes expansion/retraction control of the expansion/retraction device in relation with the rotation control.

According to this aspect, since the control device executes the expansion/retraction control in relation with the rotation control, it is possible to prevent the expansion/retraction device from interfering with a structure inside the vehicle when the rotation device is rotated.

When the seat main body is rotated by the rotation device, it is preferable to alert occupants seated in other seats to avoid contact with the seat main body. In view of the above background, yet another aspect of the present invention has a task to alert an occupant when rotating a seat main body in a car seat having a rotation device. Yet another aspect of the present invention provides a method for manufacturing a car seat that alerts an occupant to the rotation of the seat main body.

In order to accomplish this task, yet another aspect of the present invention provides a car seat (1001) including a seat main body (1010), a rotation device (1011) for supporting the seat main body on a floor (1007) so as to be rotatable about a vertical axis, a display device provided on the seat main body, and a control device (1064) that controls the rotation device and the display device, the control device controlling the display device according to an operating condition of the rotation device.

According to this aspect, the car seat equipped with the rotation device can alert the occupant by using the display device when the seat main body is rotated.

In the above aspect, preferably, the control device is configured to cause the display device to display a rotational direction of the seat main body according to a rotational direction of the rotation device.

According to this aspect, the display device can provide a display indicating the rotational direction of the seat main body.

In the above aspect, preferably, the control device is configured to cause the display device to display a first warning display indicating that the seat main body is about to start rotating before the rotation device starts operating.

According to this aspect, the display device can alert the occupant that the seat main body is about to start rotating.

In the above aspect, preferably, the seat main body is provided with a sensor (1072) that detects a position of an object around the seat main body, and the control device estimates a possibility of a collision between the seat main body and the object according to the position of the object acquired from the sensor and displays a second warning display indicating that the seat main body will collide with the object when there is a possibility that the seat main body will collide with the object.

According to this aspect, the display device can alert the occupant to the possibility that the seat main body may collide with another object.

In the above aspect, preferably, the seat main body includes a seat cushion (1012) supported by the rotation device, and a seat back (1013) extending upward from a rear part of the seat cushion, and the display device includes a first display device (1054) provided on a rear surface of the seat back.

According to this aspect, the occupant who is situated behind the seat main body can be alerted.

In the above aspect, preferably, the first display device has a plurality of light emitting units (1055) arranged laterally, and the control device causes the light emitting units (1055) to be turned on sequentially in the lateral directions according to the rotational direction of the rotation device.

According to this aspect, the direction of rotation of the seat can be notified to the occupant situated behind the seat main body.

In the above aspect, preferably, the seat main body further includes a headrest (1014) provided at a top of the seat back, and the display device includes a second display device (1070) provided on a rear surface of the headrest.

According to this aspect, the occupant who is situated behind the seat main body can be alerted.

In the above aspect, preferably, the seat cushion includes a central portion (1012A) and a pair of shoulder portions (1012B) provided on either side of the central portion and projecting upward with respect to the central portion, and the display device includes a third display device (1071) provided on at least one of the left and right shoulders of the seat cushion.

According to this aspect, it is possible to alert the occupant who is situated on the side of the seat main body. Further, an occupant seated on the seat main body can also be made aware of the direction of rotation.

In the above aspect, preferably, the third display device is provided on an upper surface of one of the shoulder portions and extends in the fore and aft direction.

According to this aspect, the occupant who is situated on a side of the seat main body can be alerted. Further, an occupant seated on the seat main body can also be made aware of the direction of rotation.

In the above aspect, preferably, the seat main body is provided with a cover (1050) attached to a lower part of the seat cushion and surrounding the rotation device, and the display device includes a fourth display device (1074) provided on a rear surface of the cover (1050).

According to this aspect, the occupant who is situated behind the seat main body can be alerted.

To accomplish the above-mentioned task, yet another aspect of the present invention provides a method for manufacturing a vehicle seat, comprising the steps of providing a display device on a seat main body, supporting the seat main body on a floor via a rotation device so that the seat main body can be rotated around a vertical axis, and providing the seat main body with a control device that controls the display device according to an operating state of the rotation device.

According to this aspect, a method for manufacturing a car seat that alerts an occupant to the rotation of the seat main body can be provided.

In Patent Document 1, a rotatable member is rotatably supported on the upper surface a base member via balls. A fixing member (cover member) fixed to the base member extends above the rotatable member, opposes the rotatable member via an annular slidable member, and prevents detachment of the rotatable member from the base member.

When the slidable member receives a load from the rotatable member and the cover member, there is a possibility that the slidable member may shift relative to the rotatable member and the cover member. If the slidable member is displaced, the rotational resistance of the rotatable member increases and smooth rotation of the rotatable member may be prevented. In view of the above background, yet another aspect of the present invention has a task to suppress displacement of a slidable member in a car seat device.

In order to accomplish such a task, yet another aspect of the present invention provides a car seat (1201) comprising a rotation device (1202) provided between a floor (1205) and a seat cushion (1211) to rotatably support the seat cushion, the rotation device includes a base part (1251) provided on the floor and a rotatable part (1252) rotatably supported on the base part, the base part includes a base plate (1255) having a surface facing in the vertical direction and a fixing member (1266) extending upward from the base plate, the rotatable part includes a rotatable plate (1271) rotatably supported on an upper surface of the base plate via a bearing (1277), a flange portion (1268) is provided on an upper end of the fixing member so as to oppose an upper surface of the rotatable plate via a slidable member (1285), and the slidable member is positioned radially more outward of the rotatable plate than the bearing and is provided with a locking portion (1287) that projects into a lock hole (1289) formed in the rotatable plate.

According to this aspect, the slidable member is fixed to the rotatable plate by the locking portion of the slidable member entering the lock hole of the rotatable plate. Thereby, in the car seat device, displacement of the slidable member can be suppressed.

In the above aspect, preferably, the bearing includes a plurality of balls (1278) and a retainer (1279) that retains the balls and the locking portion overlaps with the balls when viewed from a radial direction of the rotatable plate.

According to this aspect, the vertical dimension of the rotation device can be minimized.

In the above aspect, preferably, the rotatable plate is provided with a bearing groove (1281) that is recessed upward and extends in an annular shape along a circumferential direction centering on the rotational axis of the rotatable plate and receives the bearing therein and the slidable member is positioned in the rotatable plate more radially outward than the bearing groove.

According to this aspect, since the bearing groove and the slidable member do not overlap with each other when viewed from the vertical direction, the vertical dimension of the rotation device can be minimized.

In the above aspect, preferably, the slidable member is provided with a ring portion (1286) extending in an annular shape around the rotational axis of the rotatable plate and the locking portion is one of a plurality of locking portions provided on a lower surface of the ring portion, the lower surface of the ring portion being in contact with the rotatable plate, an upper surface of the ring portion being in sliding contact with a lower surface of the flange portion.

According to this aspect, direct contact between the rotatable plate and the flange portion is avoided over the entire circumference of the rotatable plate.

**In** the above aspect, preferably, an upper surface of the ring portion is inclined downward toward a radially outer side of the rotatable plate.

According to this aspect, the contact area between the upper surface of the slidable member and the flange portion is reduced so that the rotational resistance of the rotatable plate is minimized. When the rotatable plate is inclined with respect to the base plate and the fixed member, the contact area between the upper surface of the slidable member and the flange portion increases so that the fixed member can retain the rotatable plate in a highly stable manner.

**In** the above aspect, preferably, the ring portion has a vertical thickness that decreases toward an outer side of a radial direction of the rotatable plate.

According to this aspect, the contact area between the upper surface of the slidable member and the flange portion is reduced so that the rotational resistance of the rotatable plate is reduced. When the rotatable plate is inclined with respect to the base plate and the fixed member, the contact area between the upper surface of the slidable member and the flange portion increases so that the fixed member can retain the rotatable plate with good stability.

**In** the above aspect, preferably, the lock hole is vertically passed through the rotatable plate, and the locking portion penetrates the lock hole and protrudes below the lock hole.

According to this aspect, the locking portion is prevented from slipping out of the lock hole so that the slidable member is fixed to the rotatable plate in a stable manner.

**In** the above aspect, preferably, each locking portion includes a first locking portion (1287A) which is provided with a claw portion configured to be passed through the corresponding lock hole and engage a lower edge of the lock hole.

According to this aspect, the locking portion is prevented from slipping out of the lock hole so that the slidable member is fixed to the rotatable plate in a stable manner.

**In** the above aspect, preferably, the seat device is provided with a plurality of second locking portions (1287B) extending in a circumferential direction centered on the rotational axis of the rotatable plate.

According to this aspect, the locking portions are prevented from slipping out of the lock hole so that the slidable member is fixed to the rotatable plate in a stable manner.

In the above aspect, preferably, the rotatable plate is provided with a convex portion (1272) extending in an annular shape centered on the rotational axis of the rotatable plate in a part thereof located above the bearing groove, and an upper surface of the ring portion is located below the upper end of the convex portion.

According to this aspect, the vertical dimension of the rotation device can be minimized.

### EFFECT OF THE INVENTION

An aspect of the present invention provides a rotation device (2) provided between a floor (5) and a seat cushion (11) to rotatably support the seat cushion with respect to the floor, comprising: a base plate (56) provided on a side the floor; a rotatable plate (71) provided on a side of the seat cushion and rotatably supported by the base plate; a rotation actuator (53) that rotates the rotatable plate with respect to the base plate; and a rotation lock device (54) that selectively prohibits rotation of the rotatable plate with respect to the base plate, wherein the rotation actuator and the rotation lock device are attached to a lower surface of the base plate.

According to this aspect, since the rotation actuator and the rotation lock device are positioned under the base plate, a space can be secured on the side of the seat cushion.

In the above aspect, preferably, the rotation lock device includes a holder (122) that protrudes downward from a lower surface of the base plate and a lock claw (121) that is rotatably supported by the holder and configured to pass through the base plate into engagement with the rotatable plate, the holder includes a peripheral wall (123) extending in a circumferential direction centered on a first axis (A) which is a rotational axis of the rotatable plate, and a pair of end walls (124) extending radially inward from two ends of the peripheral wall (123) toward the first axis, and the lock craw is rotatably supported by the end walls and provided with a pair of arm part (121A) that are rotatably supported by and in sliding contact with the corresponding end walls.

According to this aspect, rattling of the lock claws in the rotational direction with respect to the holder can be suppressed. Thereby, rattling of the rotatable plate relative to the base plate in the rotational direction can be suppressed.

In the above aspect, preferably, each of the end walls passes through an opening (126) formed in the base plate and extends above the base plate, and a second axis (B) which is a rotational axis of the arm parts is positioned above the base plate.

According to this aspect, the distance between the rotational axis of the lock claw and the tip of the lock claws can be reduced. Thereby, the space required for rotation of the lock claws can be reduced.

In the above aspect, preferably, a gear (116) centered on the rotational axis is provided on a lower surface of the rotatable plate, and the rotation actuator has a pinion (115) that meshes with the gear, the second axis being placed above the gear.

According to this aspect, the distance between the rotational axis of the lock claw and the tip of the lock claw can be further reduced.

In the above aspect, preferably, the rotation actuator includes an electric motor (111) and a speed reduction mechanism (112) that reduces a rotational speed of the electric motor and transmits a rotation of the electric motor to the pinion, and the electric motor and the speed reduction mechanism are positioned below the base plate.

According to this aspect, a space can be secured on the seat cushion side of the rotatable plate.

In the above aspect, preferably, the rotation actuator and the rotation lock device are arranged at point-symmetrical positions about the first axis.

According to this aspect, interference between the rotation actuator and the rotation lock device can be avoided.

In the above aspect, preferably, the base plate is formed in a circular shape, an annular fixing member (66) is attached to an outer peripheral edge of the base plate, a pair of laterally extending cross members (57) are attached to a front end and a rear end of the base plate, respectively, and the cross members are connected to a member on a side of the floor.

According to this aspect, the base plate can be supported by the floor side member in a stable manner against a fore and aft load applied to the rotatable plate from the seat cushion side members.

In the above aspect, preferably, the fixing member includes a cylindrical tube wall (67) centered on the first axis, an inner flange (68) extending from an upper edge of the tube wall above an upper surface of the rotatable plate, and a plurality of connecting pieces (69) extending from a lower edge of the tube wall below a lower surface of the base plate, a slidable member (85) is provided on the inner flange, and the slidable member includes a vertical wall portion (85A) that abuts an inner peripheral edge of the inner flange and extends in a vertical direction, a lower wall portion (85B) extending radially outward from a lower end of the vertical wall portion with respect to the first axis along a lower surface of the inner flange, and an upper wall portion (85C) extending radially outward from an upper end of the vertical wall portion with respect to the first axis along an upper surface of the inner flange, the lower wall portion being longer than the upper wall portion in a radial direction centering on the first axis.

According to this aspect, the sliding contact area between the rotatable plate and the lower wall portion of the slidable member can be maximized. As a result, the peripheral edge of the rotatable plate can be supported by the slidable member in a stable manner.

In the above aspect, preferably, the rotatable plate is provided with a plurality of lock holes (132) that can be selectively engaged by the lock claw, a reinforcing plate (155) is provided at a position corresponding to one of the lock holes (132A) of the rotatable plate, and the reinforcing plate is provided with a through hole (155A) at a position opposing the lock hole.

According to this aspect, the lock hole can be reinforced. Thereby, rotation of the rotatable plate relative to the base plate can be reliably restricted.

In the above aspect, preferably, the lock claw is provided with a claw part (121C) that is configured to project into the lock hole from below, and the claw part has a tapered shape having a width getting progressively narrower toward a tip thereof.

According to this aspect, since the claw part of the lock claw can fit into the lock hole with minimum play, rotation of the rotatable plate relative to the base plate can be restricted in a reliable manner.

In the above aspect, preferably, the reinforcing plate has a greater thickness than the rotatable plate, and the through hole is shorter than the lock hole along a circumferential direction with respect to the first axis.

According to this aspect, the claw part of the lock claw comes into contact with the reinforcing member having a high rigidity so that damage to the rotatable plate can be minimized.

In the above aspect, preferably, the rotatable plate is attached to the seat cushion via a fixing bracket (72), and a plurality of rollers (166) is interposed between the cross member and the fixing bracket.

According to this aspect, since the outer peripheral part of the fixing bracket is supported by the rollers from below, tilting and deformation of the fixing bracket are suppressed so that the position of the seat cushion can be stabilized.

In the above aspect, preferably, the rollers are arranged on an imaginary circle (C) centered on the first axis, the imaginary circle entirely overlapping with the fixing bracket when viewed from a direction of the first axis.

According to this aspect, when the rotatable plate rotates with respect to the base plate, the rollers can always support the fixing bracket from below.

Another aspect of the present invention provides a method for manufacturing a rotation device (2) that is provided between a floor (5) and a seat cushion (11) to rotatably support the seat cushion with respect to the floor, wherein the rotation device comprises a base plate (56), a rotatable plate (71) opposing the base plate, an annular bearing (78) interposed between the base plate and the rotatable plate, and a fixing member (66) attached to an outer peripheral edge of the base plate, wherein the fixing member includes a tubular tube wall (67) received by the base plate and the rotatable plate, an inner flange (68) extending from an upper edge of the tube wall above the rotatable plate, and a plurality of connecting pieces (69) provided on a lower edge of the tube wall, the method comprising the steps of: placing the base plate, the bearing, and the rotatable plate in a layered arrangement with the fixing member positioned along outer peripheral edges of the base plate and the rotatable plate; bending the connecting pieces radially inward with respect to the tube wall with the base plate and the rotatable plate interposed between the inner flange and the connecting pieces,
welding the connecting pieces to the base plate.

According to this aspect, the base plate, the bearing, the rotatable plate, and the fixing member are integrally assembled by bending the connecting pieces. This facilitates the welding of the connecting pieces and the base plate.

In the above aspect, preferably, the connecting pieces are bent toward the base plate from a direction perpendicular to the base plate.

According to this aspect, the connecting pieces can be easily bent.

### BRIEF DESCRIPTION OF THE DRAWINGS

[FIG. 1] A perspective view of a seat according to an embodiment of the present invention
[FIG. 2] A top view of a rotation device
[FIG. 3] A bottom view of the rotation device
[FIG. 4] A top view of the rotation device with a rotatable plate omitted from illustration
[FIG. 5] An exploded perspective view of the rotation device
[FIG. 6] A sectional view of the rotation device
[FIG. 7] A sectional view of the rotation device
[FIG. 8] A sectional view of the rotation device
[FIG. 9] A perspective view of a rotation-locking device
[FIG. 10] A top view of the rotation-locking device
[FIG. 11] An explanatory diagram showing a state in which the locking claw is engaged in one of the first to fourth lock holes
[FIG. 12] A perspective view of a base-side peeling suppression unit and a rotating-side peeling suppression unit
[FIG. 13] A side view of the base-side peeling suppression unit and the rotating-side peeling suppression unit
[FIG. 14] A sectional view of a roller
[FIG. 15] A perspective view of a seat according to an embodiment of the present invention
[FIG. 16] A top view of a rotation device
[FIG. 17] A bottom view of the rotation device
[FIG. 18] A perspective view of the rotation device
[FIG. 19] An exploded perspective view of the rotation device
[FIG. 20] A sectional view of the rotation device
[FIG. 21] A sectional view of the rotation device
[FIG. 22] A sectional view of the rotation device
[FIG. 23] A bottom view of a vehicle seat according to another embodiment of the present invention
[FIG. 24] A bottom view of the vehicle seat of the other embodiment
[FIG. 25] A sectional view of the vehicle seat of the other embodiment
[FIG. 26] A perspective view of a vehicle seat device according to an embodiment of the present invention
[FIG. 27] A top view of a rotation device
[FIG. 28] A bottom view of the rotation device
[FIG. 29] A top view of the rotation device with a rotatable plate omitted from illustration
[FIG. 30] An exploded perspective view of the rotation device
[FIG. 31] A sectional view of the rotation device
[FIG. 32] A sectional view of the rotation device
[FIG. 33] A sectional view of the rotation device
[FIG. 34] A perspective view of a rotation-locking device
[FIG. 35] A top view of the rotation-locking device
[FIG. 36] A diagram showing the state in which the lock claw engages one of the first to fourth lock holes
[FIG. 37] A perspective view of a base-side peeling suppression unit and the rotatable-side peeling suppression unit
[FIG. 38] A side view of the base-side peeling suppression unit and the rotatable-side peeling suppression unit
[FIG. 39] A sectional view of a roller
[FIG. 40] A perspective view of the expansion/retraction device
[FIG. 41] A sectional view showing an initial state of the expansion/retraction device
[FIG. 42] A sectional view showing the expansion/retraction device in an expanded state
[FIG. 43] A sectional view showing the expansion/retraction device in the most expanded state
[FIG. 44] A block diagram showing a control system of a vehicle seat device
[FIG. 45] A bottom view of a fixed bracket
[FIG. 46] A bottom view of a rotation device according to a modified embodiment of the present invention
[FIG. 47] A perspective view of the vehicle seat device as viewed from the rear
[FIG. 48] A flowchart showing the process of expansion and retraction control executed by the control device
[FIG. 49] A flowchart showing the process of rotation control executed by the control device
[FIG. 50] A top view of a vehicle equipped with a seat according to an embodiment of the present invention
[FIG. 51] A perspective view of the seat fitted with a first display device
[FIG. 52] A sectional view of a rotation device
[FIG. 53] A block diagram showing the control system of the seat including the first display device
[FIG. 54] A flowchart showing the process of the rotation control executed by the control device
[FIG. 55] A diagram showing various displays of the first display device
[FIG. 56] A diagram showing a modified example of the first display device
[FIG. 57] A perspective view of a seat including the second display device
[FIG. 58] A perspective view of a seat including the third display device
[FIG. 59] A block diagram showing the control system of a seat including the third display device
[FIG. 60] A diagram showing a second warning display
[FIG. 61] A diagram of a seat including the fourth display device
[FIG. 62] A perspective view of a seat including a display
[FIG. 63] A block diagram showing the control system of a seat including a display
[FIG. 64] A diagram showing various displays displayed on the display
[FIG. 65] A diagram showing a modified example of the second warning display displayed on the display
[FIG. 66] A perspective view of a cabin of a vehicle equipped with the seat
[FIG. 67] A top view of a vehicle equipped with a seat including air cells
[FIG. 68] A top view showing the rotation control executed by the control device
[FIG. 69] A top view showing a modified example of the rotation control executed by the control device
[FIG. 70] A perspective view of the seat according to an embodiment of the present invention
[FIG. 71] A top view of a rotation device
[FIG. 72] A bottom view of the rotation device
[FIG. 73] A top view of the rotation device with a rotatable plate thereof omitted from illustration
[FIG. 74] A bottom view of the rotatable plate with a reinforcing plate attached thereto
[FIG. 75] A top view of the rotatable plate with a sliding member attached thereto
[FIG. 76] An exploded perspective view of the rotation device
[FIG. 77] A sectional view of the rotation device
[FIG. 78] A sectional view of the rotation device
[FIG. 79] A perspective view of the rotation lock device

### DETAILED DESCRIPTION OF THE PREFERRED EMBODIMENT(S)

A rotation device according to an embodiment of the present invention as applied to a car seat will be described in the following with reference to the appended drawings. Alternatively, the rotation device may be applied to seats in other vehicles such as trains, airplanes, ships, etc.

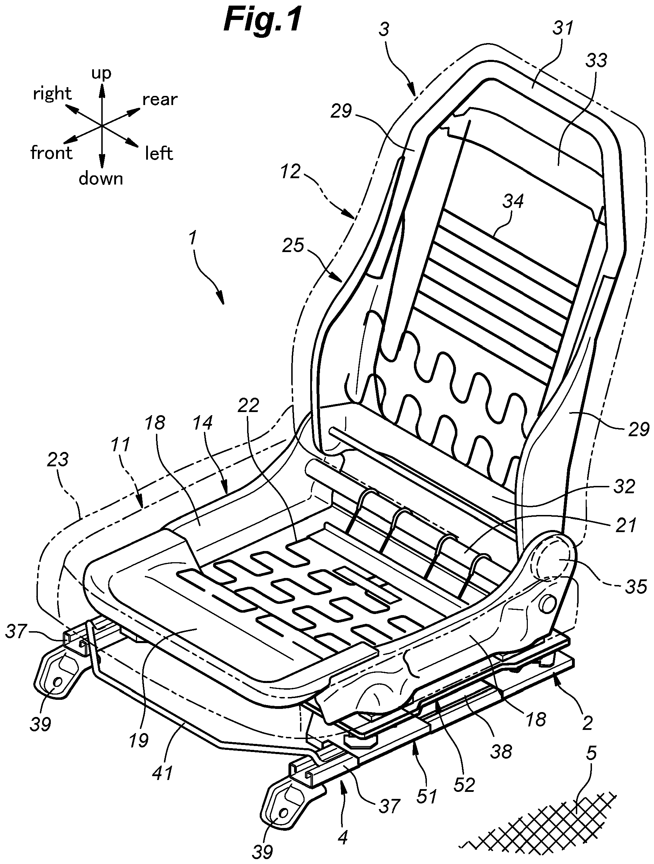

As shown in FIG. 1, the car seat device 1 includes a rotation device 2. The car seat device 1 further includes a seat main body 3 and a slide device 4. The rotation device 2 is provided on the floor 5 via a slide device 4. The seat main body 3 includes a seat cushion 11 and a seat back 12. The seat cushion 11 supports the user's buttocks from below. The seat back 12 extends upward from a rear end of the seat cushion 11. The seat back 12 supports the user's back from the rear.

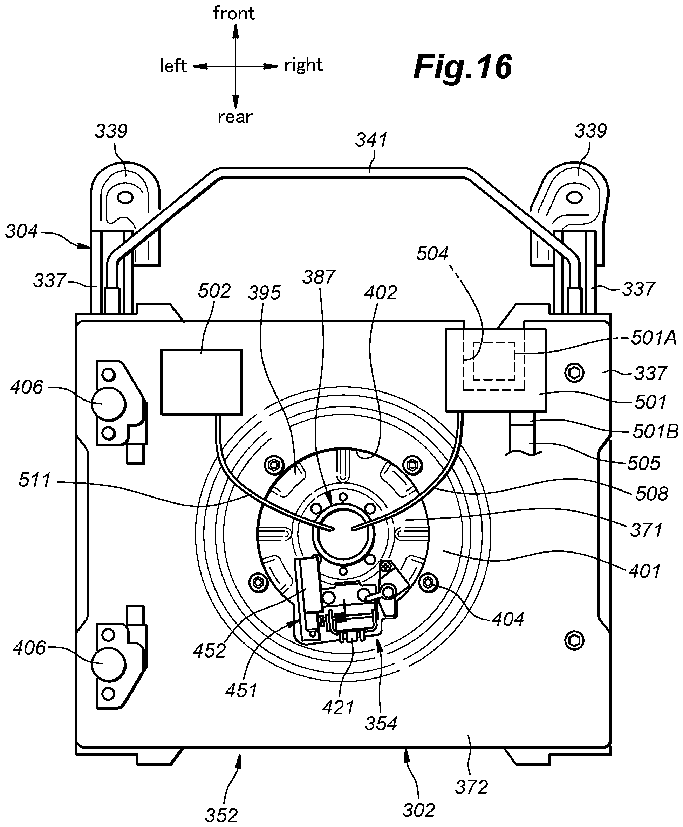

The seat cushion 11 includes a seat cushion frame 14 forming a skeletal structure, a pad supported by the seat cushion frame 14, and a skin material covering the surface of the pad. The seat cushion frame 14 includes a pair of seat cushion side members 18 that extend in the fore and aft direction on either side thereof, a front member 19 that extends laterally between the front ends of the seat cushion side members 18, and a rear member 21 that extends laterally between the rear ends of the seat cushion side members 18. A flexible support member 22 that supports the user's buttocks is spanned between the front member 19 and the rear member 21. The support member 22 preferably includes a plurality of metal wires and a flexible resin plate connected to the wires. As shown in FIGS. 1 and 16, a pair of side covers 23 are provided on either side of the seat cushion 11. The side covers 23 are supported by the respective seat cushion side members 18 and conceal the end parts of the pad and the skin material from view. The side covers 23 are preferably made of a resin material.

As shown in FIG. 1, the seat back 12 includes a seat back frame 25 forming a skeletal structure, a pad supported by the seat back frame 25, and a skin material covering the surface of the pad. The seat back frame 25 includes a pair of seat back side members 29 that extend vertically on either side thereof, an upper member 31 that extends laterally between the upper ends of the seat back side members 29, a lower member 32 that extends laterally between the lower ends of the seat back side members 29, and an intermediate member 33 that extends laterally between the seat back side members 29 at a vertically intermediate point between the upper member 31 and the lower member 32. The left and right seat back side members 29, upper member 31, lower member 32, and intermediate member 33 are formed by stamp forming sheet metal. A flexible support member 34 that supports the user's back is spanned between the left and right seat back side members 29, the intermediate member 33, and the lower member 32. The support member 34 is preferably formed of a plurality of metal wires. The lower ends of the left and right seat back side members 29 are connected to the rear ends of the corresponding seat cushion side members 18 via a reclining device 35.

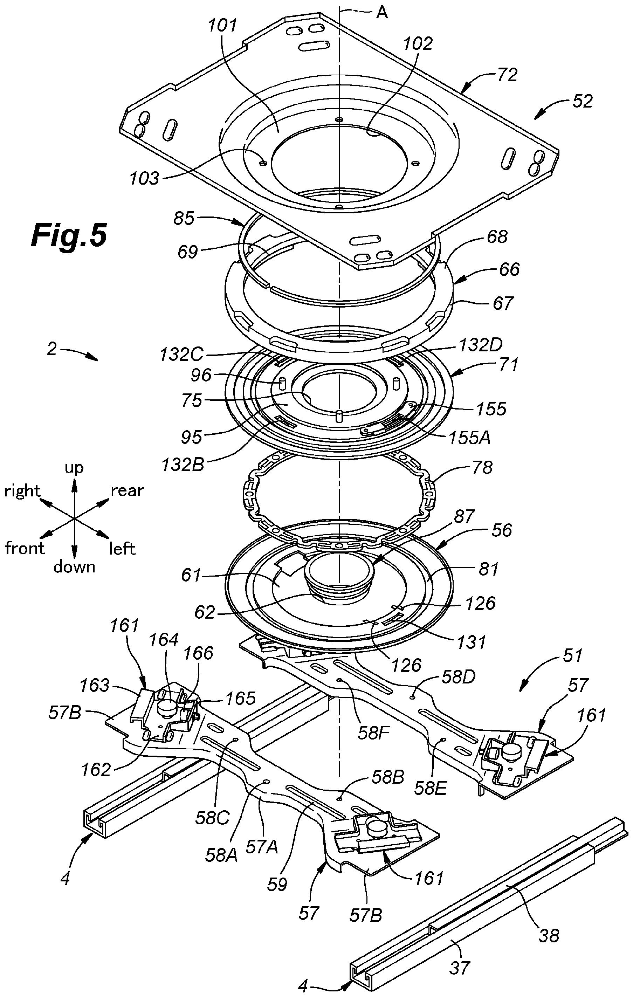

As shown in FIGS. 1 and 5, the slide device 4 includes a pair of lower rails 37 extending in the fore and aft direction on either side and a pair of upper rails 38 supported by the corresponding lower rails 37 so as to be slidable in the fore and aft direction. Each lower rail 37 is connected to the floor 5 via a front and a rear foot 39. A slide lock device (not shown in the drawings) is provided between each lower rail 37 and the corresponding upper rail 38. The left and right slide lock devices are connected to each other by a slide operation lever 41 extending laterally. A user can slide the upper rails 38 relative to the lower rails 37 by operating the slide operation lever 41.

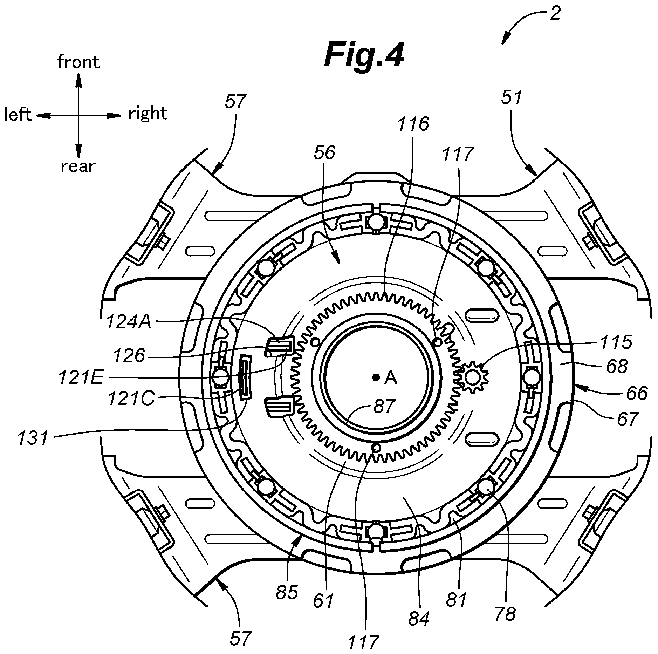

As shown in FIGS. 1 to 5, the rotation device 2 is provided between the floor 5 and the seat cushion 11 to rotatably support the seat cushion 11 with respect to the floor 5. The rotation device 2 includes a base part 51, a rotatable part 52, a rotation actuator 53, and a rotation lock device 54.

The base part 51 is provided on the side of the floor 5. In this embodiment, the base part 51 is provided on the floor 5 via the slide device 4. The base part 51 includes a circular base plate 56 facing vertically. The base plate 56 is supported by the left and right upper rails 38 via a front and a rear cross member 57. Each cross member 57 extends laterally and is connected to the left and right upper rails 38 at corresponding ends thereof. The left and right ends of the front cross member 57 are connected to the front ends of the corresponding upper rails 38. The left and right ends of the rear cross member 57 are connected to the rear ends of the corresponding upper rails 38.

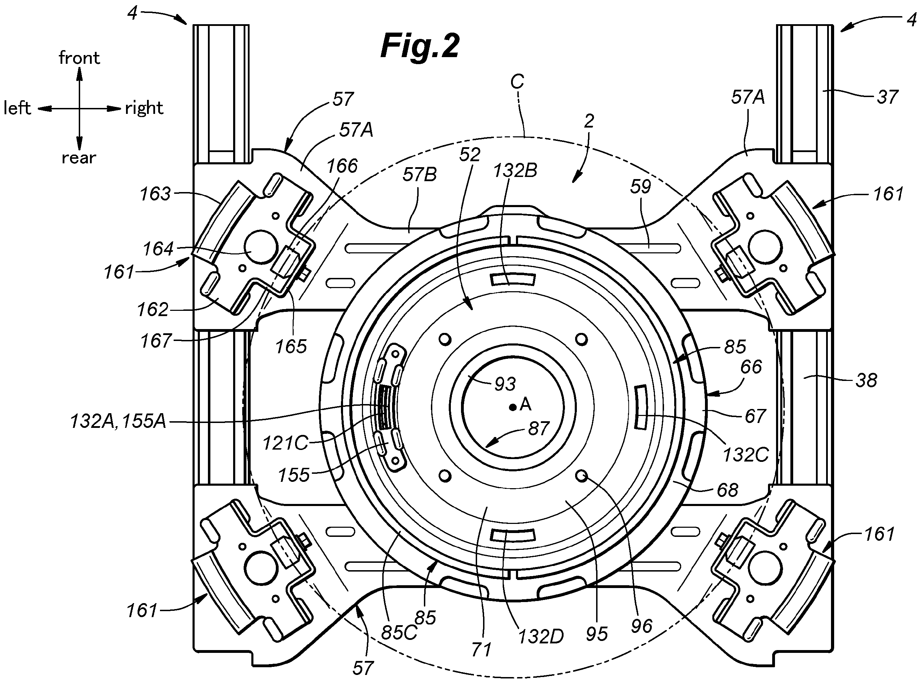

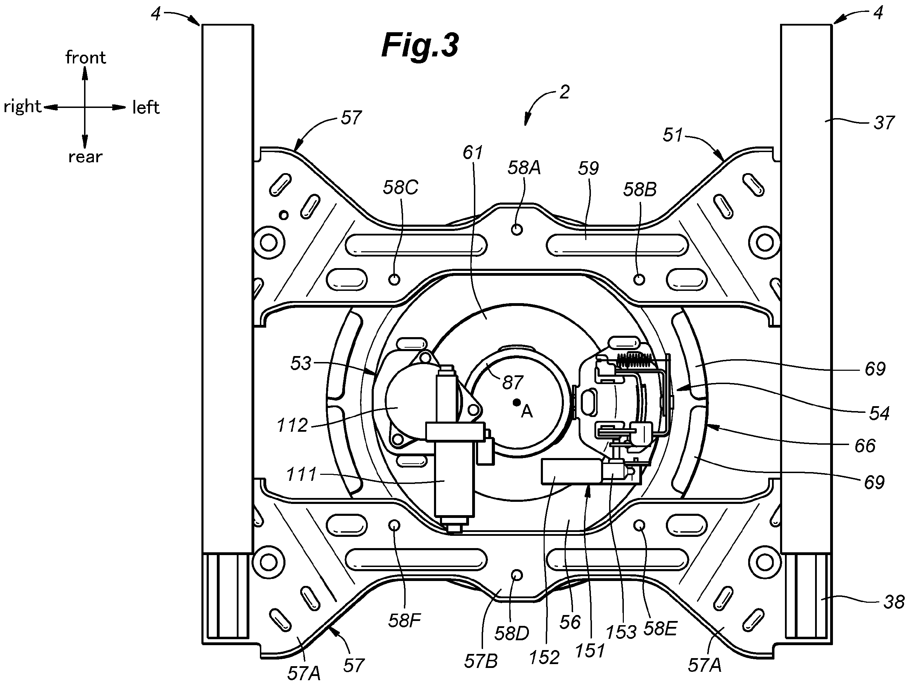

As shown in FIGS. 2 and 3, the front and rear cross members 57 are arranged at a distance from each other in the fore and aft direction. The base plate 56 and the front and rear cross members 57 are preferably formed of sheet metal. Each cross member 57 preferably consists of a channel member having an open side facing downward. The fore and aft dimension of the left and right end portions 57A of each cross member 57 is larger than the fore and aft dimension of the central portion 57B thereof. The left and right end portions 57A each have an upper surface facing upward. A plurality of reinforcing structures 59 are formed in the central portion 57B of each cross member 57. The reinforcing structures 59 may consist of beads. Each reinforcing structure 59 preferably extends in the lateral direction. Further, each reinforcing structure 59 may extend from the center of the central portion 57B outwardly and rearwardly in an oblique direction.

As shown in FIGS. 3 and 5, the front and rear cross members 57, and the base plate 56 are preferably fastened together with bolts and nuts. The front and rear cross members 57 are connected to each other by the base plate 56. The front part of the base plate 56 is connected to the front cross member 57 at a first connecting point 58A, a second connecting point 58B, and a third connecting point 58C. The first connecting point 58A is provided centrally with respect to the lateral direction at the front end of the base plate 56. The second connecting point 58B is positioned at a rear and left side of the first connecting point 58A. The third connecting point 58C is located at a rear and right side of the first connecting point 58A.

A rear part of the base plate 56 is connected to the front cross member 57 at a fourth connecting point 58D, a fifth connecting point 58E, and a sixth connecting point 58F. The fourth connecting point 58D is provided centrally with respect to the lateral direction at the rear end of the base plate 56. The fifth connecting point 58E is located forward and to the left of the fourth connecting point 58D. The sixth connecting point 58F is located forward and to the right of the fourth connecting point 58D.

As shown in FIGS. 5 to 8, a first bulging portion 61 bulging downward is formed in the center of the base plate 56. The first bulging portion 61 is formed in a cylindrical shape with a bottom. A circular first bearing hole 62 is passed through the center of the first bulging portion 61 in the thickness direction. The first bearing hole 62 is centered on an axis A (first axis) that extends vertically. It is preferable that an annular edge wall 63 protruding upward or downward is formed along the edge of the first bearing hole 62.

As shown in FIGS. 2 to 8, an annular fixing member 66 is connected to the outer peripheral edge of the base plate 56. The fixing member 66 includes a tube wall 67 that extends vertically along the outer peripheral edge of the base plate 56, an inner flange 68 that extends radially inward from the upper end of the tube wall 67, and a plurality of connecting pieces 69 provided at the lower end of the tube wall 67. The inner flange 68 is formed into an annular shape and faces vertically. The connecting pieces 69 are bent during assembly and extend along the lower surface of the base plate 56. The outer peripheral edge of the base plate 56 is positioned between the inner flange 68 and the connecting piece 69 with respect to the vertical direction. The connecting pieces 69 provided at the front and rear parts of the base plate 56 are preferably held between the base plate 56 and the corresponding cross member 57 with respect to the vertical direction. The connecting pieces 69 are welded to the base plate 56. Further, the fixing member 66 may be formed by combining a plurality of individual members. A plurality of reinforcing structures may be provided at the boundary between the tube wall 67 and the inner flange 68. The reinforcing structures may be, for example, recesses, ribs, or the like.

As shown in FIGS. 2 and 5 to 8, the rotatable part 52 is provided on the seat cushion 11 and rotatably supported by the base part 51. The rotatable part 52 is provided with a rotatable plate 71 rotatably supported on the upper surface of the base plate 56. Further, the rotatable part 52 includes a fixing bracket 72 that connects the rotatable plate 71 to the seat cushion frame 14. The rotatable plate 71 and the fixing bracket 72 are formed of sheet metal.

The rotatable plate 71 is formed into a disk shape with a vertically facing surface. A circular second bearing hole 75 is passed through the center of the rotatable plate 71 in the thickness direction. The second bearing hole 75 is centered on the axis A. An annular edge wall 76 that protrudes upward or downward may be formed along the peripheral edge of the second bearing hole 75.

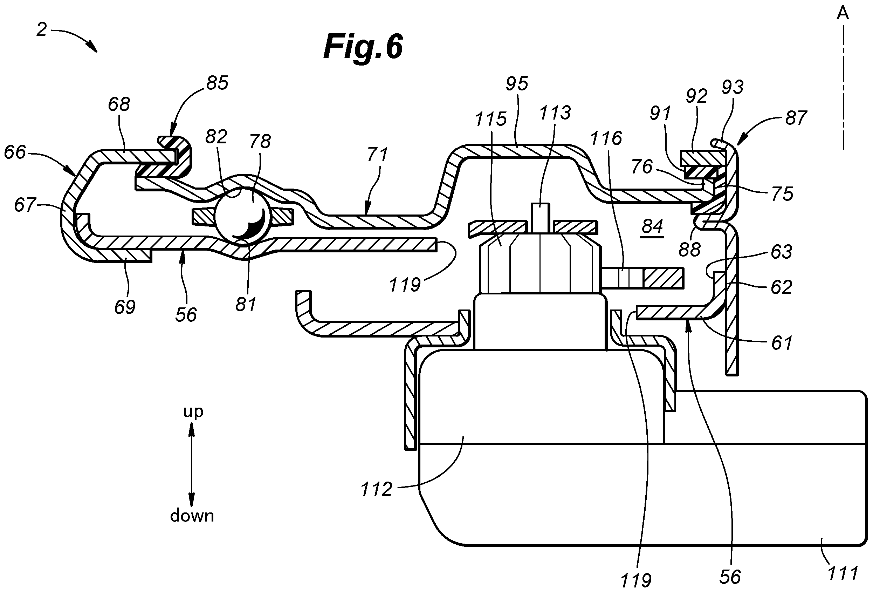

As shown in FIGS. 5 and 6, the rotatable plate 71 is supported on the upper surface of the base plate 56 via a bearing 78. The bearing 78 is formed in an annular shape centered on the axis A. The bearing 78 is positioned between the upper surface of the outer periphery of the base plate 56 and the lower surface of the outer periphery of the rotatable plate 71. The bearing 78 is preferably a thrust bearing. In this embodiment, bearing 78 is a ball bearing. The ball bearing includes a plurality of balls and an annular retainer that rotatably supports the balls. A first bearing groove 81 for receiving the lower part of the bearing 78 is formed on the upper surface of an outer peripheral part of the base plate 56. A second bearing groove 82 for receiving the upper part of the bearing 78 is formed on the lower surface of an outer peripheral part of the rotatable plate 71. A space 84 is defined between the central part of the rotatable plate 71 and the first bulging portion 61 of the base plate 56.

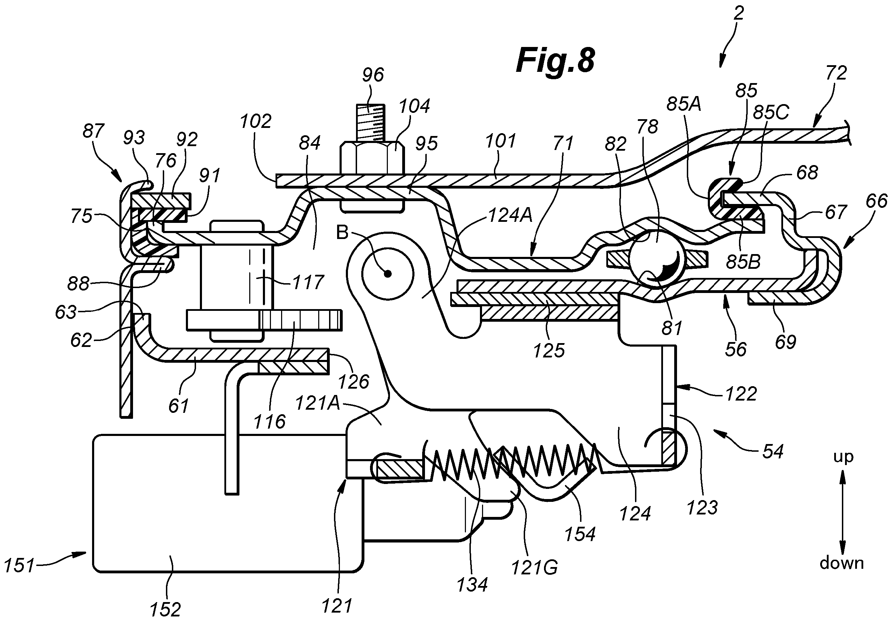

As shown in FIG. 8, the fixing member 66 extends above the outer periphery of the rotatable plate 71. More specifically, the inner flange 68 of the fixing member 66 extends upward from the outer periphery of the rotatable plate 71. The inner flange 68A is fitted with a slidable member 85 thereon. The slidable member 85 includes a vertical wall 85A that abuts the inner peripheral edge of the inner flange 68 and extends in the vertical direction, a lower wall portion 85B that extends radially outward centered around the axis A from the lower end of the vertical wall 85A along the lower surface of the inner flange 68, and the upper wall portion 85C that extends radially outward centered around the axis A from the upper end of the vertical wall 85A along the upper surface of the inner flange 68. The outer periphery of the rotatable plate 71 is in sliding contact with the inner flange 68 via the lower wall portion 85B of the slidable member 85. The lower wall portion 85B is longer than the upper wall portion 85C along the radial direction centered on the axis A. Thereby, the sliding contact area between the rotatable plate 71 and the lower wall portion 85B of the slidable member 85 can be maximized, and the slidable member 85 can support the edge of the rotatable plate 71 in a highly stable manner.

The fixing member 66 may press the rotatable plate 71 toward the base plate 56 via the slidable member 85. The slidable member 85 is in sliding contact with a part of the rotatable plate 71 that is more radially outward than the second bearing groove 82. The slidable member 85 is preferably in sliding contact with the outer peripheral edge of the rotatable plate 71. The slidable member 85 is made of a resin material that has a smaller coefficient of friction than metal. The slidable member 85 may be divided into multiple individual pieces.

As shown in FIGS. 5 and 6, a support tube 87 extending vertically is fitted into the first bearing hole 62 and the second bearing hole 75. The support tube 87 has a cylindrical configuration with the upper and lower ends thereof open. The support tube 87 is made of metal. An annular rib 88 bulging outward is formed on the outer periphery of the support tube 87. A cylindrical bush 91 is attached to the inner peripheral edge of the second bearing hole 75 of the rotatable plate 71. The bush 91 is supported by a part of the support tube 87 located above the annular rib 88. A retaining ring 92 is fitted on a part of the support tube 87 located above the bush 91. The upper end of the support tube 87 is crimped to form an enlarged diameter portion 93. The bush 91 and the retaining ring 92 are held between the annular rib 88 and the enlarged diameter portion 93. Thereby, the position of the rotatable plate 71 in the vertical direction with respect to the support tube 87 is maintained. The support tube 87 is thus rotatably supported in the second bearing hole 75 of the rotatable plate 71 via the bush 91.

The first bearing hole 62 of the base plate 56 is positioned below the annular rib 88. The part of the support tube 87 below the annular rib 88 may be rotatably supported by the first bearing hole 62 or may be welded to the first bearing hole 62. The base plate 56 and the rotatable plate 71 are fixedly centered on the axis A by the support tube 87.

As shown in FIG. 8, an annular convex portion 95 that bulges upward is formed in a part of the rotatable plate 71 radially inward of the second bearing groove 82. The convex portion 95 is formed in an annular shape centered on the axis A. A plurality of bolts 96 extends upward from the convex portion 95. The bolt 96 may consist of stud bolts.

As shown in FIGS. 5 and 8, this structure includes a fixing bracket 72 which consists of a plate member facing vertically. The fixing bracket 72 is preferably formed into a rectangular shape when viewed from above. A downwardly recessed recess 101 is formed in the center of the fixing bracket 72. An opening 102 is passed vertically through the center of the recess 101. A plurality of fastening holes 103 are passed through the bottom of the recess 101 to receive the bolts 96, respectively. The rotatable plate 71 and the fixing bracket 72 are fastened to each other by threading nuts 104 to the respective bolts 96. The fixing bracket 72 is larger than the rotatable plate 71 when viewed from above. The fixing bracket 72 opposes the front and rear cross members 57 in the vertical direction.

The fixing bracket 72 is connected to the left and right seat cushion side members 18 by using fasteners such as bolts and nuts. A load cell may be interposed between the fixing bracket 72 and one of the seat cushion side members 18.

The rotation actuator 53 is configured to rotate the rotatable plate 71 with respect to the base plate 56. As shown in FIGS. 3 and 6, the rotation actuator 53 is attached to the lower surface of the base plate 56. The rotation actuator 53 is positioned in front of the axis A. The rotation actuator 53 includes an electric motor 111 and a speed reduction mechanism 112. The rotation actuator 53 does not have a worm reduction mechanism. In this embodiment, the speed reduction mechanism 112 includes a pinion 115 fixedly fitted to the output shaft 113 of the electric motor 111 and a gear 116 connected to the rotatable plate 71. The pinion 115 and gear 116 are spur gears. The gear 116 is a gear centered on the axis A. The gear 116 is fixedly attached to the lower surface of the rotatable plate 71 via a spacer 117 and is positioned within the space 84. The number of teeth of the gear 116 is greater than the number of teeth of the pinion 115.

The rotation actuator 53 is fixedly attached to the lower surface of base plate 56. The rotation actuator 53 may be attached to the lower surface of the base plate 56 via a bracket. An output shaft 113 of the rotation actuator 53 extends upward from the speed reduction mechanism 112. The output shaft 113 is passed through a through hole 119 formed in the base plate 56 and extends into the space 84. The pinion 115 fixedly fitted to the output shaft 113 is positioned within the space 84 and meshes with the gear 116. The electric motor 111 and the speed reduction mechanism 112 are thus placed under the base plate 56.

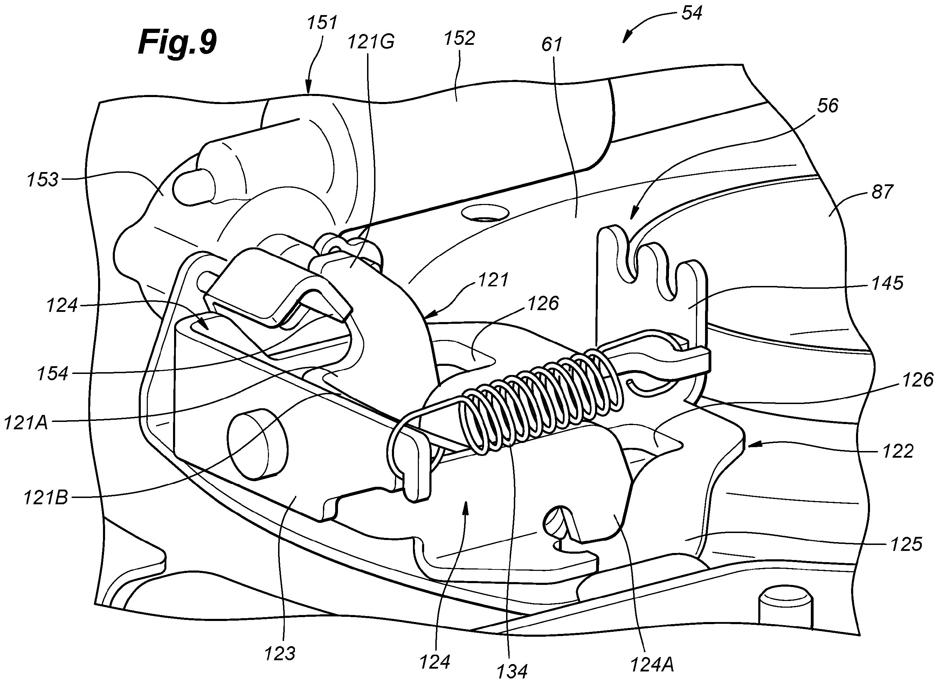

The rotation lock device 54 selectively prohibits rotation of the rotatable plate 71 with respect to the base plate 56. As shown in FIGS. 3 and 7 to 10, the rotation lock device 54 is attached to the lower surface of the base plate 56. The rotation lock device 54 includes a holder 122 that extends downward from the lower surface of the base plate 56 and a lock claw 121 that is rotatably supported by the holder 122 and configured to pass through the base plate 56 to engage the rotatable plate 71. The lock claw 121 is movable between a lock position where it engages the rotatable plate 71 and a release position where it releases the rotatable plate 71. The lock claw 121 and the holder 122 are formed of sheet metal.

The holder 122 is provided with a peripheral wall 123 extending in the circumferential direction centered on the axis A, which is the rotational axis of the rotatable plate 71, and a pair of end walls 124 extending radially inward or toward the axis A from either end of the peripheral wall 123. The holder 122 is further provided with a bottom plate 125 that extends along the lower surface of base plate 56 and is fixedly attached to the lower surface of the base plate 56. The bottom plate 125 extends along the lower surface of the first bulging portion 61. The peripheral wall 123 and the end walls 124 protrude downward from the bottom plate 125. The end walls 124 are connected to the bottom plate 125. The peripheral wall 123 may be connected to the bottom plate 125. The peripheral wall 123 and the end walls 124 are formed by bending sheet metal. The peripheral wall 123 and the end walls 124 may be formed by combining a plurality of sheet metal pieces.

A pair of openings 126 are passed vertically through the bottom plate 125 and the first bulging portion 61. The openings 126 are formed at positions corresponding to the respective end walls 124. Each end wall 124 is provided with an extension 124A that is passed through the corresponding opening 126 and extends above the base plate 56. The upper end of each extension 124A is positioned within the space 84. The upper end of each extension 124A projects above the gear 116.

The lock claw 121 includes a pair of arm parts 121A rotatably supported by the respective end walls 124, a beam part 121B connecting the tips of the arm parts 121A to each other, and a claw part 121C protruding from the beam part 121B. Each arm part 121A is rotatably supported by the corresponding extension 124A about an axis B (second axis) which forms the rotational axis of the lock claw 121. The axis B is located above the base plate 56 and may be located above the gear 116. The arm parts 121A pass through the corresponding openings 126 and extend from within the space 84 to under the base plate 56. The arm parts 121A extend along the corresponding end walls 124 and are in sliding contact with the corresponding end walls 124. The beam part 121B is positioned under the base plate 56 and extends in the horizontal direction. Furthermore, the beam part 121B extends in a circumferential direction centered on the axis A. The claw part 121C is provided at the center of the beam part 121B with respect to the lengthwise direction thereof. Each arm part 121A has an arm base end portion 121E supported by the extension 124A and an arm tip portion 121F that extends from the arm base end portion 121E and is bent. The beam part 121B is connected to the arm tip portion 121F.

The base plate 56 and the bottom plate 125 are formed with an insertion hole 131 that is passed through in the vertical direction. The insertion hole 131 extends in the circumferential direction around the axis A. A plurality of lock holes 132 are formed in the rotatable plate 71 and can be selectively engaged by the lock claw 121. Each lock hole 132 is elongated in the circumferential direction centered on the axis A. The lock holes 132 are provided at rotationally symmetrical positions about the axis A. When the rotatable plate 71 is at any one of predetermined rotational positions relative to the base plate 56, the insertion hole 131 opposes the corresponding lock hole 132.

As shown in FIG. 3, the rotation lock device 54 is located on the left side of the axis A. The rotation actuator 53 is positioned on the right side of the axis A. The rotation actuator 53 and the rotation lock device 54 are positioned at point symmetrical positions with respect to the axis A. The rotation lock device 54 and the rotation actuator 53 are positioned between the front and rear cross members 57 when viewed from the top.

When the rotatable plate 71 is in the initial position, the seat main body 3 faces forward. As shown in FIG. 2, the lock holes 132 include first to fourth lock holes 132A to 132D. When the rotatable plate 71 is in the initial position, the first lock hole 132A is positioned on the left side of the axis A, the second lock hole 132B is positioned in front of the axis A, the third lock hole 132C is positioned on the left side of the axis A, and the fourth lock hole 132D is positioned on the rear side of the axis A. The lock holes 132 are arranged at 90 degree intervals about the axis A. When the rotatable plate 71 is in the initial position, the first lock hole 132A opposes the insertion hole 131 in the vertical direction.

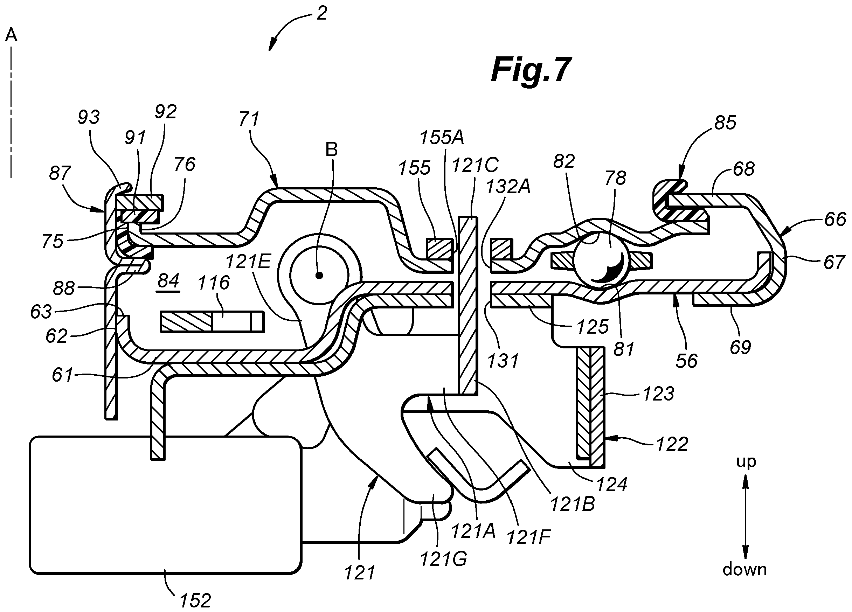

As shown in FIG. 7, when the claw part 121C of the lock claw 121 passes through the insertion hole 131 and fits into one of the lock holes 132, rotation of the rotatable plate 71 with respect to the base plate 56 is prohibited.

The lock claw 121 is rotatable between a lock position where the claw part 121C enters the insertion hole 131 and one of the lock holes 132 and a release position where the claw part 121C is spaced downward from the insertion hole 131 and the lock hole 132. **In** other words, the lock claw 121 is movable between the lock position where it engages the rotatable plate 71, and a release position where it disengages the rotatable plate 71. A biasing member 134 is provided between the lock claw 121 and the holder 122 to urge the lock claw 121 toward the lock position. **In** this embodiment, the biasing member 134 consists of a tensile coil spring. The biasing member 134 is preferably connected between the arm part 121A and the peripheral wall 123.

When the lock claw 121 is in the lock position, the beam part 121B and the arm tip portions 121F extend along the lower surface of the base plate 56. At this time, each arm base end portion 121E passes through the corresponding opening 126 and extends vertically. When the lock claw 121 is in the release position, the beam part 121B and the arm tip portions 121F are spaced downward from the lower surface of the base plate 56. Further, the tip of the claw part 121C is located below the base plate 56.

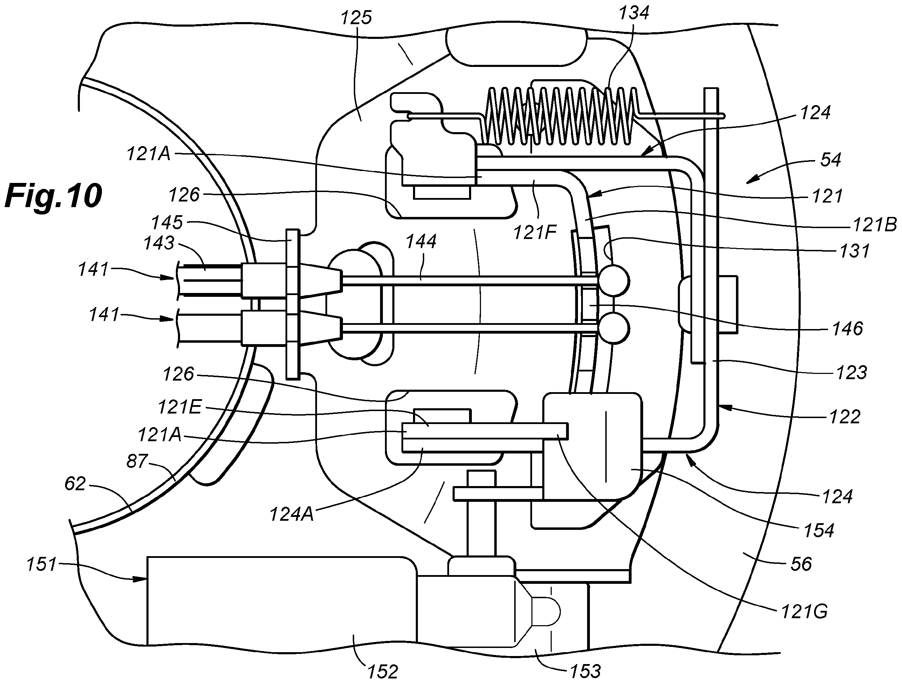

As shown in FIG. 10, the lock claw 121 is connected to a manual operation lever by a control cable 141. The control cable 141 has a tubular outer casing 143 and an inner cable 144 slidably received in the outer casing 143. One end of the outer casing 143 is connected to a casing locking portion 145 of the holder 122. The casing locking portion 145 projects downward from the bottom plate 125. The other end of the outer casing 143 is connected to the seat cushion frame 14 or the side cover 23. One end of the inner cable 144 is connected to a cable locking portion 146 provided on the beam part 121B of the lock claw 121. The other end of the inner cable 144 is connected to a manual operation lever (not shown in the drawings). The manual operation lever is preferably rotatably supported by the seat cushion frame 14 or the side cover 23.

When the user pulls the manual operation lever, the control cable 141 pulls the lock claw 121 from the lock position to the release position. Thereby, the rotatable part 52 becomes rotatable with respect to the base part 51. When the user releases the manual operation lever, the lock claw 121 is moved from the release position to the lock position under the urging force of the biasing member 134. Thus, the rotation lock device 54 is switched between a locked state and a released state by a user's manual operation.

The rotation lock device 54 includes a lock release actuator 151 that moves the lock claw 121 from the lock position to the release position. The lock release actuator 151 includes an electric motor 152, a speed reduction mechanism 153 that reduces the rotational speed of the electric motor and transmits the driving force of the electric motor 152, and an arm 154 fixed to the output shaft of the speed reduction mechanism 153. The arm 154 is configured to engage the lock claw 121. One of the arm tip portions 121F of the lock claw 121 is provided with a contact portion 121G that projects downward. The arm 154 moves the lock claw 121 from the lock position to the release position by pressing the contact portion 121G.

The electric motor 152 and the speed reduction mechanism 153 are preferably supported by at least one of the holder 122 and the base plate 56. When the electric motor 152 is driven by electric power supplied thereto, the arm 154 rotates against the urging force of the biasing member 134, and the arm 154 moves the lock claw 121 from the lock position to the release position. When the electric motor 152 is stopped upon ceasing the supply of electric power to the electric motor 152, the lock claw 121 is moved from the release position to the lock position under the urging force of the biasing member 134. At this time, the arm 154 and the electric motor 152 are rotated by being pushed by the contact portion 121G.

When the lock claw 121 is moved from the lock position to the release position by the control cable 141, the lock claw 121 is released from the arm 154, so that the lock release actuator 151 does not act as resistance.

As shown in FIGS. 2 and 7, a reinforcing plate 155 is attached to a part of the upper surface of the rotatable plate 71 corresponding to the first lock hole 132A. The reinforcing plate 155 is preferably welded to the rotatable plate 71. The reinforcing plate 155 faces vertically, and extends in the circumferential direction about the axis A. The thickness of the reinforcing plate 155 is greater than the thickness of the rotatable plate 71. As a result, the reinforcing plate 155 increases the section modulus and the second moment of area of the part of the rotatable plate 71 surrounding the first lock hole 132A.

A through hole 155A opposing the first lock hole 132A is formed in the reinforcing plate 155. The two circumferential ends of the through hole 155A with respect to the axis A are located between the circumferential ends of the first lock hole 132A. In other words, the circumferential length of the through hole 155A with respect to the axis A is shorter than that of the first lock hole 132A. The radial width of the through hole 155A is preferably equal to that of the first lock hole 132A.

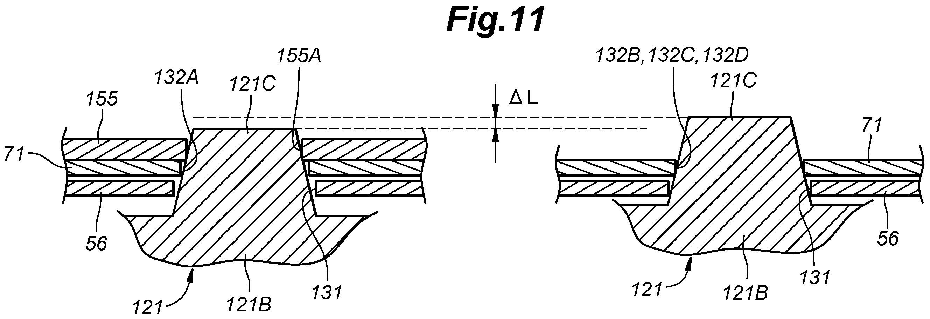

As shown in FIG. 11, the claw part 121C has a tapered shape whose width becomes narrower toward the tip thereof. This allows the claw part 121C to easily enter the lock hole 132. Furthermore, when the claw part 121C enters the first lock hole 132A, the claw part 121C abuts both circumferential ends of the through hole 155A. At this time, the claw part 121C does not come into contact with the circumferential ends of the first lock hole 132A with respect to the axis A. When the rotatable plate 71 is at a reference rotational position, or when the seat main body 3 faces forward, the lock claw 121 engages with the through hole 155A of the reinforcing plate 155, so that the seat main body 3 is firmly restricted against rotation when facing forward. As shown in the right part of the diagram in FIG. 11, since the reinforcing plate 155 is not provided in conjunction with the second to fourth lock holes 132B to 132D, the insertion depth of the claw part 121C into the second to fourth lock holes 132B to 132D is greater. In other embodiments, the reinforcing plates 155 may also be provided in the second to fourth lock holes 132B to 132D.

As shown in FIGS. 2, 12, and 13, a plurality of base-side peeling suppression units 161 are provided on the upper surfaces of the front and rear cross members 57. The base-side peeling suppression units 161 may be arranged at equal intervals in the circumferential direction around the axis A. In this embodiment, the base-side peeling suppression units 161 are positioned at the left and right end portions 57A of the front cross member 57 and the left and right end portions 57A of the rear cross member 57. The four base-side peeling suppression units 161 are thus arranged at 90 degree intervals around the axis A.

Each base-side peeling suppression unit 161 includes a bottom plate 162 connected to the corresponding cross member 57, a first base-side hook 163 and a second base-side hook 164 provided on the bottom plate 162, a roller support wall 165 provided on the bottom plate 162, and a roller 166 rotatably supported by the roller support wall 165.

The bottom plate 162 extends along the upper surface of the end portion 57A of the cross member 57 and is attached to the end portion 57A by welding, using bolts, or the like. The bottom plate 162 extends in the circumferential direction around the axis A. The first base-side hook 163 is provided along the outer peripheral edge of the bottom plate 162 and extends in a circumferential direction centered on the axis A. The first base-side hook 163 projects upward from the bottom plate 162 and opens downward.

The roller support wall 165 extends along the inner peripheral edge of the bottom plate 162 in the circumferential direction around the axis A. The circumferential ends of the roller support wall 165 are provided with a pair of reinforcing walls 167, respectively, that are orthogonal to the roller support wall 165 and the bottom plate 162 and connected to the roller support wall 165 and the bottom plate 162. The bottom plate 162, the first base-side hook 163, the roller support wall 165, and the reinforcing walls 167 are preferably formed by stamp forming a continuous piece of sheet metal.

To the roller support wall 165 is connected a roller shaft 171 extending radially outward about the axis A. A roller 166 is rotatably supported on the roller shaft 171. The end part of the roller shaft 171 remotes from the roller support wall 165 is provided with an enlarged head 173 having a larger diameter than the roller shaft 171. A biasing member 175 that biases the roller 166 radially inward with respect to the axis A is provided between the enlarged head 173 and the roller 166. The biasing member 175 preferably consists of a wave washer or a bowl washer.

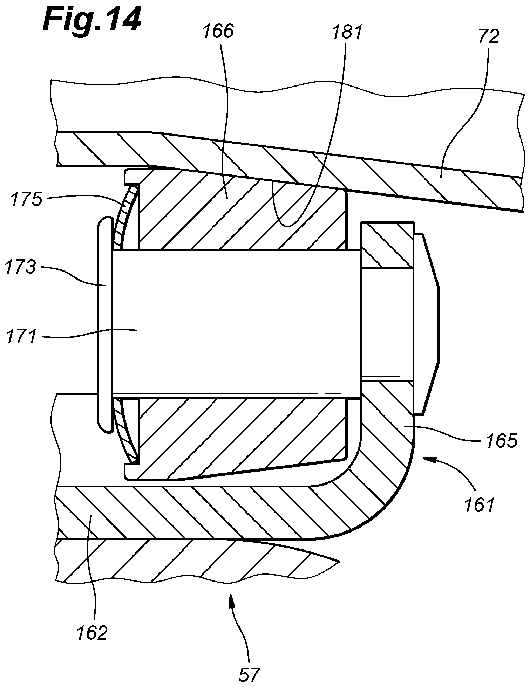

As shown in FIG. 14, the roller 166 is a tapered roller, and the outer diameter thereof increases toward the radial outer side. The roller 166 is in contact with the lower surface of the fixing bracket 72. The roller 166 is interposed between the fixing bracket 72 and the front cross member 57 or the rear cross member 57 in the vertical direction. As shown in FIG. 2, the rollers 166 are positioned on an imaginary circle C centered on the axis A. When viewed from the direction along the axis A, the imaginary circle C is positioned so as to entirely overlap with the fixing bracket 72. Thereby, when the rotatable plate 71 rotates with respect to the base plate 56, the rollers 166 are always in contact with the fixing bracket 72.

As shown in FIG. 14, an annular contact surface 181 centered on the axis A is defined on the lower surface of the fixing bracket 72. Each roller 166 contacts the contact surface 181. The contact surface 181 is slanted downward toward the radially inward part thereof about the axis A.

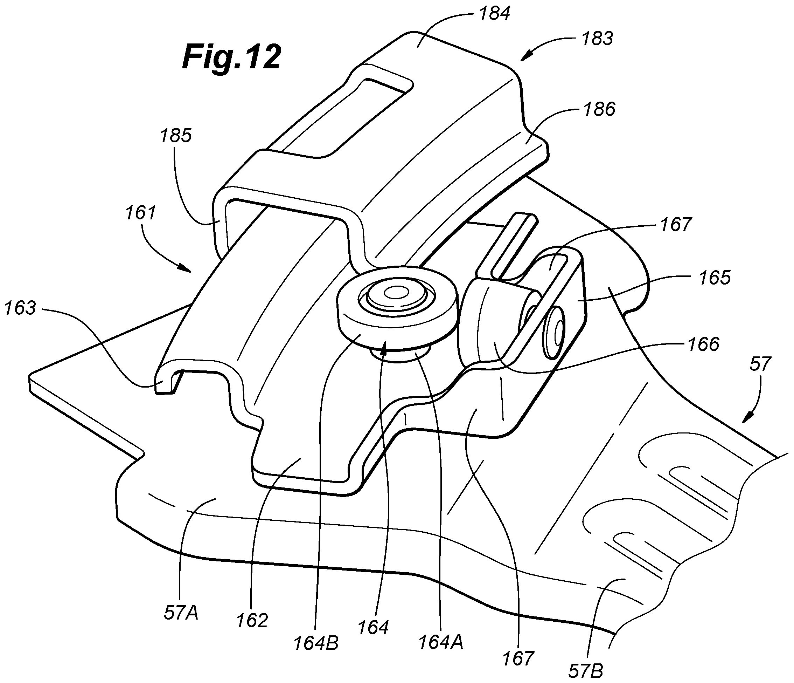

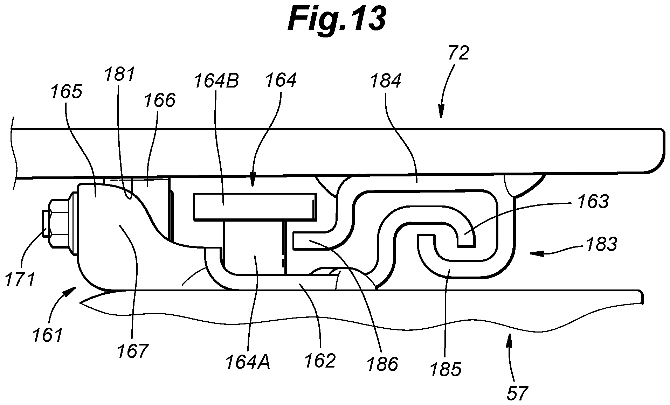

As shown in FIGS. 12 and 13, each second base hook 164 is connected to the upper surface of the bottom plate 162. The second base-side hook 164 is positioned between the first base-side hook 163 and the roller 166 with respect to the radial direction centered on the axis A. The second base-side hook 164 has a stem portion 164A extending upward from the bottom plate 162, and a head portion 164B that is provided at the upper end of the stem portion 164A and is wider than the stem portion 164A in the radial direction.

As shown in FIGS. 12 and 13, a plurality of rotatable-side peeling suppression units 183 are provided on the lower surface of the fixing bracket 72. The rotatable-side peeling suppression units 183 are preferably arranged at equal intervals in the circumferential direction around the axis A. In this embodiment, the rotatable-side peeling suppression units 183 are provided at four locations of the fixing bracket 72, front left, front right, rear left, and rear right part thereof. The four rotatable-side peeling suppression units 183 are arranged on an imaginary circle centered on the axis A, and spaced apart from each other by 90 degrees. Each rotatable-side peeling suppression unit 183 includes an upper plate 184 connected to the lower surface of the fixing bracket 72, a rotatable-side hook 185 protruding downward from the upper plate 184, and a locking piece 186.

The upper plate 184 extends along the lower surface of the fixing bracket 72 and is connected to the lower surface of the fixing bracket 72 by welding, using bolts, or the like. The upper plate 184 extends in the circumferential direction around the axis A. The rotatable-side hook 185 extends along the outer peripheral edge of the upper plate 184 or in the circumferential direction centering on the axis A. The rotatable-side hook 185 projects downward from the upper plate 184 and opens upward.

The locking piece 186 is provided along the inner peripheral edge of the upper plate 184 and extends in the circumferential direction around the axis A. The locking piece 186 extends downward from the inner peripheral edge of the upper plate 184, and then is bent and extends radially inward with respect to the axis A.

The rotational position of the rotatable part 52 when the seat cushion 11 faces the front of the vehicle is defined as a reference rotational position. When the rotatable part 52 is in the reference rotational position, the first base-side hook 163 of each base-side peeling suppression unit 161 opposes the rotatable-side hook 185 of the corresponding rotatable-side peeling suppression unit 183 that is vertically opposed thereto with a gap defined therebetween. Further, the second base-side hook 164 of each base-side peeling suppression unit 161 and the locking piece 186 of the corresponding rotatable-side peeling suppression unit 183 oppose each other in the vertical direction with a gap defined therebetween. The gap between each first base-side hook 163 and the corresponding rotatable-side hook 185 is smaller than the gap between each second base-side hook 164 and the corresponding locking piece 186. As a result, when a load is applied to the seat main body 3, the first base-side hooks 163 of the base-side peeling suppression unit 161 engage the rotatable-side hooks 185 of the rotatable-side peeling suppression units 183 so that the peeling of the rotatable part 52 from the base part 51 is suppressed. Further, when a further load is applied to the seat main body 3, the second base-side hooks 164 engage the locking pieces 186 so that the separation of the rotatable part 52 from the base part 51 is suppressed.

Even when the rotatable part 52 is rotated 90 degrees (+90 degrees) clockwise, 90 degrees (-90 degrees) counter-clockwise, or 180 degrees (-180 degrees) counter-clockwise from the reference rotational position, the first base-side hooks 163 of the base-side peeling suppression units 161 and the rotatable-side hooks 185 of the rotatable-side peeling suppression units 183 oppose each other, and the second base-side hooks 164 and the locking pieces 186 oppose each other.

One of the side covers 23 is preferably provided with a rotation operation switch (not shown in the drawings) for rotating the seat cushion 11. The rotation operation switch forwards a signal to the control device according to the user's operation. The rotation operation switch responds to the user's operation, e.g., a first signal corresponding to a rotation of 90 degrees to the right, a second signal corresponding to a rotation of 90 degrees to the left, and a third signal corresponding to a rotation of 180 degrees to the left. The control device consists of an electronic control device and is an arithmetic processing unit including a microprocessor (MPU), nonvolatile memory, volatile memory, and an interface. The control device realizes various applications by having a microprocessor execute a program stored in the nonvolatile memory. The control device preferably controls the electric motor 111 of the rotation actuator 53 and the electric motor 152 of the lock release actuator 151 in accordance with a signal from the rotation operation switch.

Next, a method for manufacturing the car seat device 1 will be discussed in the following. First of all, a bulge forming process is performed on the support tube 87 to form the annular rib 88. Next, the bush 91 is fitted to the second bearing hole 75 of the rotatable plate 71, and the gear 116 is attached to the rotatable plate 71. Then, the support tube 87 is inserted into the second bearing hole 75. Next, the retaining ring 92 is attached to the support tube 87. Thereafter, the upper end of the support tube 87 is crimped to form the enlarged diameter portion 93. In this way, the rotatable plate 71 is rotatably supported by the support tube 87.

Next, the base plate 56, the bearing 78, and the rotatable plate 71 are placed one on top of another, and the fixing member 66 is placed around the outer periphery of the base plate 56 and the rotatable plate 71. More specifically, first, the lower part of the support tube 87 is inserted into the first bearing hole 62 of the base plate 56. At this time, the bearing 78 is interposed between the rotatable plate 71 and the base plate 56. Next, the fixing member 66 to which the slidable member 85 is attached is placed on the outer periphery of the rotatable plate 71 and the base plate 56. At this time, the inner flange 68 contacts the upper surface of the rotatable plate 71 via the lower wall portion 85B of the slidable member 85.

Next, the connecting pieces 69 are bent inward in the radial direction of the tube wall 67 so that the base plate 56 and the rotatable plate 71 are interposed between the inner flange 68 and the connecting pieces 69. At this time, it is preferable that the connecting pieces 69 be bent toward the base plate 56 from a direction perpendicular to the base plate 56. In this way, the base plate 56, the bearing 78, the rotatable plate 71, and the fixing member 66 are integrally combined together.

Next, the connecting pieces 69 are welded to the base plate 56. Since the base plate 56, the bearing 78, the rotatable plate 71, and the fixing member 66 are integrally combined by the connecting pieces 69, welding between the connecting pieces 69 and the base plate is facilitated.

Next, the rotation actuator 53 is attached to the base plate 56, and the pinion 115 and gear 116 are meshed with each other. Further, the rotation lock device 54 along with the lock release actuator 151 is attached to the base plate 56.

Next, the front and rear cross members 57 to which the base-side peeling suppression units 161 are attached are connected to the base plate 56. Furthermore, a fixing bracket 72 to which the rotatable-side peeling suppression units 183 are attached is attached to the rotatable plate 71. In this way, the rotation device 2 is assembled.

Thereafter, the front and rear cross members 57 are connected to the left and right upper rails 38 of the slide device 4 provided on the floor 5. Then, the seat main body 3 is attached to the fixing bracket 72. The car seat device 1 is thus assembled in the manner described above.

The effects of the rotation device 2 according to the present embodiment will be discussed in the following. In this rotation device 2, since the rotation actuator 53 and the rotation lock device 54 are positioned under the base plate 56, a space can be created on the side (upper side) of the rotatable plate 71 facing the seat cushion 11.

The arm parts 121A of the lock claw 121 are in sliding contact with the corresponding end walls 124 of the holder 122 in the circumferential direction with respect to the axis A. Therefore, rattling of the lock claw 121 in the rotational direction of the rotatable plate 71 with respect to the holder 122 can be suppressed. Thereby, rattling of the rotatable plate 71 in the rotational direction with respect to the base plate 56 can be suppressed.

Since the axis B which is the rotational axis of the arm parts 121A is positioned above the base plate 56 or the gear 116, the distance between the rotational axis of the lock claw 121 and the tip of the claw part 121C of the lock claw 121 can be minimized. As a result, the space required for the rotation of the lock claw 121 can be minimized.

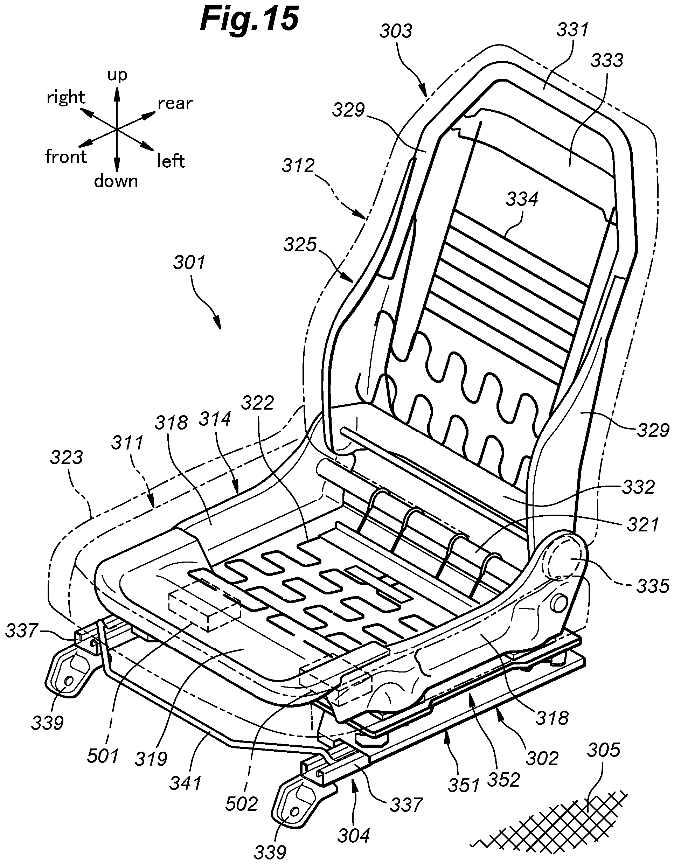

As shown in FIG. 15, the car seat 301 is provided with a rotation device 302. Further, the car seat 301 includes a seat main body 303 and a slide device 304. The rotation device 302 is provided on a floor 305 via a slide device 304. The seat main body 303 includes a seat cushion 311 and a seat back 312. The seat cushion 311 supports the user's buttocks from below. The seat back 312 extends upward from a rear part of the seat cushion 311. The seat back 312 supports the user's back from the rear. The rotation device 302 is provided between the floor 305 and the seat main body 303 and rotatably supports the seat main body 303.

The seat cushion 311 includes a seat cushion frame 314 forming a skeletal structure, a pad supported by the seat cushion frame 314, and a skin material covering the surface of the pad. The seat cushion frame 314 includes a pair of seat cushion side members 318 that extend in the fore and aft direction on either side, a front member 319 that extends laterally between the front ends of the left and right seat cushion side members 318, and a rear member 321 that extends laterally between the left and right seat cushion side members. 318. A flexible support member 322 that supports the user's buttocks is spanned between the front member 319 and the rear member 321. The support member 322 preferably includes a plurality of metal wires and a flexible resin plate connected to the wires. As shown in FIG. 15, a pair of side covers 323 are provided on either side of the seat cushion 311. The side covers 323 are supported by the seat cushion side members 318 and conceal the end parts of the pad and skin material. The side covers 323 are preferably formed of a resin material.

As shown in FIG. 15, the seat back 312 includes a seat back frame 325 forming a skeletal structure, a pad supported by the seat back frame 325, and a skin material covering the surface of the pad. The seat back frame 325 includes a pair of seat back side members 329 that extend vertically on either side, an upper member 331 that extends laterally between the upper ends of the left and right seat back side members 329, a lower member 332 connected between the lower ends of the left and right seat back side members 329 and an intermediate member 333 that extends laterally between the parts of the left and right seat back side members 329 vertically intermediate between the upper member 331 and the lower member 332. The left and right seat back side members 329, the upper member 331, the lower member 332, and the intermediate member 333 are formed by bending and stamp forming sheet metal. A flexible support member 334 that supports the back of the user is spanned between the left and right seat back side members 329, the intermediate member 333, and the lower member 332. The support member 334 is preferably formed of a plurality of metal wires. The lower ends of the left and right seat back side members 329 are connected to the rear ends of the corresponding seat cushion side members 318 via a reclining device 335.

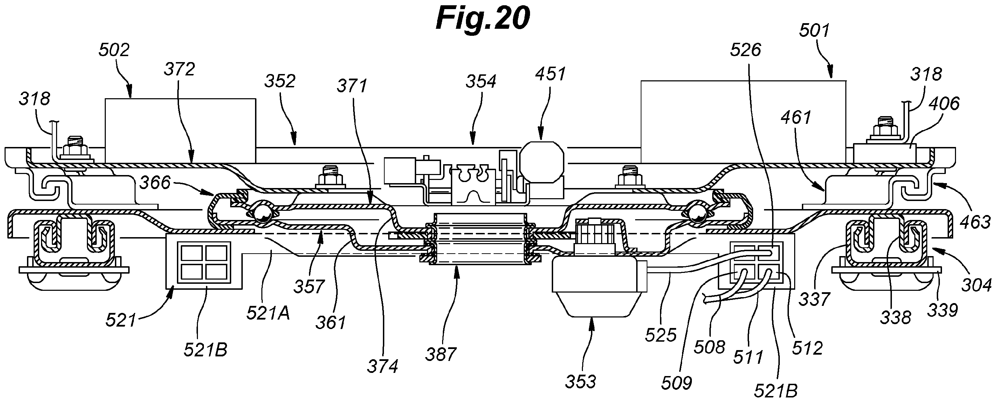

As shown in FIGS. 15 and 20, the slide device 304 includes a pair of lower rails 337 extending in the fore and aft direction on either side and a pair of upper rails 338 supported by the corresponding lower rails 337 so as to be slidable in the fore and aft direction. Each lower rail 337 is connected to the floor 305 via a front and a rear foot 339. A slide lock device (not shown in the drawings) is provided between each lower rail 337 and the corresponding upper rail 338. The left and right slide lock devices are connected to each other by a slide operation lever 341 extending laterally. The user can allow the upper rails 338 to slide relative to the lower rails 337 by operating the slide operation lever 341.

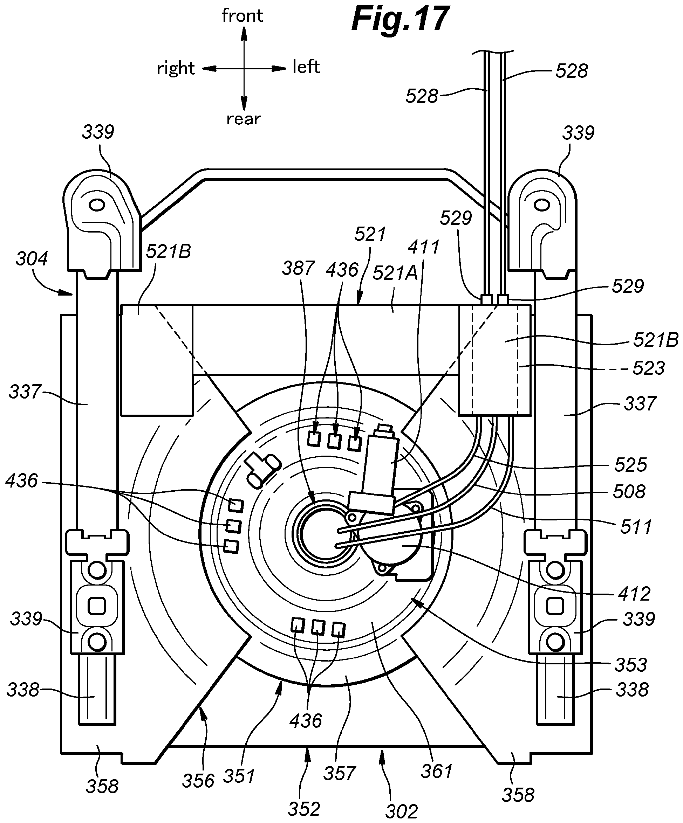

As shown in FIGS. 15 to 20, a rotation device 302 is provided between the floor 305 and the seat cushion 311 and rotatably supports the seat cushion 311 with respect to the floor 305. The rotation device 302 includes a base part 351, a rotatable part 352, an electric actuator 353, and a rotation lock device 354.

The base part 351 is provided on the floor 305. In this embodiment, the base part 351 is provided on the floor 305 via the slide device 304. The base part 351 has a base plate 356 which faces vertically and extends laterally. In this embodiment, the base plate 356 includes a disk-shaped center plate 357 provided in a laterally central part thereof and a pair of side plates 358 connected to either side of the center plate 357. The base plate 356 is preferably formed of sheet metal. In another other embodiments, the center plate 357 and the left and right side plates 358 are formed of a continuous piece of sheet metal.

Each side plate 358 has a fore and aft dimension that increases toward the left and right ends thereof. The left and right side plates 358 protrude further forward than the front end of the center plate 357. The left and right side plates 358 protrude rearward from the rear end of the center plate 357. The laterally inner edge of each side plate 358 is formed into an arcuate shape corresponding to the outer profile of the center plate 357. The side plates 358 and the center plate 357 are preferably fastened together with bolts and nuts.

The left end of the base plate 356 passes above the left slide device 304 and extends leftward beyond the left slide device 304. The left end of the base plate 356 is connected to the left upper rail 338. The right end of the base plate 356 passes above the right slide device 304 and extends rightward beyond the right slide device 304. The right end of the base plate 356 is connected to the right upper rail 338. The base plate 356 is supported by the slide device 304 so as to be movable in the fore and aft direction with respect to the floor 305. The edges of the left and right side plates 358 are provided with edge walls that extend downward. The edge walls improve the rigidity of the left and right side plates 358.

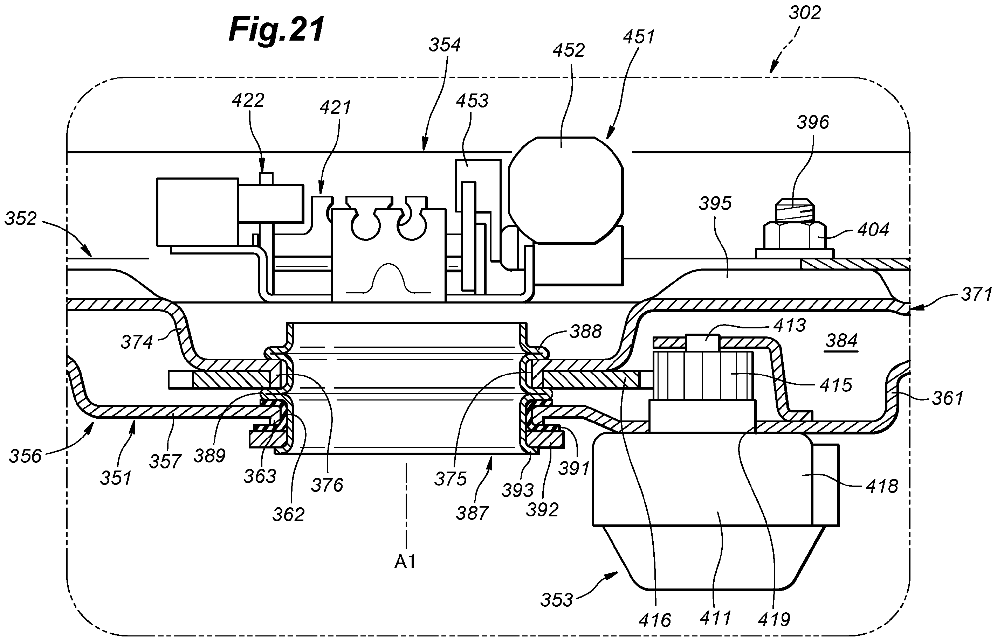

As shown in FIGS. 20 and 21, the center plate 357 is provided with a first bulging portion 361 that bulges downward centrally therefrom. The first bulging portion 361 is formed in a cylindrical shape with a bottom. The first bulging portion 361 extends downward beyond the left and right side plates 358. The first bulging portion 361 is positioned so as to overlap with the left and right slide devices 304 when viewed from a side. A circular first bearing hole 362 is formed in the center of the first bulging portion 361 and penetrates in the thickness direction thereof. The first bearing hole 362 is centered on an axis A1 that extends vertically. An annular edge wall 363 that protrudes upward or downward may be formed at the edge of the first bearing hole 362.

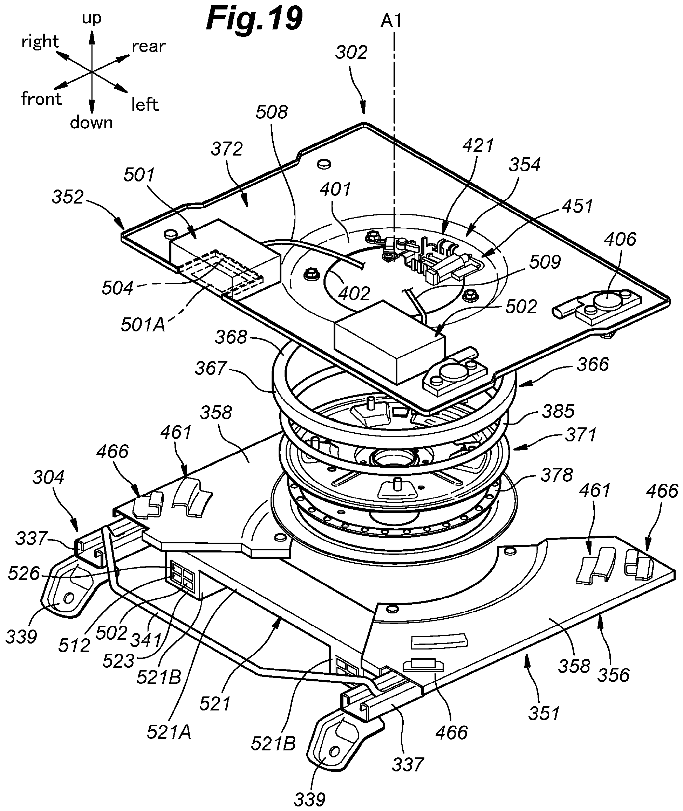

As shown in FIGS. 19, 20, and 22, the base part 351 is provided with a ringshaped fixing member 366 extending upward from the base plate 356. The fixing member 366 is provided on the outer periphery of the center plate 357. The fixing member 366 includes a cylindrical peripheral wall 367 that extends upward along the outer peripheral edge of the center plate 357, an inner flange 368 that extends radially inward from the upper end of the peripheral wall 367, and a plurality of connecting pieces 369 provided on the lower end of the peripheral wall 367. The inner flange 368 is formed into an annular shape and has a surface facing vertically. The connecting pieces 369 are bent during assembly and extend to the lower surface side of the center plate 357. The outer peripheral edge of the center plate 357 is positioned between the inner flange 368 and the connecting piece 369 in the vertical direction. Some of the connecting pieces 369 are interposed between the center plate 357 and one of the side plates 358 in the vertical direction. The fixing member 366 is preferably welded to at least one of the center plates 357 and the side plates 358.

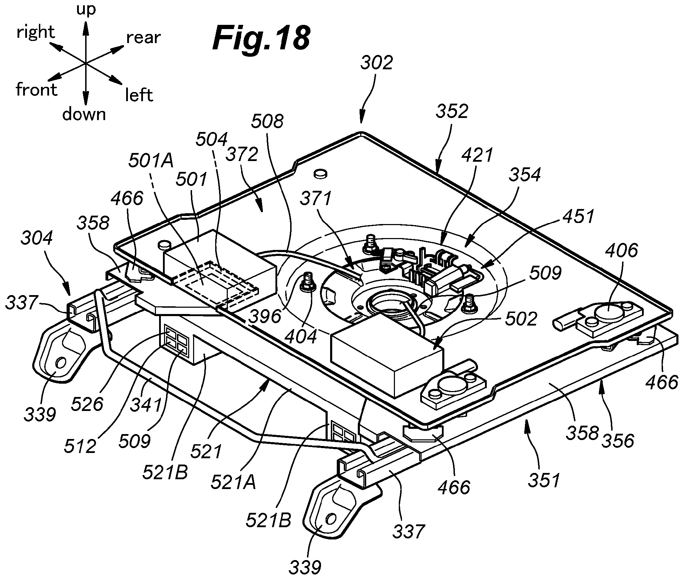

As shown in FIGS. 18 to 20, the rotatable part 352 is provided on the seat cushion 311 and rotatably supported by the base part 351. The rotatable part 352 is provided with a rotatable plate 371 rotatably supported on the upper surface of the base plate 356. The rotatable part 352 further includes a fixing bracket 372 that connects the rotatable plate 371 to the seat cushion frame 314. The rotatable plate 371 and the fixing bracket 372 are formed of sheet metal.

As shown in FIGS. 18 to 21, the rotatable plate 371 is formed into a disk shape having a vertically facing surface. A second bulging portion 374 bulging downward is formed in the center of the rotatable plate 371. The second bulging portion 374 is formed in a cylindrical shape with a bottom. A circular second bearing hole 375 is defined in the center of the second bulging portion 374 and penetrates in the thickness direction thereof. The second bearing hole 375 is centered on the axis A1. An annular edge wall 376 that protrudes upward or downward may be formed at the edge of the second bearing hole 375.

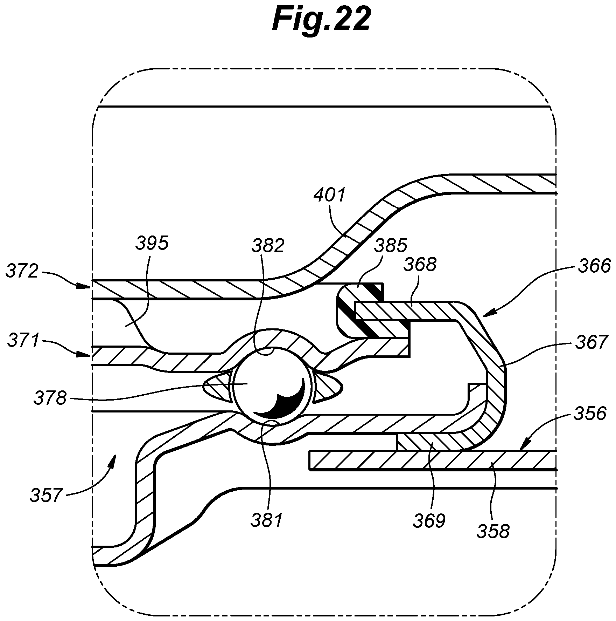

As shown in FIG. 22, the rotatable plate 371 is supported on the upper surface of the center plate 357 via a bearing 378. The bearing 378 is formed in an annular shape centered on the axis A1. The bearing 378 is positioned between the upper surface of the outer periphery of the center plate 357 and the lower surface of the outer periphery of the rotatable plate 371. The bearing 378 is preferably a thrust bearing. In this embodiment, the bearing 378 is a ball bearing. The ball bearing includes a plurality of balls and an annular retainer that rotatably retains the balls. A first bearing groove 381 for receiving a lower part of the bearing 378 is formed on the upper surface of the outer peripheral part of the center plate 357. A second bearing groove 382 for receiving the upper part of the bearing 378 is formed on the lower surface of the outer circumference of the rotatable plate 371.

As shown in FIG. 20, the diameter of the second bulging portion 374 is smaller than the diameter of the first bulging portion 361. The second bulging portion 374 is thus located inside the first bulging portion 361 when viewed from above. A space 384 is defined between the rotatable plate 371 and the center plate 357.

As shown in FIG. 22, a slidable member 385 is provided between the upper surface of the outer peripheral part of the rotatable plate 371 and the fixing member 366. The outer peripheral part of the rotatable plate 371 is in sliding contact with the inner flange 368 via the slidable member 385. The fixing member 366 may press the rotatable plate 371 toward the base plate 356 via the slidable member 385.

As shown in FIG. 21, a support tube 387 extending vertically is inserted into the first bearing hole 362 and the second bearing hole 375. The support tube 387 has a cylindrical shape with both upper and lower ends open. The support tube 387 is made of metal. A plurality of annular ribs 388 and 389 that bulge outward are formed on the outer periphery of the support tube 387. In this embodiment, a first annular rib 388 and a second annular rib 389 are provided on the outer periphery of the support tube 387. The second annular rib 389 is spaced downwardly from the first annular rib 388.

The rotatable plate 371 is restricted from moving in the vertical direction by the annular ribs 388 and 389. The edge of the second bearing hole 375 of the rotatable plate 371 is held between the first annular rib 388 and the second annular rib 389. A cylindrical bush 391 is attached to the edge of the first bearing hole 362 of the base plate 356. The bush 391 is supported by the part of the support tube 387 located below the second annular rib 389. A retaining ring 392 is provided under the bush 391. The lower end of the support tube 387 is crimped outward to form an enlarged diameter portion 393. The bush 391 and the retaining ring 392 are held between the second annular rib 389 and the enlarged diameter portion 393. The support tube 387 is rotatably supported in the first bearing hole 362 of the base plate 356 via the bush 391. The rotatable plate 371 may be connected to the support tube 387 by welding or the like. Further, the rotatable plate 371 may be rotatably supported by the support tube 387. The support tube 387 positions the base plate 356 and the rotatable plate 371 on the axis A1.

As shown in FIG. 20, a plurality of upwardly bulging protrusions 395 are formed in a part of the rotatable plate 371 between the second bulging portion 374 and the second bearing groove 382. Each bulging protrusion 395 is provided with a bolt 396 extending upward. The bolts 396 may consist of stud bolts.

As shown in FIGS. 18 and 19, the fixing bracket 372 is formed into a plate shape having a vertically facing surface. The fixing bracket 372 is preferably formed into a rectangular shape when viewed from above. A fourth recess 401 that is recessed downward is formed in the center of the fixing bracket 372. An opening 402 that penetrates vertically is formed in the center of the fourth recess 401. The rotatable plate 371 and the fixing bracket 372 are fastened to each other by threading nuts 404 to the bolts 396. The fixing bracket 372 is larger than the rotatable plate 371 when viewed from above. The fixing bracket 372 opposes the left and right side plates 358 in the vertical direction.

The fixing bracket 372 is connected to the left and right seat cushion side members 318 using fasteners such as bolts and nuts. A load cell 406 may be interposed between the fixing bracket 372 and one of the seat cushion side members 318.

The electric actuator 353 rotates the rotatable part 352 with respect to the base part 351. As shown in FIGS. 20 and 21, the electric actuator 353 includes an electric motor 411 and a speed reduction mechanism 412. The electric actuator 353 does not have a worm speed reduction mechanism. In this embodiment, the speed reduction mechanism 412 includes a first gear 415 fitted to the output shaft 413 of the electric motor 411 and a second gear 416 connected to the rotatable plate 371. The first gear 415 and the second gear 416 are spur gears. The second gear 416 is centered on the axis A1. The second gear 416 is connected to the lower surface of the second bulging portion 374 of the rotatable plate 371 and is positioned within the space 384. The number of teeth of the second gear 416 is greater than the number of teeth of the first gear 415.

The electric motor 411 is provided with a motor case 418 that is connected to the lower surface of the center plate 357. The output shaft 413 of the electric motor 411 extends upward from the motor case 418. The output shaft 413 passes through a through hole 419 formed in the center plate 357 and extends into the space 384. The first gear 415 fitted to the output shaft 413 is positioned within the space 384 and meshes with the second gear 416.

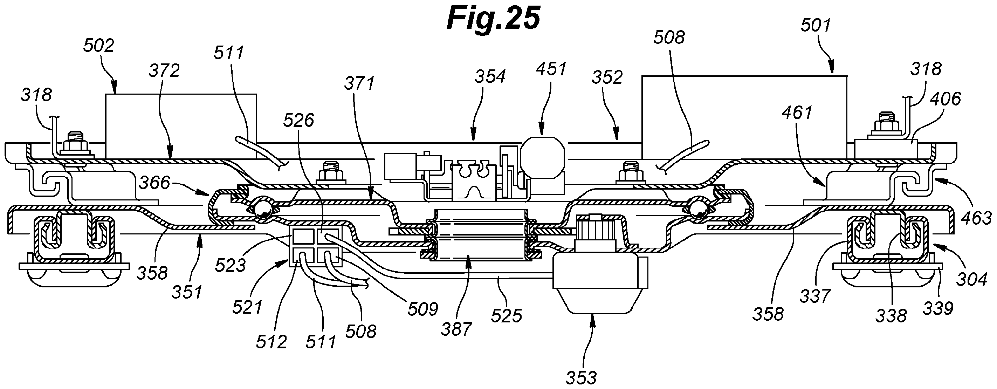

The rotation lock device 354 selectively prohibits rotation of the rotatable part 352 with respect to the base part 351. As shown in FIG. 25, the rotation lock device 354 is provided with a lock claw 421 that is movably supported on one of the base parts 351 and the rotatable part 352. The lock claw 421 is movable between a lock position where it engages the other of the base part 351 and the rotatable part 352 and a release position where it releases the other of the base part 351 and the rotatable part 352.

The rotation lock device 354 is provided with a holder 422 that rotatably supports the lock claw 421. In this embodiment, the holder 422 is provided on the upper surface of the rotatable plate 371.

The rotatable plate 371 is provided with a plurality of first lock holes (not shown in the drawings) through which the lock claws 421 can pass. The center plate 357 of the base part 351 is provided with a plurality of second lock holes 436 into which the lock claws 421 can fit. The lock claw 421 passes through one of the first lock holes and fits into the corresponding second lock hole 436 with the result that rotation of the rotatable plate 371 with respect to the center plate 357 is prohibited. In other words, rotation of the rotatable part 352 with respect to the base part 351 is restricted. The second lock holes 436 are provided at rotationally symmetrical positions about the axis A1.

The lock claw 421 rotates between a lock position where the lock claw 421 enters the first lock hole and the second lock hole 436 and a release position where the lock claw 421 is released from the first lock hole and the second lock hole 436. In other words, the lock claw 421 can be displaced between a lock position where it engages the base part 351 and a release position where it releases the base part 351. A biasing member is provided between the lock claw 421 and the holder 422 to urge the lock claw 421 toward the lock position. In this embodiment, the biasing member is a torsion coil spring.

The rotation lock device 354 includes a lock release actuator 451 that moves the lock claw 421 from the lock position to the release position. The lock release actuator 451 includes an electric motor 452 and an arm 453 provided on the output shaft of the electric motor 452. The arm 453 engages with the lock claw 421.

As shown in FIG. 19, a plurality of base-side peeling suppression units 461 are provided on the upper surfaces of the left and right side plates 358. A plurality of rotatable-side peeling suppression units 463 are provided on the lower surface of the fixing bracket 372. The rotational position of the rotatable part 352 when the seat cushion 311 faces the front of the vehicle is defined as a reference rotational position. When the rotatable part 352 is at the reference rotational position, each base-side peeling suppression unit 461 opposes the corresponding rotatable-side peeling suppression unit 463 with a gap in the vertical direction defined therebetween. As a result, when a load is applied to the seat main body 303, the base-side peeling suppression units 461 and the rotatable-side peeling suppression units 463 engage with each other so that peeling or lifting of the rotatable part 352 from the base part 351 is suppressed.

A plurality of base-side sliding contact portions 466 are provided on the upper surfaces of the left and right side plates 358. A plurality of rotatable-side sliding contact portions (not shown in the drawings) are provided on the lower surface of the fixing bracket 372. When the rotatable part 352 is at the reference rotational position, each base-side sliding contact portion 466 comes into sliding contact with the corresponding rotatable-side sliding contact portion via a slidable member (not shown in the drawings). This suppresses rattling of the rotatable part 352 with respect to the base part 351.

The car seat is equipped with electric devices. The electric devices include, for example, an air blower, a seat heater, an electric reclining device, an electric armrest device, a seat lifting device, a display device, an electric massage device, a compressor, an electronic control device, various sensors, and the like. The electric motor 411 mentioned above, the electric motor 452 of the lock release actuator 451, and the load cell 406 are also included in the electric devices. In this embodiment, an air blower 501 and a control device 502 are provided as electric devices on at least one of the seat main body 303 and the rotatable part 352.

The air blower 501 is provided with an electric motor serving as a drive source for a blower. The air blower 501 is provided with an air inlet port 501A that draws air from outside and an air outlet port 501B. The air outlet port 501B is preferably connected to an air passage formed in the seat cushion 311 and the seat back 312 via a duct 505. The air passage is preferably formed in the pad and extends toward the seating surfaces of the seat cushion 311 and the seat back 312.

The air blower 501 is preferably provided on the upper surface of the fixing bracket 372. The fixing bracket 372 is provided vertically between the rotatable plate 371 and the seat main body 303. Thus, the air blower 501 as an electric device can be accommodated by using the space defined between the fixing bracket 372 and the seat main body 303. The air blower 501 is preferably fastened to the fixing bracket 372 by using a fastening member such as a screw. The air blower 501 is preferably provided at the front of the fixing bracket 372. The air inlet port 501A is positioned on the lower surface of the air blower 501 and opens downward. The fixing bracket 372 has an opening 504 that penetrates vertically in a part thereof opposing the air inlet port 501A. The opening 504 extends forward and reaches the front edge of the fixing bracket 372. Thereby, the air blower 501 can draw air from the air inlet port 501A via the opening 504 provided in the fixing bracket 372.

A wire harness 508 extends from the blower 501. A connector 509 is provided at an end of the wire harness 508.

The control device 502 is an electronic control device and forms an arithmetic processing unit including a microprocessor (MPU), nonvolatile memory, volatile memory, and an interface. The control device 502 realizes various applications by having a microprocessor execute programs stored in the nonvolatile memory. The control device 502 is connected to the electric motor 411 of the electric actuator 353, the electric motor 452 of the lock release actuator 451, the air blower 501, the load cell 406, and the like.

A wire harness 511 extends from the control device 502. A connector 512 is provided at an end of the wire harness 511.

The wire harnesses 508 and 511 are passed through the inside of the support tube 387 and extend from above the rotatable plate 371 to below the center plate 357. The wire harnesses 508 and 511 may be tied together. In other embodiments, the wire harness 508 may extend from the blower 501 to the control device 502 and the connector 509 may be connected to the control device 502.

The base part 351 includes a holder 521 that extends laterally and is connected to the left and right side plates 358. The holder 521 is preferably made of resin or metal, for example. Since the holder 521 is connected to the left and right side plates 358, the holder 521 can be attached to the base part 351 with good stability. Further, the left and right side plates 358 can be reinforced by the holder 521. The holder 521 is preferably connected to the lower surfaces of the left and right side plates 358. Thereby, the holder 521 can be positioned by using the space defined under the left and right side plates 358 and the center plate 357. The holder 521 is preferably connected to the front ends of the left and right side plates 358. Thereby, the holder 521 can be accommodated by using the space defined in front of the center plate 357. The holder 521 is preferably fastened to the left and right side plates 358 by using fastening members such as bolts.

The fore and aft dimensions of an intermediate portion 521A of the holder 521 are smaller than the fore and aft dimensions of the left and right end potions 521B of the holder 521. The rear edge of the intermediate portion 521A is located further forward than the rear edges of the left and right end portions 521B. The rear edge of the intermediate portion 521A is located forward of the front edge of the center plate 357.

The vertical dimensions of the left and right end portions 521B are larger than the vertical dimensions of the intermediate portion 521A. A plurality of connector support portions 523 are formed at the left and right end portions 521B of the holder 521. The connector support portions 523 preferably consist of holes that receive the connectors 509 and 512. The connector support portions 523 preferably penetrate the left and right end portions 521B in the fore and aft direction. Each connector 509, 512 is supported by the corresponding connector support portion 523, and the connecting portions face forward. Each connector 509 and 512 is thus supported by the base part 351 via the holder 521.

A wire harness 525 extends from the electric motor 411. A connector 526 is provided at an end of the wire harness 525. The connector 526 is supported by the corresponding connector support portion 523, and the connecting portion faces forward.

The connectors 529 of vehicle-side wire harnesses 528 are connected to the corresponding connectors 509, 512, and 526.

In this car seat 301, the connectors 509 and 512 are provided on the base part 351 that does not rotate with respect to the floor 305 so that even when the seat main body 303 rotates, the connectors 509 and 512 do not rotate. Thereby, in this car seat 301 provided with the rotation device 302, tension and slackening of the wire harnesses 508 and 511 can be avoided.

Since the wire harnesses 508 and 511 pass through the inside of the support tube 387 and extend from above the rotatable plate 371 to below the center plate 357, the wire harnesses 508 and 511 are allowed to pass a part adjacent to the rotational axis of the rotation device 302. Thereby, displacement of the wire harnesses 508 and 511 when the rotation device 302 rotates can be minimized. Further, the wire harnesses 508 and 511 can be protected by the support tube 387.

The specific embodiments of the present invention have been described above, but the present invention is not limited to the above-mentioned embodiments and can be widely modified in various way in implementation. For example, the holder 521 may be connected to the rear end portions of the lower surfaces of the left and right side plates 358. Furthermore, the holder 521 may be connected to only one of the left and right side plates 358. Further, a plurality of holders 521 may be provided and connected to the left and right side plates 358 and the center plate 357, individually.

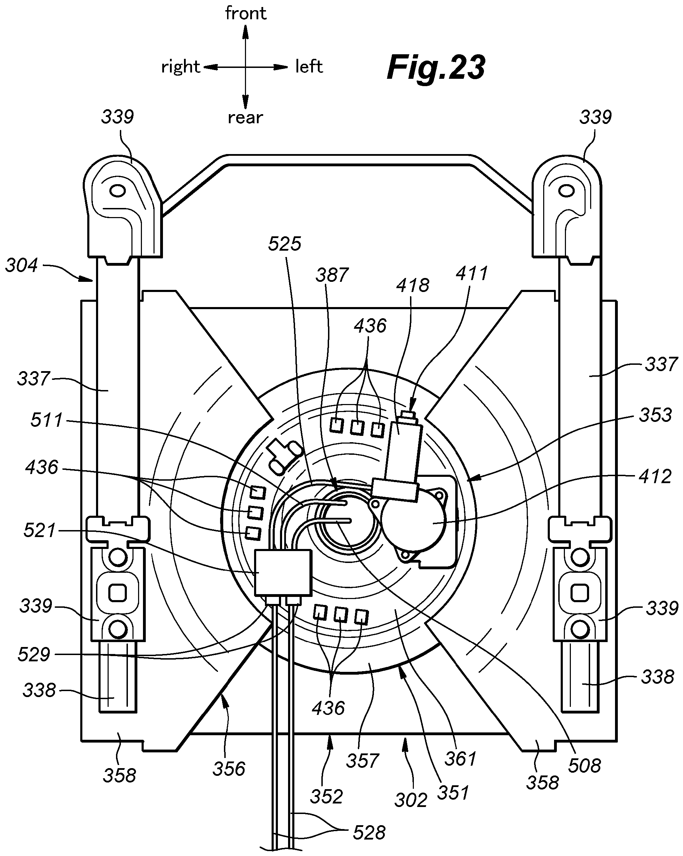

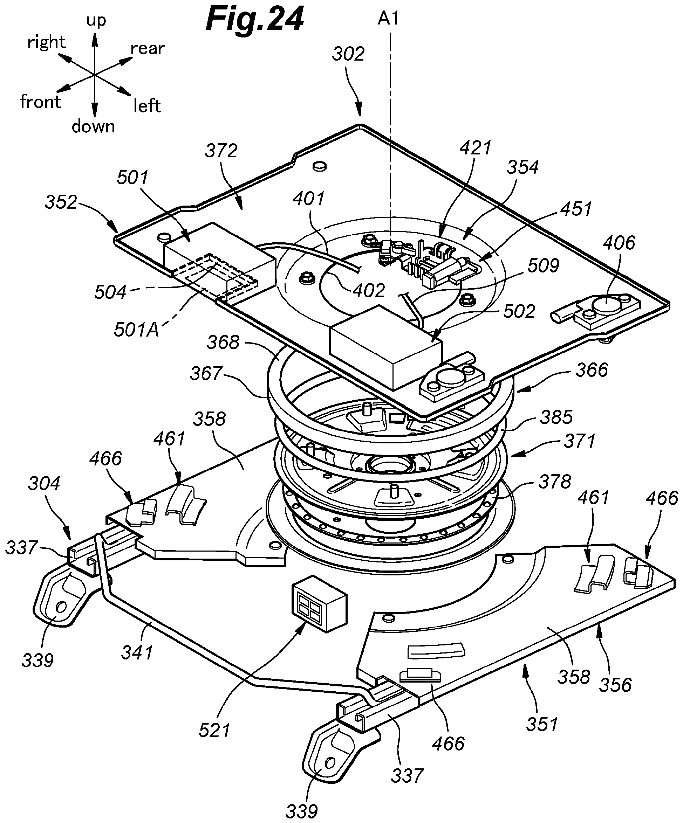

In other embodiments, the holder 521 may be provided only on the center plate 357, as shown in FIGS. 23-25. The holder 521 is preferably connected to the lower surface of the center plate 357. The holder 521 is preferably provided on the lower surface of the center plate 357 opposite or remote from the electric motor 411.

Each connector may be directly supported by any one of the center plate 357 and the left and right side plates 358 without using the holder 521. For example, each connector may be fastened to the lower surface of any one of the center plate 357 and the left and right side plates 358 by using a fastening member such as a resin fastener. Moreover, each connector and the corresponding holder 521 may be formed integrally so that each holder 521 may also serve as the corresponding connector.

A car seat according to another embodiment of the present invention will be described in the following with reference to the appended drawings. The car seat may be applied to, for example, an automobile or a one-box car. The vehicle to which the car seat of the present embodiment is applied is preferably a self-driving vehicle.

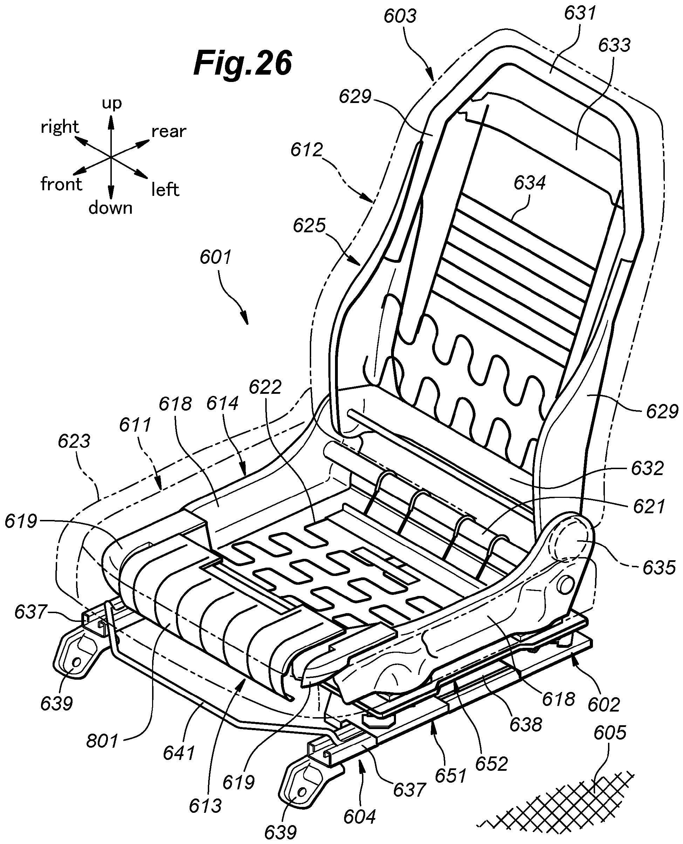

As shown in FIG. 26, the car seat device 601 includes a rotation device 602. The car seat device 601 further includes a seat main body 603 and a slide device 604. The rotation device 602 is provided on the floor 605 via the slide device 604. The seat main body 603 includes a seat cushion 611 and a seat back 612. The seat cushion 611 supports the user's buttocks from below. The seat back 612 extends upward from the rear of the seat cushion 611. The seat back 612 supports the user's back from the rear.

The seat cushion 611 is provided with an expansion/retraction device 613 that expands and retracts in the horizontal direction.

The seat cushion 611 includes a seat cushion frame 614 forming a skeletal structure, a pad supported by the seat cushion frame 614, and a skin material covering the surface of the pad. The seat cushion frame 614 includes a pair of seat cushion side members 618 that extend in the fore and aft direction on either side, a front member 619 that extends laterally between the front ends of the left and right seat cushion side members 618, and a rear member 621 that extends laterally between the left and right seat cushion side members 618. A flexible support member 622 that supports the user's buttocks is spanned between the front member 619 and the rear member 621. The support member 622 preferably includes a plurality of metal wires and a flexible resin plate attached to the wires. As shown in FIG. 26, a side cover 623 is provided on each side of the seat cushion 611. The side covers 623 are supported by the seat cushion side members 618 and conceal the end parts of the pad and the skin material. The side covers 623 are preferably formed of a resin material.

The expansion/retraction device 613 is provided on the front member 619. The expansion/retraction device 613 expands and retracts the front end of the seat cushion 611 in the fore and aft direction. The configuration of the expansion/retraction device 613 will be described later.

As shown in FIG. 26, the seat back 612 includes a seat back frame 625 forming a skeletal structure, a pad supported by the seat back frame 625, and a skin material covering the surface of the pad. The seat back frame 625 includes a pair of seat back side members 629 that extend vertically on either side, an upper member 631 that extends laterally between the upper ends of the left and right seat back side members 629, a lower member 632 that extends laterally between the lower ends of the left and right seat back side members 629, and an intermediate member 633 that extends laterally between the left and right seat back side members 629 at a point vertically intermediate between the upper member 631 and the lower member 632. The left and right seat back side members 629, the upper member 631, the lower member 632, and the intermediate member 633 are formed by stamp forming sheet metal. A flexible support member 634 that supports the back of the user is spanned between the left and right seat back side members 629, the intermediate member 633, and the lower member 632. The support member 634 is preferably formed of a plurality of metal wires. The lower ends of the left and right seat back side members 629 are connected to the rear ends of the corresponding seat cushion side members 618 via a reclining device 635.

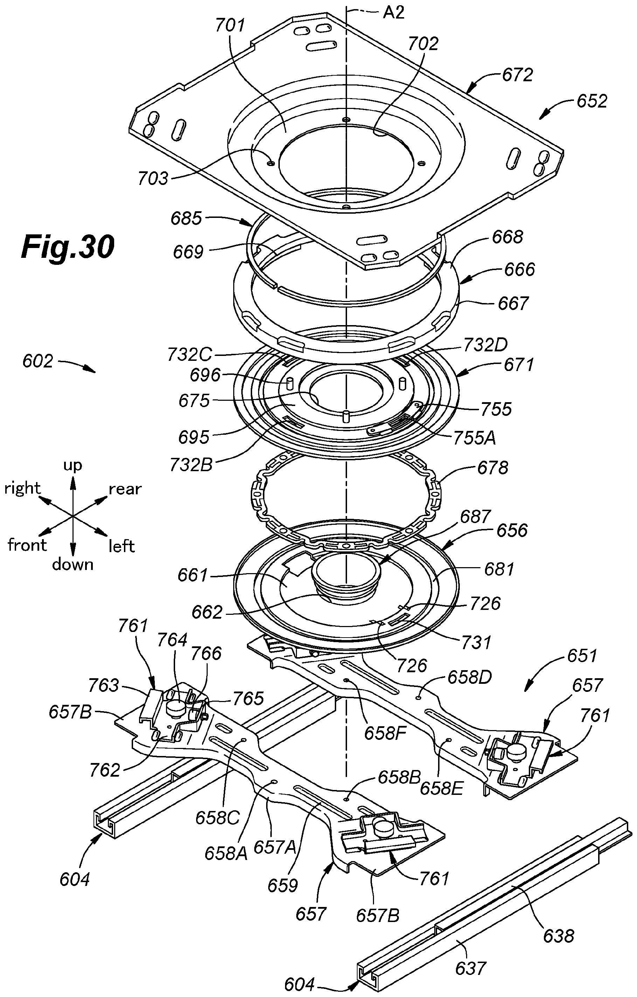

As shown in FIGS. 26 and 30, the slide device 604 includes a pair of lower rails 637 extending in the fore and aft direction on either side and a pair of upper rails 638 supported by the respective lower rails 637 so as to be slidable in the fore and aft direction. Each lower rail 637 is coupled to the floor 605 via a front and a rear foot 639. A slide lock device (not shown in the drawings) is provided between each lower rail 637 and the corresponding upper rail 638. The left and right slide lock devices are connected to each other by a slide operation lever 641 extending laterally. The user can allow the upper rail 638 to slide relative to the lower rail 637 by operating the slide operation lever 641.

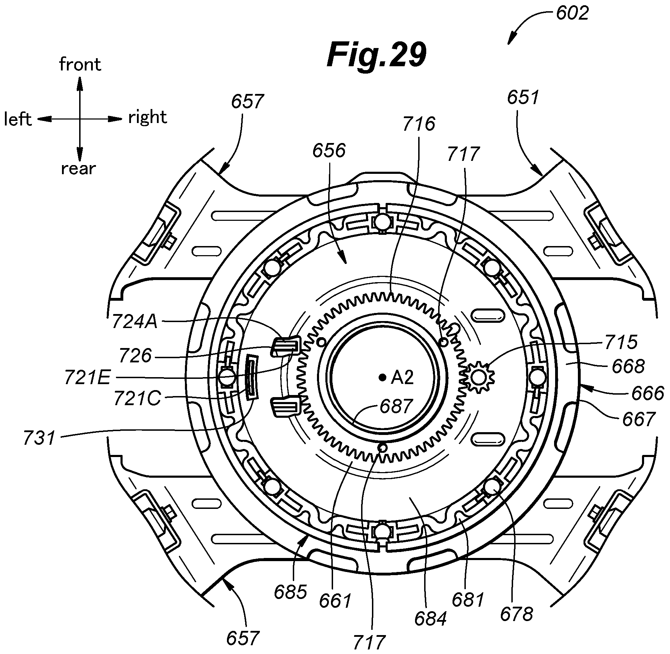

As shown in FIGS. 26 to 30, the rotation device 602 is provided between the floor 605 and the seat cushion 611 and rotatably supports the seat cushion 611 with respect to the floor 605. The rotation device 602 includes a base part 651, a rotatable part 652, a rotation actuator 653, and a rotation lock device 654.

The base part 651 is provided on side of the floor 605. In this embodiment, the base part 651 is provided on the floor 605 via the slide device 604. The base part 651 is provided with a circular base plate 656 having a vertically facing surface. The base plate 656 is supported by the left and right upper rails 638 via a pair of front and rear cross members 657. Each cross member 657 extends laterally between the left and right upper rails 638 at the respective ends. The left and right ends of the front cross member 657 are connected to the front ends of the corresponding upper rails 638. The left and right ends of the rear and front cross member 657 are connected to the rear ends of the corresponding upper rails 638.

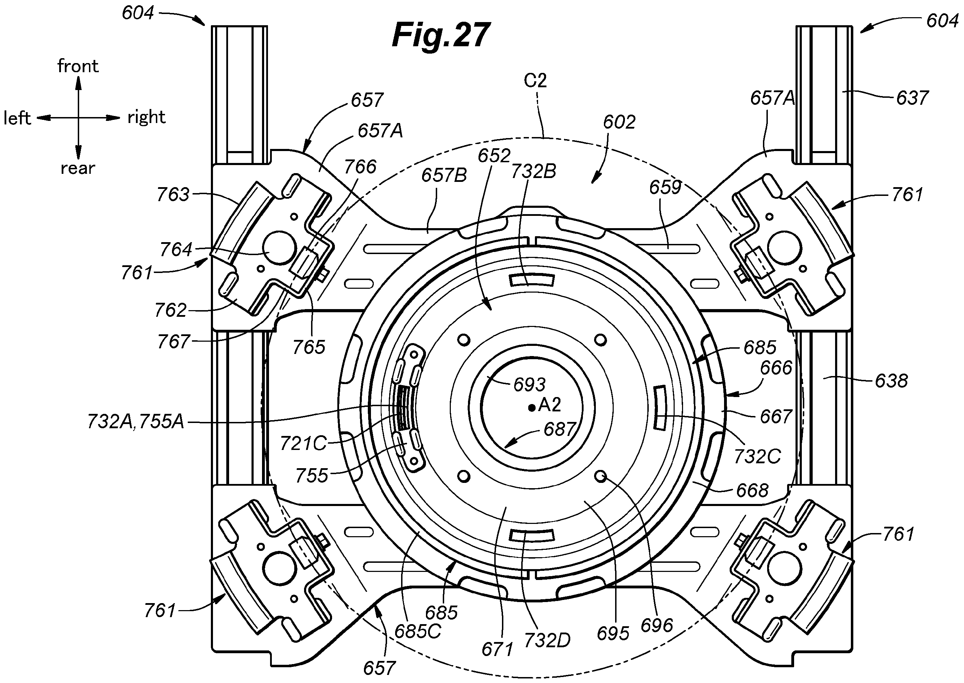

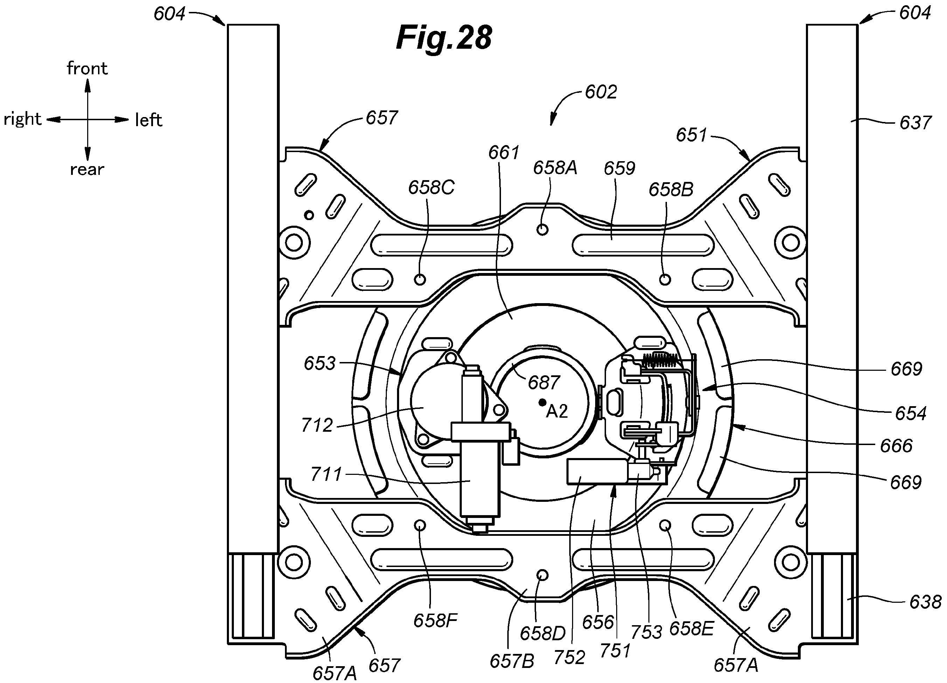

As shown in FIGS. 27 and 28, the front and rear cross members 657 are spaced from each other in the fore and aft direction. The base plate 656 and the front and rear cross members 657 are preferably formed of sheet metal. Each cross member 657 preferably has a channel cross section having an open side facing downward. The fore and aft dimensions of the left and right end portions 657A of each cross member 657 are larger than that of the central portion 657B thereof. The left and right end portions 657A of each cross member 657 have upper surfaces facing in the vertical direction. A plurality of reinforcing structures 659 are formed in the central portion 657B. The reinforcing structures 659 may consist of beads. The reinforcing structures 659 preferably extend in the lateral direction. Further, the reinforcing structures 659 may extend from the center of the central portion 657B obliquely, in particular laterally outward and rearward.

As shown in FIGS. 28 and 30, the front and rear cross members 657 are fastened to the base plate 656 preferably with bolts and nuts. The front and rear cross members 657 are thus connected to each other by the base plate 656. The front part of the base plate 656 is connected to the front cross member 657 at a first connecting point 658A, a second connecting point 658B, and a third connecting point 658C. The first connecting point 658A is provided at the front end of the base plate 656 centrally with respect to the lateral direction. The second connecting point 658B is positioned at the rear and left side of the first connecting point 658A. The third connecting point 658C is positioned at the rear and right side of the first connecting point 658A.

The rear part of the base plate 656 is connected to the front cross member 657 at a fourth connecting point 658D, a fifth connecting point 658E, and a sixth connecting point 658F. The fourth connecting point 658D is provided at the rear end of the base plate 656 centrally with respect to the lateral direction. The fifth connecting point 658E is located forward and to the left of the fourth connecting point 658D. The sixth connecting point 658F is located forward and to the right of the fourth connecting point 658D.

As shown in FIGS. 30 to 33, a first bulging portion 661 bulging downward is formed in the center of the base plate 656. The first bulging portion 661 is formed in a cylindrical shape with a bottom. A circular first bearing hole 662 is passed through the center of the first bulging portion 661. The first bearing hole 662 is centered on an axis A2 (first axis) that extends vertically. An annular edge wall 663 protruding upward or downward may be formed along the edge of the first bearing hole 662.

As shown in FIGS. 27 to 33, an annular fixing member 666 is connected to the outer peripheral edge of the base plate 656. The fixing member 666 includes a tube wall 667 that extends upward along the outer peripheral edge of the base plate 656, an inner flange 668 that extends radially inward from the upper end of the tube wall 667, and a plurality of connecting pieces 669 provided at the lower end of the tube wall 667. The inner flange 668 is formed into an annular shape and has a surface that faces vertically. The connecting pieces 669 are bent at the time of assembly and extend along the lower surface side of the base plate 656. The outer peripheral edge of the base plate 656 is positioned between the inner flange 668 and the connecting pieces 669 in the vertical direction. The connecting pieces 669 provided at the front and rear parts of the base plate 656 are preferably held between the base plate 656 and the corresponding cross members 657 in the vertical direction. The connecting pieces 669 are welded to the base plate 656. Further, the fixing member 666 may be formed by combining a plurality of individual members. A plurality of reinforcing structures may be provided at the boundary between the tube wall 667 and the inner flange 668. The reinforcing structure may be, for example, a recess, a rib, or the like.

As shown in FIGS. 27 and 30 to 33, the rotatable part 652 is provided on the seat cushion 611 and rotatably supported by the base part 651. The rotatable part 652 has a rotatable plate 671 rotatably supported on the upper surface of the base plate 656. The rotatable part 652 further includes a fixing bracket 672 that connects the rotatable plate 671 to the seat cushion frame 614. The rotatable plate 671 and the fixing bracket 672 are formed of sheet metal.

The rotatable plate 671 is formed into a disk having a surface facing vertically. A circular second bearing hole 675 is vertically passed through the center of the rotatable plate 671. The second bearing hole 675 is centered on the axis A2. An annular edge wall 676 protruding upward or downward may be formed along the edge of the second bearing hole 675.

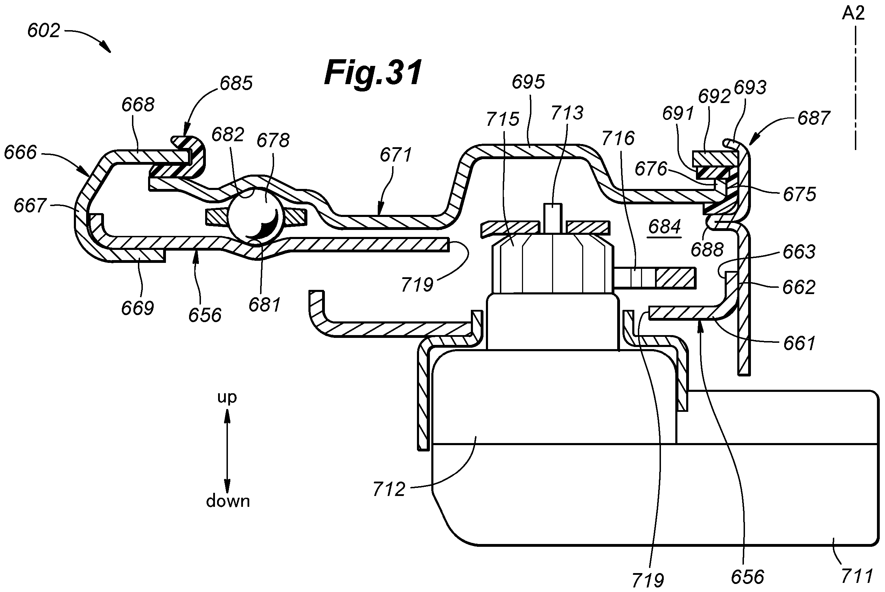

As shown in FIGS. 30 and 31, the rotatable plate 671 is supported on the upper surface of the base plate 656 via a bearing 678. The bearing 678 is formed in an annular shape centered on the axis A2. The bearing 678 is positioned between the upper surface of the outer periphery of the base plate 656 and the lower surface of the outer periphery of the rotatable plate 671. The bearing 678 is preferably a thrust bearing. In this embodiment, the bearing 678 is a ball bearing. The ball bearing includes a plurality of balls and an annular retainer that rotatably retains the balls. A first bearing groove 681 for receiving a lower part of the bearing 678 is formed on the upper surface of the outer peripheral portion of the base plate 656. A second bearing groove 682 for receiving the upper part of the bearing 678 is formed on the lower surface of the outer peripheral portion of the rotatable plate 671. A space 684 is formed between the center portion of the rotatable plate 671 and the first bulging portion 661 of the base plate 656.

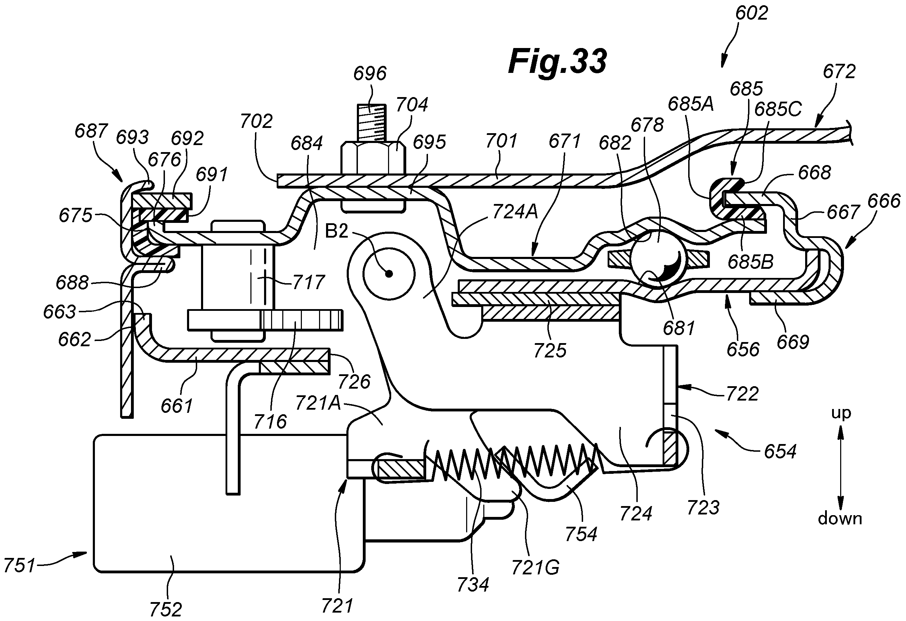

As shown in FIG. 33, the fixing member 666 extends above the outer periphery of the rotatable plate 671. More specifically, the inner flange 668 of the fixing member 666 extends upward from the outer periphery of the rotatable plate 671. A slidable member 685 is fitted on the inner flange 668. The slidable member 685 includes a vertical wall 685A that abuts the inner peripheral edge of the inner flange 668 and extends in the vertical direction, a lower wall portion 685B that extends from the lower end of the vertical wall 685A in a radially outward direction with respect to the axis A2 along the lower surface of the inner flange 668, and an upper wall portion 685C that extends radially outward from the upper end of the vertical wall 685A with respect to the axis A2 along the upper surface of the inner flange 668. The outer peripheral portion of the rotatable plate 671 is in sliding contact with the inner flange 668 via the lower wall portion 685B of the slidable member 685. The lower wall portion 685B has a greater radial dimension than the upper wall portion 685C with respect to the axis A2. Thereby, the sliding contact area between the rotatable plate 671 and the lower wall portion 685B of the slidable member 685 can be increased, and the slidable member 685 can support the edge of the rotatable plate 671 with good stability.

The fixing member 666 may press the rotatable plate 671 toward the base plate 656 via the slidable member 685. The slidable member 685 is in sliding contact with a part of the rotatable plate 671 that is closer to the outer periphery than the second bearing groove 682 is. The slidable member 685 is preferably in sliding contact with the outer peripheral edge of the rotatable plate 671. The slidable member 685 is made of a resin material that has a smaller coefficient of friction than metal. The slidable member 685 may be divided into multiple segments.

As shown in FIGS. 30 and 31, a support tube 687 extending vertically is inserted into the first bearing hole 662 and the second bearing hole 675. The support tube 687 has a cylindrical shape and is open at both the upper and lower ends thereof. The support tube 687 is made of metal. An annular rib 688 that bulges outward is formed on the outer periphery of the support tube 687. A cylindrical bush 691 is attached to the edge of the second bearing hole 675 of the rotatable plate 671. The bush 691 is supported by a part of the support tube 687 located immediately above the annular rib 688. A retaining ring 692 is fitted on the part of the support tube 687 located immediately above the bush 691. The upper end of the support tube 687 is crimped to form an enlarged diameter portion 693. The bush 691 and the retaining ring 692 are held between the annular rib 688 and the enlarged diameter portion 693. Thereby, the position of the rotatable plate 671 in the vertical direction with respect to the support tube 687 is determined. The support tube 687 is rotatably supported in the second bearing hole 675 of the rotatable plate 671 via the bush 691.

The first bearing hole 662 of the base plate 656 is located below the annular rib 688. A part of the support tube 687 immediately under the annular rib 688 may be rotatably supported by the first bearing hole 662 or may be welded to the first bearing hole 662. The support tube 687 positions the base plate 656 and the rotatable plate 671 on the axis A2.

As shown in FIG. 33, an annular protrusion 695 that bulges upward is formed in a part of the rotatable plate 671 located radially inward of the second bearing groove 682. The annular protrusion 695 is formed in an annular shape centered on the axis A2. The annular protrusion 695 is provided with a plurality of bolts 696 extending upward. The bolts 696 may consist of stud bolts.

As shown in FIGS. 30 and 33, the fixing bracket 672 is formed into a plate shape having a vertically facing surface. The fixing bracket 672 is preferably formed into a rectangular shape when viewed from above. A downward recess 701 is formed in the center of the fixing bracket 672. An opening 702 is passed vertically through the center of the recess 701. A plurality of fastening holes 703 are passed through the bottom of the recess 701 and accept the bolts 696 therethrough. The rotatable plate 671 and the fixing bracket 672 are fastened to each other by threading nuts 704 onto the bolts 696. The fixing bracket 672 is larger than the rotatable plate 671 when viewed from above. The fixing bracket 672 vertically opposes the front and rear cross members 657.

The fixing bracket 672 is connected to the left and right seat cushion side members 618 by using fasteners such as bolts and nuts. A load cell may be interposed between the fixing bracket 672 and one of the seat cushion side members 618.

The rotation actuator 653 rotates the rotatable plate 671 with respect to the base plate 656. As shown in FIGS. 28 and 31, the rotation actuator 653 is attached to the lower surface of the base plate 656. The rotation actuator 653 is positioned ahead of the axis A2. The rotation actuator 653 includes an electric motor 711 and a speed reduction mechanism 712. The rotation actuator 653 does not have a worm speed reduction mechanism. **In** this embodiment, the speed reduction mechanism 712 includes a pinion 715 fitted to the output shaft 713 of the electric motor 711 and a gear 716 fixed to the rotatable plate 671. The pinion 715 and gear 716 are spur gears. The gear 716 is centered on the axis A2. The gear 716 is connected to the lower surface of the rotatable plate 671 via a spacer 717 and is positioned within the space 684. The gear 716 has a larger number of teeth than the pinion 715.

The rotation actuator 653 is attached to the lower surface of the base plate 656. The rotation actuator 653 may be attached to the lower surface of base plate 656 via a bracket. The output shaft 713 of the rotation actuator 653 extends upward from the speed reduction mechanism 712. The output shaft 713 passes through a through hole 719 formed in the base plate 656 and extends into the space 684. A pinion 715 fitted to the output shaft 713 is positioned within the space 684 and meshes with the gear 716. The electric motor 711 and the speed reduction mechanism 712 are positioned under the base plate 656.

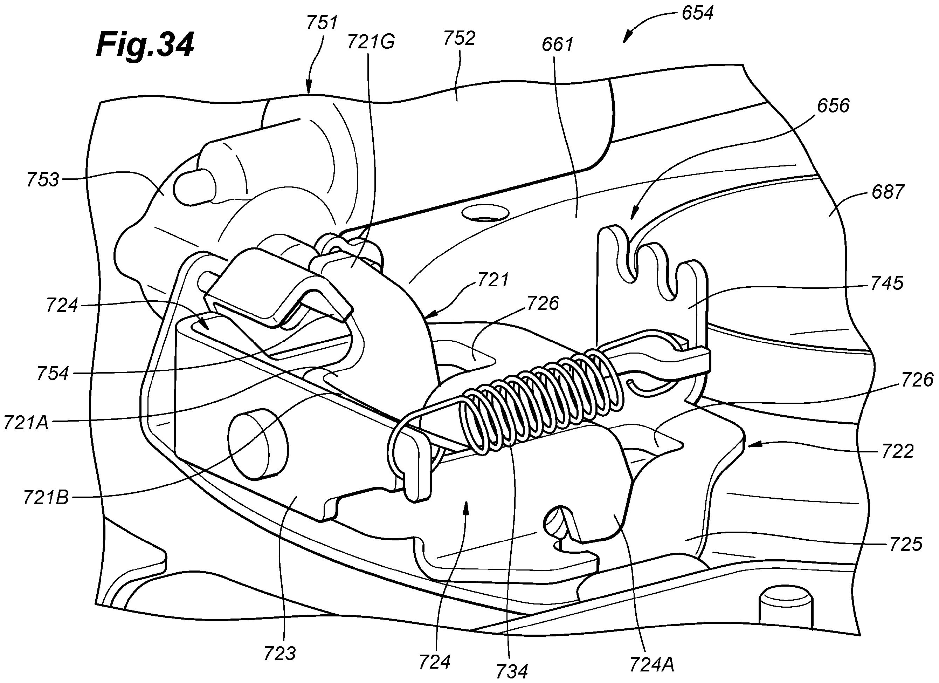

A rotation lock device 654 selectively prohibits rotation of the rotatable plate 671 with respect to base plate 656. As shown in FIGS. 28 and 32-35, the rotation lock device 654 is attached to the lower surface of the base plate 656. The rotation lock device 654 includes a holder 722 that protrudes downward from the lower surface of the base plate 656, and a lock claw 721 that is rotatably supported by the holder 722, penetrates the base plate 656, and engages with the rotatable plate 671. The lock claw 721 is movable between a lock position where it engages the rotatable plate 671 and a release position where it releases the rotatable plate 671. The lock claw 721 and the holder 722 are formed of sheet metal.

The holder 722 has a peripheral wall portion 723 that extends in the circumferential direction centered on the axis A2, which is the rotational axis of the rotatable plate 671, and a pair of end wall portions 724 that extend radially inward from the respective ends of the peripheral wall portion 723 with respect to the axis A2. The holder 722 further includes a bottom plate 725 that extends along the lower surface of the base plate 656 and is attached to the lower surface of the base plate 656. The bottom plate 725 extends along the lower surface of the first bulging portion 661. The peripheral wall portion 723 and the end wall portions 724 protrude downward from the bottom plate 725. The end wall portions 724 are connected to the bottom plate 725. The peripheral wall portion 723 may be connected to the bottom plate 725. The peripheral wall portion 723 and the end wall portions 724 are formed by bending a piece of sheet metal. The peripheral wall portion 723 and the end wall portions 724 may also be formed by combining a plurality of sheet metal pieces.

A pair of openings 726 are passed vertically through the bottom plate 725 and the first bulging portion 661. The openings 726 are formed at positions corresponding to the end wall portions 724, respectively. Each end wall portion 724 has an extension 724A that extends through the corresponding opening 726 to a point located above the base plate 656. The upper end of each extension 724A is positioned within the space 684. The upper end of each extension 724A extends upward beyond the gear 716.

The lock claw 721 includes a pair of arm parts 721A rotatably supported by the respective end wall portions 724, a beam part 721B connecting the tips of the arm parts 721A to each other, and a claw part 721C projecting from the beam part 721B. Each arm part 721A is rotatably supported by the corresponding extension 724A about an axis B2 (second axis). The axis B2 constitutes a rotational axis of the lock claw 721. The axis B2 is located above the base plate 656 and may be located above the gear 716. The arm parts 721A pass through the corresponding openings 726 and extend under the base plate 656 from within the space 684. The arm parts 721A extend along the corresponding end wall portions 724 and are in sliding contact with the corresponding end wall portions 724. The beam part 721B is positioned under the base plate 656 and extends in the horizontal direction. Moreover, the beam part 721B extends in the circumferential direction centered on the axis A2. The claw part 721C is provided at the center of the beam part 721B with respect to the lengthwise direction thereof. Each arm part 721A has an arm base end portion 721E supported by the corresponding extension 724A, and an arm tip portion 721F bent and extending from the arm base end portion 721E. The beam part 721B is connected to the arm tip portions 721F.

The axis B2 extends in the horizontal direction. The axis B2 is positioned at the same elevation as the bearing 678 in the vertical direction. More specifically, the axis B2 is located below the upper end of the bearing 678 and above the lower end of the bearing 678. The axis B2 is positioned inside the annular bearing 678. Since the axis B2 is positioned at the same elevation as the bearing 678, the vertical dimension of the rotation device 602 can be minimized. The axis B2 is positioned radially outward from the gear 716 with respect to the axis A2. Thereby, interference between the lock claw 721 and the gear 716 can be avoided when the lock claw 721 rotates.

The base plate 656 and the bottom plate 725 are formed with an insertion hole 731 that is passed through in the vertical direction. The insertion hole 731 extends in the circumferential direction centered on the axis A2. A plurality of lock holes 732 are formed in the rotatable plate 671 and can be selectively engaged with the lock claw 721. Each lock hole 732 extends in the circumferential direction centered on the axis A2. The lock holes 732 are provided at rotationally symmetrical positions about the axis A2. When the rotatable plate 671 is at one of predetermined rotational positions relative to the base plate 656, the insertion hole 731 aligns with the corresponding lock hole 732. The lock claw 721 passes through the insertion hole 731 and enters the lock hole 732 in the lock position, and is released from the insertion hole 731 and the lock hole 732 in the release position.

As shown in FIG. 28, the rotation lock device 654 is positioned on the left side of the axis A2. The rotation actuator 653 is positioned to the right side of the axis A2. The rotation actuator 653 and the rotation lock device 654 are positioned at point-symmetrical positions about the axis A2. The rotation lock device 654 and the rotation actuator 653 are positioned between the front and rear cross members 657 in top view.

When the rotatable plate 671 is in the initial position, the seat main body 603 faces forward. As shown in FIG. 27, the lock holes 732 include first to fourth lock holes 732A to 732D. When the rotatable plate 671 is in the initial position, the first lock hole 732A is located to the left of the axis A2, the second lock hole 732B is located in front of the axis A2, the third lock hole 732C is located to the left of the axis A2, and the fourth lock hole 732D is located at the rear of the axis A2. The lock holes 732 are arranged at 90 degree intervals around the axis A2. When the rotatable plate 671 is in the initial position, the first lock hole 732A aligns with the insertion hole 731 in the vertical direction.

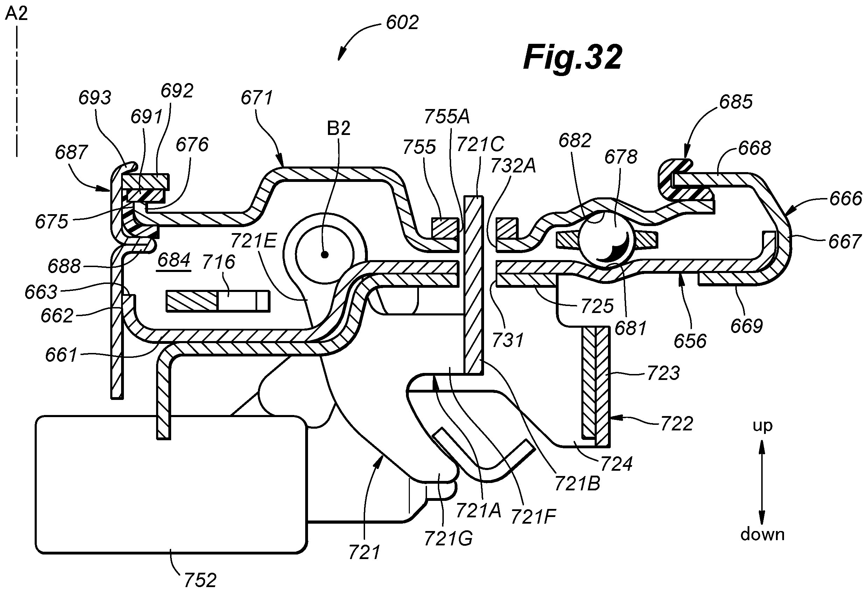

As shown in FIG. 32, the claw part 721C of the lock claw 721 passes through the insertion hole 731 and fits into one of the lock holes 732, thereby restricting rotation of the rotatable plate 671 with respect to the base plate 656.

The lock claw 721 is rotatable between the lock position where the claw part 721C enters the insertion hole 731 and one of the lock holes 732 and the release position where the claw part 721C is released downward from the insertion hole 731 and the lock hole 732. In other words, the lock claw 721 is movable between the lock position where it engages with the rotatable plate 671, and the release position where it is released from the rotatable plate 671. A biasing member 734 is provided between the lock claw 721 and the holder 722 to urge the lock claw 721 toward the lock position. In this embodiment, the biasing member 734 consists of a tension coil spring. The biasing member 734 is preferably connected between the arm part 721A and the peripheral wall portion 723. The end of the biasing member 734 on the side of the axis A2 preferably overlaps with the axis B2 or an imaginary line extending from the axis B2. Thereby, the lock claw 721, the holder 722, and the biasing member 734 can be arranged compactly in the radial direction with respect to the axis A2.

When the lock claw 721 is in the lock position, the beam part 721B and the arm tip portions 721F extend along the lower surface of the base plate 656. At this time, the arm base end portions 721E passe through the openings 726 and extend vertically. When the lock claw 721 is in the release position, the beam part 721B and the arm tip portions 721F are spaced downward from the lower surface of the base plate 656. Further, the tip of the claw part 721C is located below the base plate 656.

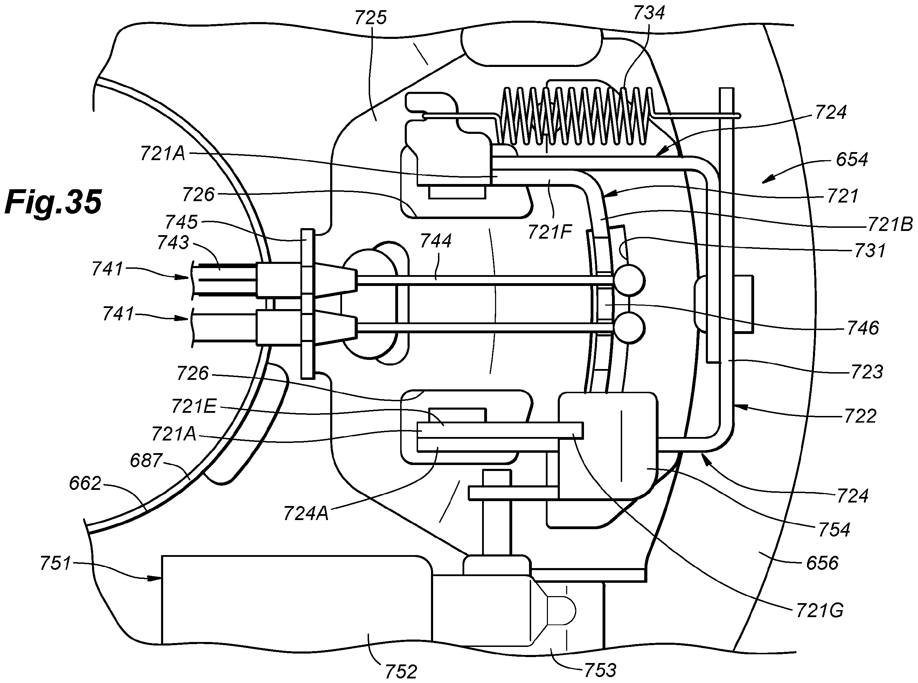

As shown in FIG. 35, the lock claw 721 is connected to a manual operation lever by a control cable 741. The control cable 741 has a tubular outer casing 743 and an inner cable 744 slidably received in the outer casing 743. One end of the outer casing 743 is fixed to a casing locking portion 745 of the holder 722. The casing locking portion 745 projects downward from the bottom plate 725. The other end of the outer casing 743 is fixed to the seat cushion frame 614 or the side cover 623. One end of the inner cable 744 is connected to a cable engaging portion 746 provided on the beam part 721B of the lock claw 721. The other end of the inner cable 744 is connected to a manual operation lever (not shown in the drawings). The manual operation lever is preferably rotatably supported by the seat cushion frame 614 or the side cover 623.

When the manual operation lever is pulled by a user, the control cable 741 pulls the lock claw 721 from the lock position to the release position. This allows the rotatable part 652 to rotate relative to the base part 651. When the user releases the manual operation lever, the lock claw 721 moves from the release position to the lock position under the urging force of the biasing member 734. Thus, the rotation lock device 654 can be switched between a locked state and a released state by a user's manual operation.

The rotation lock device 654 includes a lock release actuator 751 that moves the lock claw 721 from the lock position to the release position. The lock release actuator 751 includes an electric motor 752, a speed reduction mechanism 753 that transmits the driving force of the electric motor 752 at a reduced rotational speed, and an arm 754 provided on the output shaft of the speed reduction mechanism 753. The arm 754 engages the lock claw 721. One of the arm tip portions 721F of the lock claw 721 is provided with a contact portion 721G that projects downward. The arm 754 moves the lock claw 721 from the lock position to the release position by pressing the contact portion 721G.

The electric motor 752 and the speed reduction mechanism 753 are preferably supported by at least one of the holder 722 and the base plate 656. When the electric motor 752 is driven by electric power being supplied to the electric motor 752, the arm 754 rotates against the urging force of the biasing member 734, and the arm 754 moves the lock claw 721 from the lock position to the release position. When the electric motor 752 is stopped due to the ceasing of power supply to the electric motor 752, the lock claw 721 is moved from the release position to the lock position under the urging force of the biasing member 734. At this time, the arm 754 and the electric motor 752 are rotated by being pushed by the contact portion 721G.

When the lock claw 721 is moved from the lock position to the release position by the control cable 741, the lock claw 721 is released from the arm 754, so that the lock release actuator 751 does not act as resistance.

As shown in FIGS. 27 and 32, a reinforcing plate 755 is connected to a part of the upper surface of the rotatable plate 671 corresponding to the first lock hole 732A. The reinforcing plate 755 is preferably welded to the rotatable plate 671. The reinforcing plate 755 has a surface facing vertically, and extends in the circumferential direction about the axis A2. The thickness of the reinforcing plate 755 is greater than the thickness of the rotatable plate 671. As a result, the reinforcing plate 755 increases the section modulus and the second moment of inertia of the part of the rotatable plate 671 adjacent to the first lock hole 732A.

A through hole 755A opposing the first lock hole 732A is formed in the reinforcing plate 755. The circumferential ends of the through hole 755A with respect to the axis A2 are positioned between two ends of the first lock hole 732A. More specifically, along the circumferential direction centered on the axis A2, the through hole 755A is shorter than the first lock hole 732A. The width of the through hole 755A in the radial direction with respect to the axis A2 is preferably equal to the width of the first lock hole 732A in the radial direction with respect to the axis A2.

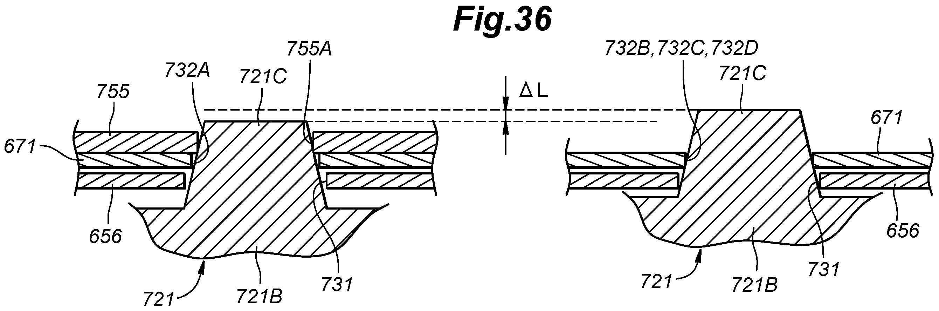

As shown in FIG. 36, the claw part 721C has a tapered shape whose width becomes narrower toward the tip. This allows the claw part 721C to easily fit into the lock hole 732. Further, when the claw part 721C enters the first lock hole 732A, the claw part 721C abuts the both circumferential ends the through hole 755A with respect to the axis A2. At this time, the claw part 721C does not come into contact with the two circumferential ends of the first lock hole 732A with respect to the axis A2. When the rotatable plate 671 is at the reference rotational position, or when the seat main body 603 faces forward, the lock claw 721 engages with the through hole 755A of the reinforcing plate 755 so that the seat main body 603 is particularly firmly restricted from rotating when facing forward. As shown in the right diagram of FIG. 36, since the reinforcing plate 755 is not provided in any of the second to fourth lock holes 732B to 732D, the insertion depth of the claw part 721C into the second to fourth lock holes 732B to 732D is comparatively great. In other embodiments, the reinforcing plate 755 may also be provided with the second to fourth lock holes 732B to 732D.

As shown in FIGS. 27, 37, and 38, a plurality of base-side peeling suppression units 761 are provided on the upper surfaces of the front and rear cross members 657. The base-side peeling suppression units 761 may be arranged at equal intervals in the circumferential direction centered on the axis A2. In this embodiment, the base-side peeling suppression units 761 are provided at the left and right end portions 657A of the front cross member 657 and the left and right end portions 657A of the rear cross member 657. The four base-side peeling suppression units 761 are thus arranged at 90 degree intervals around the axis A2.

Each base-side peeling suppression unit 761 includes a bottom plate 762 connected to the corresponding cross member 657, a first base-side hook 763 and a second base-side hook 764 provided on the bottom plate 762, a roller support wall provided on the bottom plate 762, and a roller 766 rotatably supported by the roller support wall 765.

The bottom plate 762 extends along the upper surface of the end portion 657A, and is connected to the end portion 657A by welding, bolting, or the like. The bottom plate 762 extends in the circumferential direction centered on the axis A2. The first base-side hook 763 is provided along the outer peripheral edge of the bottom plate 762 and extends in the circumferential direction centered on the axis A2. The first base-side hook 763 projects upward from the bottom plate 762 and opens downward.

The roller support wall 765 extends along the inner peripheral edge of the bottom plate 762 in the circumferential direction centered on the axis A2. The circumferential ends of the roller support wall 765 may be provided with a pair of reinforcing walls 767, respectively, that are orthogonal to the roller support wall 765 and the bottom plate 762 and connected to the roller support wall 765 and the bottom plate 762. The bottom plate 762, the first base-side hook 763, the roller support wall 765, and the reinforcing walls 767 may be formed by stamp forming a continuous piece of sheet metal.

A roller shaft 771 is connected to the roller support wall 765 and extends radially outward with respect to the axis A2. A roller 766 is rotatably supported on the roller shaft 771. An enlarged head 773 having a larger diameter than the roller shaft 771 is provided at the end of the roller shaft 771 remote from the roller support wall 765. A biasing member 775 is provided between the enlarged head 773 and the roller 766 to urge the roller 766 in the radially inward direction with respect to the axis A2. The biasing member 775 is preferably a wave washer or a disc spring.

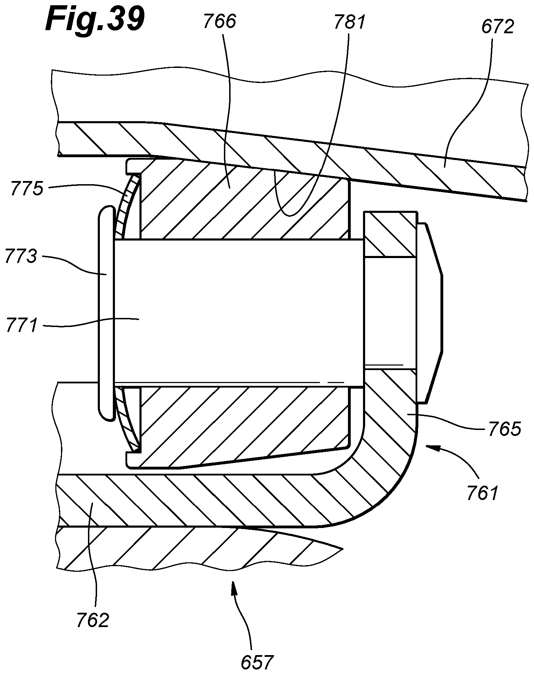

As shown in FIG. 39, the roller 766 is a tapered roller whose outer diameter increases toward the radially outer side. Each roller 766 is in contact with the lower surface of the fixing bracket 672. The rollers 766 are interposed between the fixing bracket 672 and the front cross member 657 and the rear cross member 657 in the vertical direction. As shown in FIG. 27, the rollers 766 are arranged on an imaginary circle C2 centered on the axis A2. The imaginary circle C2 is positioned such that the entirety of the imaginary circle C2 overlaps with the fixing bracket 672 when viewed from the direction extending along the axis A2. Thereby, even if the rotatable plate 671 rotates with respect to the base plate 656, the rollers 766 can always keep in contact with the fixing bracket 672.

As shown in FIG. 39, an annular contact surface 781 centered on the axis A2 is formed on the lower surface of the fixing bracket 672. Each roller 766 contacts the contact surface 781. The contact surface 781 is slanted downward in the radially inward direction with respect to the axis A2.

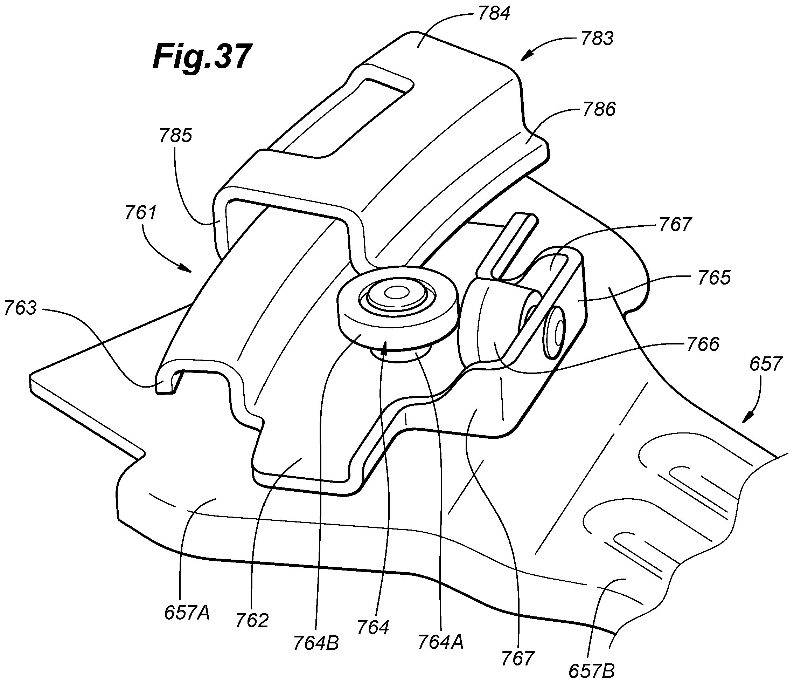

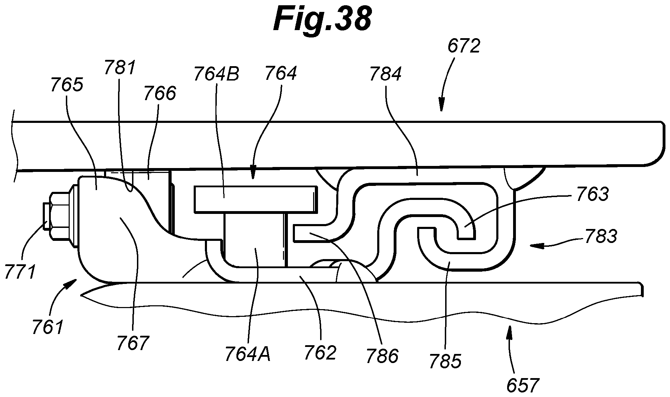

As shown in FIGS. 37 and 38, the second base hook 764 is connected to the upper surface of the bottom plate 762. The second base-side hook 764 is positioned between the first base-side hook 763 and the roller 766 in the radial direction centered on the axis A2. The second base hook 764 includes a stem portion 764A extending upward from the bottom plate 762, and a head portion 764B that is provided at the upper end of the stem portion 764A and is wider than the stem portion 764A in the radial direction centered on the axis A2.

As shown in FIGS. 37 and 38, a plurality of rotatable-side peeling suppression units 783 are provided on the lower surface of the fixing bracket 672. The rotatable-side peeling suppression units 783 are preferably arranged at equal intervals in the circumferential direction centered on the axis A2. **In** this embodiment, the rotatable-side peeling suppression units 783 are provided at four locations or at the front left part, front right part, rear left part, and rear right part of the fixing bracket 672. The four rotatable-side peeling suppression units 783 are arranged on an imaginary circle centered on the axis A2, and spaced apart from each other by 90 degrees. Each rotatable-side peeling suppression unit 783 has an upper plate 784 connected to the lower surface of the fixing bracket 672, a rotatable-side hook 785 projecting downward from the upper plate 784, and a locking piece 786.

The upper plate 784 extends along the lower surface of the fixing bracket 672, and is connected to the lower surface of the fixing bracket 672 by welding, bolting, or the like. The upper plate 784 extends in the circumferential direction centered on the axis A2. The rotatable-side hook 785 extends along the outer peripheral edge of the upper plate 784 in the circumferential direction centering on the axis A2. The rotatable-side hook 785 projects downward from the upper plate 784 and opens upward.

The locking piece 786 extends along the inner peripheral edge of the upper plate 784 in the circumferential direction centered on the axis A2. The locking piece 786 extends downward from the inner peripheral edge of the upper plate 784, and then is bent and extends radially inward about the axis A2.

The rotational position of the rotatable part 652 when the seat cushion 611 faces the front of the vehicle is defined as a reference rotational position. When the rotatable part 652 is at the reference rotational position, the first base-side hook 763 of each base-side peeling suppression unit 761 vertically opposes the rotatable-side hook 785 of the corresponding rotatable-side peeling suppression unit 783 with a gap defined therebetween. Further, the second base-side hook 764 of each base-side peeling suppression unit 761 vertically opposes the locking piece 786 of the corresponding rotatable-side peeling suppression unit 783 with a gap defined therebetween. The distance between the first base-side hook 763 and the rotatable-side hook 785 is smaller than the distance between the second base-side hook 764 and the locking piece 786. As a result, when a load is applied to the seat main body 603, the first base-side hook 763 of each base-side peeling suppression unit 761 engages with the rotatable-side hook 785 of the corresponding rotatable-side peeling suppression unit 783, and the base part 651 is prevented from being peeled away from the rotatable part 652. Further, when a further load is applied to the seat main body 603, the second base-side hooks 764 and the locking pieces 786 engage with each other so that separation of the rotatable part 652 from the base part 651 is suppressed.

Even when the rotatable part 652 is rotated 90 degrees (+90 degrees) to the right, 90 degrees (-90 degrees) to the left, or 180 degrees (-180 degrees) to the left from the reference rotational position, the first base-side hook 763 of each base-side peeling suppression unit 761 and the rotatable-side hook 785 of the corresponding rotatable-side peeling suppression unit 783 oppose each other, and each second base-side hook 764 opposes the corresponding locking piece 786.

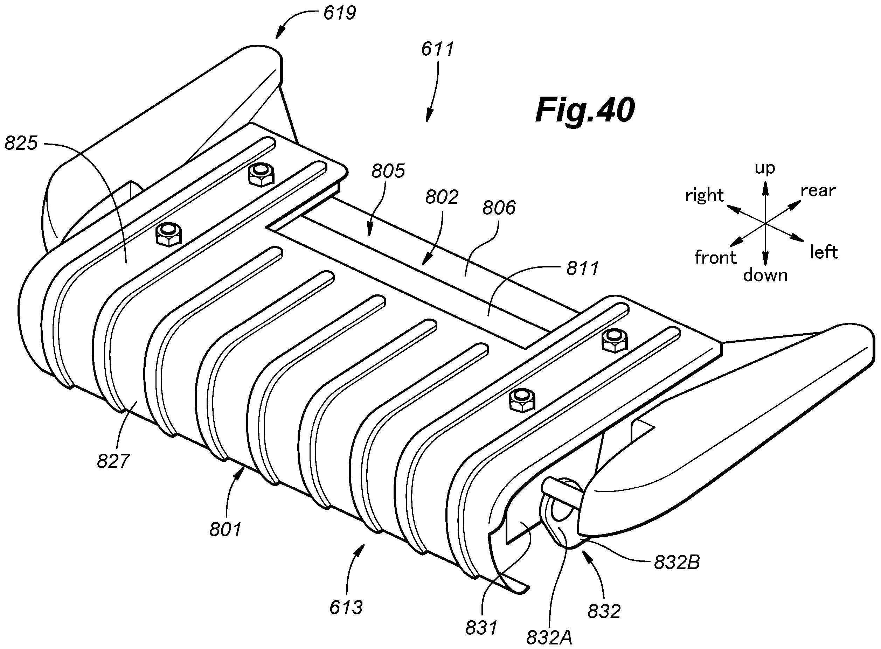

Next, the expansion/retraction device 613 will be described in the following. As shown in FIGS. 26 and 40, the expansion/retraction device 613 is provided on the front member 619 and expands and retracts in the fore and aft direction. The expansion/retraction device 613 includes a movable member 801 supported by the front member 619 so as to be movable in the fore and aft direction, and an expansion/retraction actuator 802 that moves the movable member 801 in the fore and aft direction with respect to the front member 619. The movable member 801 is movable between a protruding position in which it protrudes forward relative to the front member 619 and a retracted position in which it is retracted rearward from the protruding position.

The front member 619 is formed of sheet metal, and has a major surface facing vertically. The front member 619 extends in the lateral direction and has a certain width in the fore and aft direction. A laterally central part of the front member 619 is provided with a groove portion 805 that is recessed downward and extends in the fore and aft direction. The groove portion 805 is formed by a bottom wall and a pair of side walls provided on either side of the bottom wall. The groove portion 805 opens at the front end of the front member 619. The left and right side walls extend downward from the laterally inner ends of the left and right base parts. The left and right side walls are formed into plate shapes facing in the lateral direction.

The movable member 801 is preferably supported by the front member 619 via a guide rail so as to be movable in the fore and aft direction. The expansion/retraction actuator 802 is positioned inside the groove portion 805. The expansion/retraction actuator 802 includes a casing 811 positioned in the groove portion 805, a drive member 812 positioned inside the casing 811, and a pair of airbags 813 positioned on an expanding side and a retracting side of the drive member 812, and are configured to inflate when supplied with compressed air.

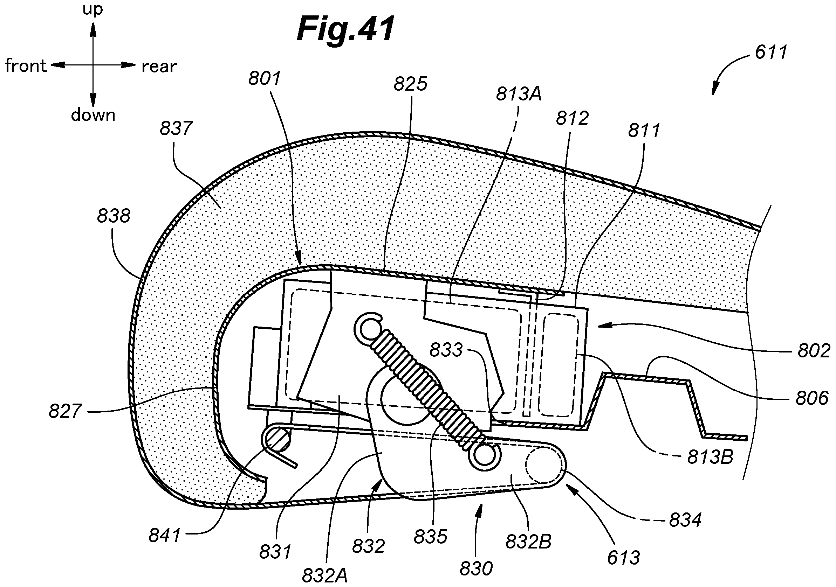

The casing 811 is formed into a box shape and is fixed to the upper surface of the bottom wall. As shown in FIGS. 41 to 43, the drive member 812 is formed into a plate shape having a major surface facing in the fore and aft direction, and extends laterally inside the casing 811. The airbags 813 include a front airbag 813A interposed between the front surface of the drive member 812 and the front wall of the casing 811, and a rear airbag 813B interposed between the rear surface of the drive member 812 and the rear wall of the casing 811.

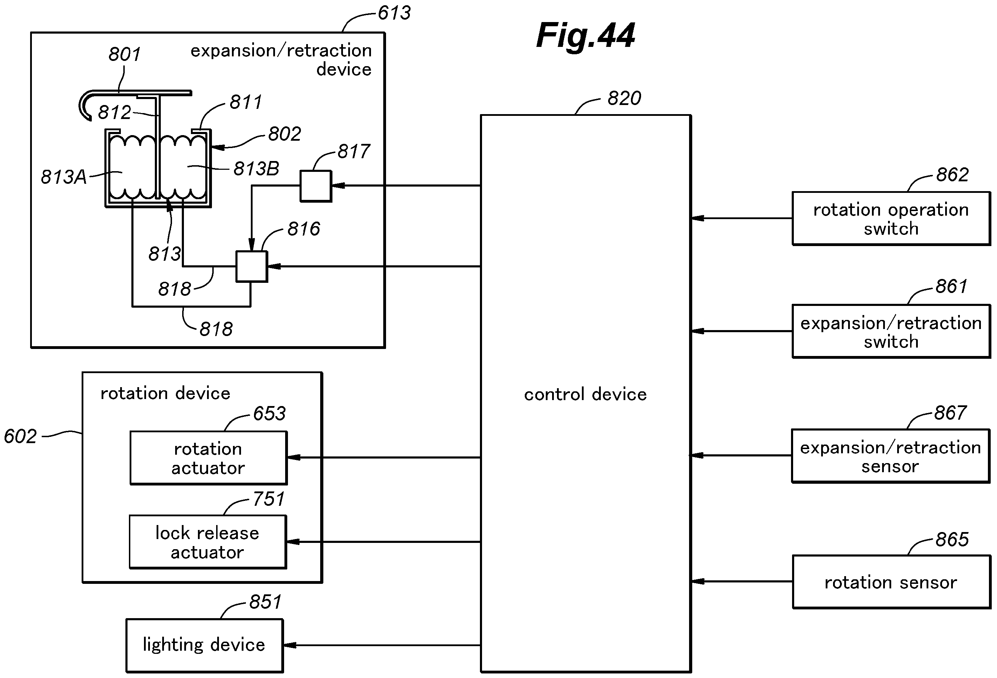

As shown in FIG. 44, the front airbag 813A and the rear airbag 813B are connected to a compressor 817 that generates compressed air via a control valve 816. The control valve 816 has an outlet port. The control valve 816 can take an expanding mode for connecting the front airbag 813A to the compressor 817 and the rear airbag 813B to the outlet port, a retracting mode for connecting the rear airbag 813B to the compressor 817 and the front airbag 813A to the outlet port, and a hold mode for connecting the front airbag 813A and the rear airbag 813B neither to the outlet port or the compressor 817. The control valve 816 and the compressor 817 are controlled by a control device 820, which will be described later.

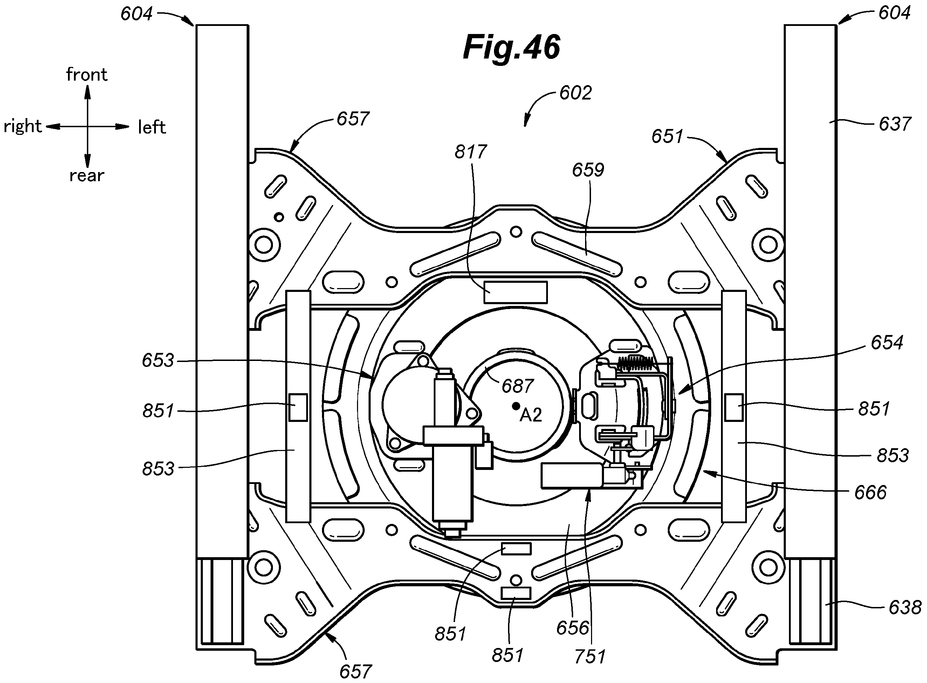

The control valve 816 may be connected to the compressor 817, the front airbag 813A, and the rear airbag 813B preferably by a plurality of tubes 818 through which compressed air passes. The control valve 816 and the compressor 817 are preferably provided on the floor 605. In this case, the tubes 818 connecting the control valve 816 to the front airbag 813A and the rear airbag 813B preferably pass through the support tube 687 of the rotation device 602. Further, the compressor 817 may be provided on the floor 605 and the control valve 816 may be provided on the lower surface of the seat cushion 611 or the upper surface of the fixing bracket 672. In this case, the tubes 818 connecting the compressor 817 to the control valve 816 preferably pass through the support tube 687 of the rotation device 602. According to this aspect of the present invention, the compressor 817 can be placed on the floor 605. Further, since the tubes 818 pass near the axis A2 of the rotation device 602, the tubes 818 are prevented from being shaken even when the rotation device 602 rotates. As shown in FIG. 46, the compressor 817 may be provided on the lower surface of the base plate 656.

As shown in FIG. 41, the movable member 801 is provided with a support plate portion 825 that is placed above the expansion/retraction actuator 802 and connected to the expansion/retraction actuator 802. The support plate portion 825 is formed into a plate shape having a vertically facing surface. The support plate portion 825 is slidably mounted on the upper surface of the upper wall of the casing 811 of the expansion/retraction actuator 802. The drive member 812 passes through a slot elongated in the fore and aft direction and formed in the upper wall of the casing 811, projects upward, and is connected to the support plate portion 825.

As shown in FIG. 40, the movable member 801 is provided with a vertical plate portion 827 extending downward from the protruding end of the support plate portion 825 to a protruding side of the front member 619. In other words, the vertical plate portion 827 extends downward from the front end of the support plate portion 825 along the front end of the front member 619. The vertical plate portion 827 is curved in an arcuate shape with the convex side thereof facing forward in side view. The support plate portion 825 and the vertical plate portion 827 are preferably formed by stamp forming sheet metal. It is preferable that reinforcing ribs are provided on the support plate portion 825 and the vertical plate portion 827.

When the compressor 817 is driven and the control valve 816 supplies compressed air to the front airbag 813A and discharges compressed air from the rear airbag 813B, the front airbag 813A receives the supply of compressed air and expands while the rear airbag 813B discharges air and contracts. As a result, the drive member 812 and the movable member 801 connected to the drive member 812 move in a retracting direction. When the compressor 817 is driven and the control valve 816 supplies compressed air to the rear airbag 813B and discharges compressed air from the front airbag 813A, the rear airbag 813B receives the supply of compressed air and expands while the front airbag 813A discharges air and contracts. As a result, the drive member 812 and the movable member 801 connected to the drive member 812 move in the protruding direction. When the compressor 817 is stopped and the control valve 816 disconnects the front airbag 813A and the rear airbag 813B, compressed air is maintained in the front airbag 813A and the rear airbag 813B. As a result, the positions of the drive member 812 and the movable member 801 connected to the drive member 812 are maintained.

As shown in FIG. 41, the expansion/retraction device 613 is provided with a skin material winding mechanism 830. The skin material winding mechanism 830 includes a pair of brackets 831 extending downward on either side of the lower surface of the support plate portion 825 of the movable member 801, a pair of link arms 832 rotatably supported by the corresponding brackets 831, a support shaft 834 spanned between the front ends of the link arms 832, and a pair of springs 835 that urge the respective link arms 832 to the initial position.

The left and right brackets 831 are located between the casing 811 and the side wall of the groove portion 805. The upper end of each link arm 832 is supported by the corresponding bracket 831 so as to be rotatable about a rotational axis extending in the lateral direction. A slit 833 is formed in the bottom wall of the groove portion 805, penetrating vertically and elongated in the lateral direction. The upper portion 832A of each link arm 832 passes through the slit 833 and projects under the groove portion 805. A lower portion 832B of each link arm 832 extends rearwardly relative to the upper portion 832A thereof. The lower portion 832B and the support shaft 834 of each link arm 832 are positioned below the groove portion 805.

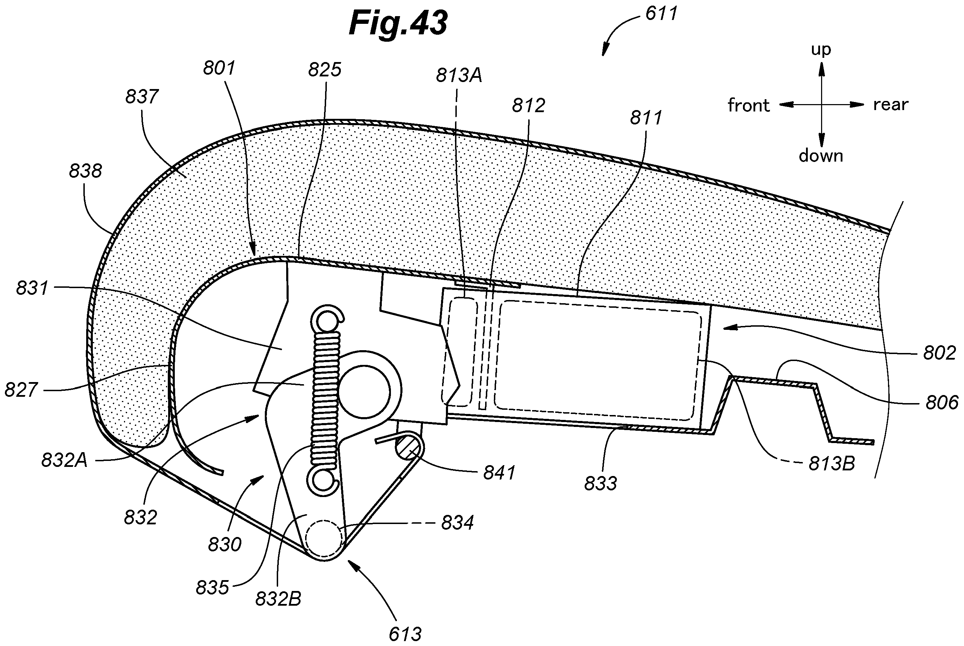

As shown in FIGS. 41 and 43, each link arm 832 rotates between a wound-up position and a paid-out position. As shown in FIG. 41, when the link arm 832 is in the wound-up position, the upper portion 832A extends downward from the rotational axis, and the lower portion 832B extends rearward from the lower end of the upper portion 832A. At this time, the support shaft 834 is located at the rear of the rotational axis. When the link arm 832 is in the paid-out position, the upper portion 832A extends forward and downward from the rotational axis, and the lower portion 832B extends downwardly from the lower end of the upper portion 832A. At this time, the support shaft 834 is located below the rotational axis. As shown in FIG. 43, as the link arm 832 rotate from the wound-up position to the paid-out position, the support shaft 834 moves forward.

The part of the pad 837 forming the front part of the seat cushion 611 extends past the support plate portion 825 of the movable member 801 and to the front of the vertical plate portion 827. The part of the skin material 838 forming the front part of the seat cushion 611 is provided along the outer surface of the pad 837. The end part of the skin material 838 extends rearward from the lower end of the vertical plate portion 827, is wrapped around the support shaft 834, and extends forward from the support shaft 834 to engage a skin locking portion 841 provided at the front end of the bottom wall. It is preferable that the edge of the skin material 838 is provided with a hook that is locked to the skin locking portion 841. The skin material 838 passes under, behind, and above the support shaft 834 and extends in a loop.

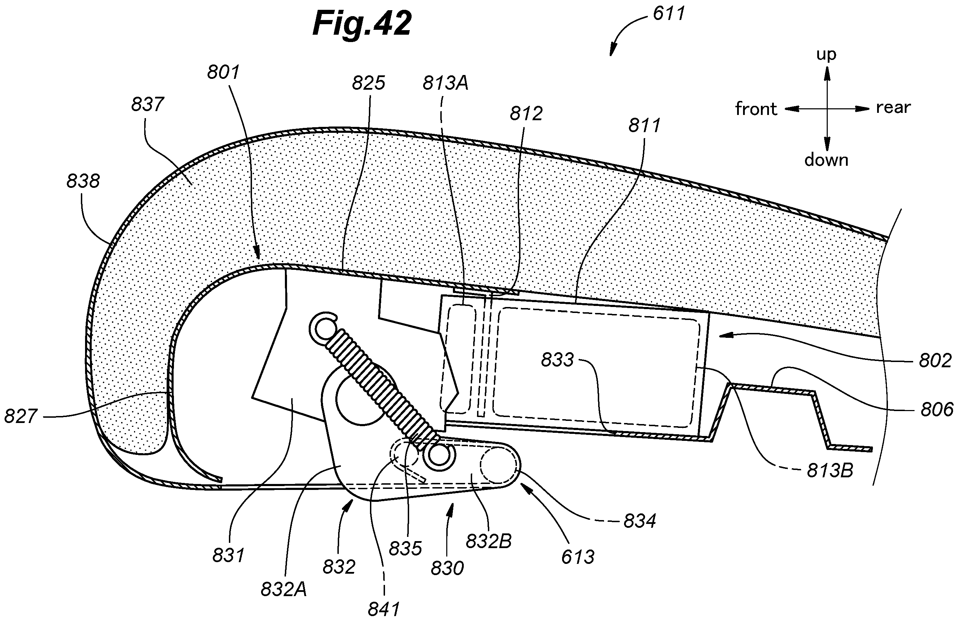

As shown in FIGS. 41 and 42, when the movable member 801 moves from the retracted position to the expanded position, the support shaft 834 moves to the protruding side (forward) together with the movable member 801. Furthermore, as shown in FIG. 43, as the support shaft 834 is pulled by the skin material 838, the link arms 832 rotate toward the paid-out position against the biasing force of the spring 835, so that the support shaft 834 is further moved to the protruding side (forward). This shortens the distance between the support shaft 834 and the skin locking portion 841. As a result, the skin material 838 is sent out from the support shaft 834 toward the movable member 801. Thereby, the tension of the skin material 838 is adjusted. Thus, the movable member 801 can smoothly move to the protruding side without being pulled by the skin material 838. Conversely, when the movable member 801 moves from the protruding position to the retracted position, the support shaft 834 moves to the retracted side (rearward) together with the movable member 801. Further, since the link arms rotate toward the winding position under the biasing force of the spring 835, the support shaft 834 further moves toward the retracted side (rearward). This increases the distance between the support shaft 834 and the skin locking portion 841. As a result, the skin material 838 is drawn from the support shaft 834 toward the skin locking portion 841. Thereby, the tension of the skin material 838 is adjusted, and slackening of the skin material 838 is suppressed.

As shown in FIG. 44, the rotation actuator 653 of the rotation device 602, the lock release actuator 751 of the rotation lock device 654, and the expansion/retraction actuator 802 of the expansion/retraction device 613 are controlled by a control device 820. The control device 820 is an electronic control device, and is an arithmetic processing unit including a microprocessor (MPU), nonvolatile memory, volatile memory, and an interface. The control device 820 realizes various applications by having a microprocessor execute programs stored in the nonvolatile memory. The control device 820 is preferably provided in the vehicle in which the seat main body 603 is provided.

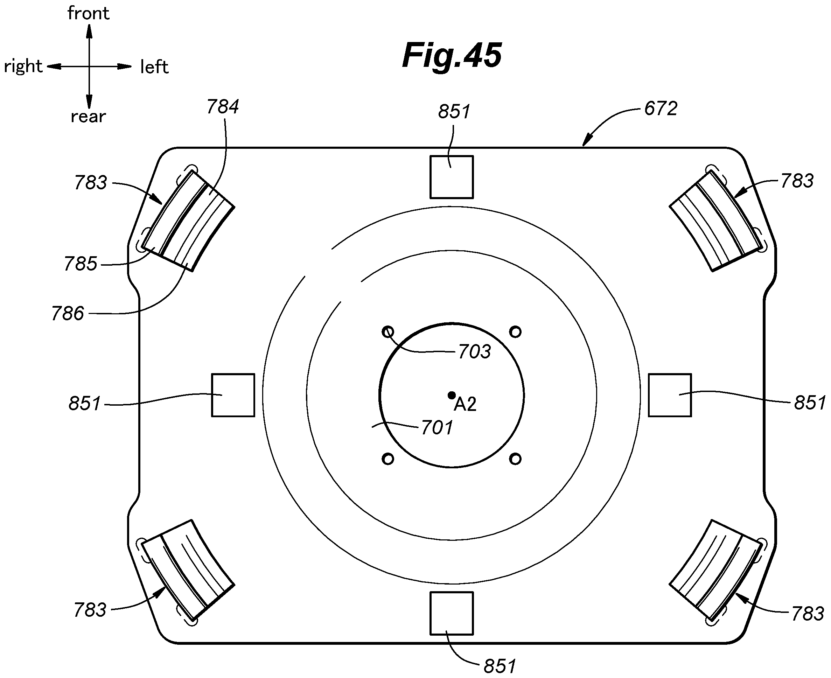

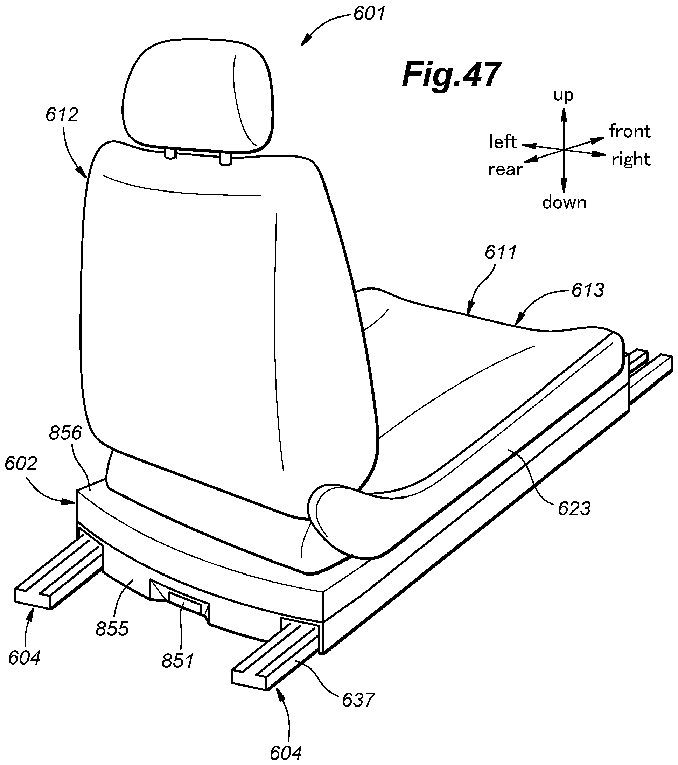

Further, the control device 820 may control the light emission state of a plurality of lighting devices 851. As shown in FIG. 45, the lighting devices 851 may be provided, for example, on the lower surface of the fixing bracket 672. The lighting devices 851 may be arranged on the lower surface of the fixing bracket 672 along the circumferential direction with respect to the axis A2. Further, as shown in FIG. 46, the front and rear cross members 657 may be connected to a pair of connecting members 853 that extend in the fore and aft direction on either side, and a lighting device 851 may be provided on the lower surface of each connecting member 853. Further, as shown in FIG. 47, a lower cover 855 and an upper cover 856 may be provided around the rotation device 602, and a lighting device 851 may be provided on at least one of the lower cover 855 and the upper cover 856. The lower cover 855 is preferably positioned around the base plate 656, the front and rear cross members 657, and the left and right upper rails 638. The upper cover 856 is preferably positioned around the rotatable plate 671 and the fixing bracket 672. The lower cover 855 and the upper cover 856 may be configured to be relatively rotatable about the axis A2. The lighting device 851 may be provided at the lower end of the lower cover 855, for example.

As shown in FIG. 44, the control device 820 is connected to an expansion/retraction operation switch 861 and a rotation operation switch 862 for the user to operate the car seat device 601. The expansion/retraction operation switch 861 has an expansion button and a retraction button, and outputs an expansion/retraction command to the control device 820 according to the operating state of the expansion button and retraction button. The expansion/retraction command includes an expansion command and a retraction command. The rotation operation switch 862 has a left rotation button and a right rotation button, and outputs a rotation command to the control device 820 according to the operation state of the left rotation button and the right rotation button. The rotation command includes a left rotation command and a right rotation command.

A rotation sensor 865 that detects the rotational state of the rotation device 602 and an expansion/retraction sensor 867 that detects the expansion/retraction position of the expansion/retraction device 613 are connected to the control device 820. The rotation sensor 865 may be a per se known sensor such as a rotary encoder that detects the rotational angle of the electric motor 711 of the rotation actuator 653 or a proximity sensor that detects the relative position between the front and rear cross members 657 and the fixing bracket 672. The expansion/retraction sensor 867 may be a per se known sensor such as a stroke sensor or a proximity sensor that detects the position of the movable member 801 with respect to the front member 619.

The control device 820 executes expansion/retraction control to expand/retract the expansion/retraction device 613 and rotation control to rotate the rotation device 602.

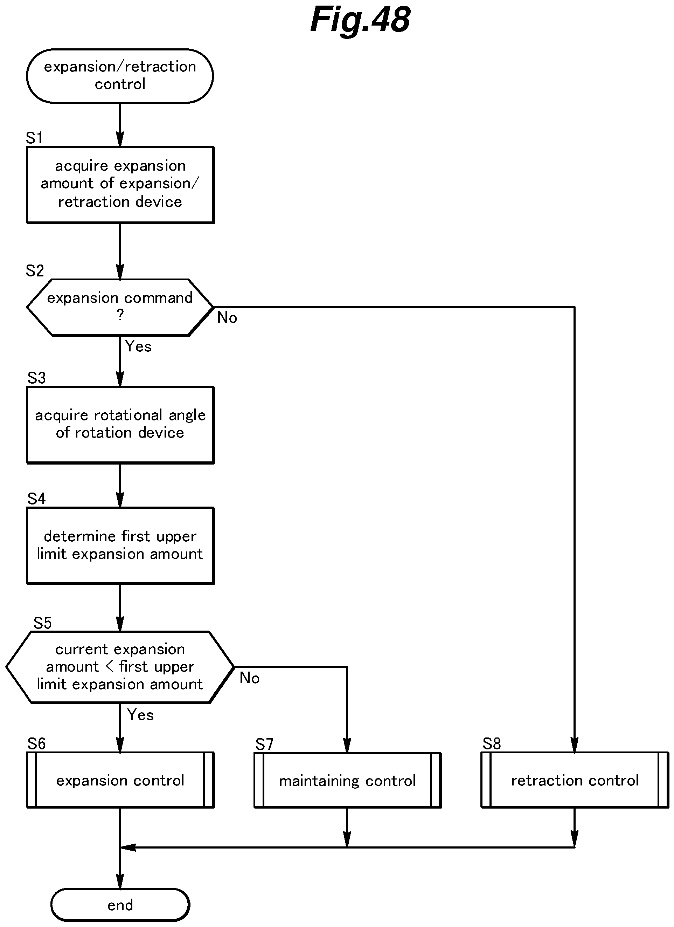

The control device 820 controls the expansion/retraction device 613 based on the expansion and retraction control process shown in FIG. 48. Upon receiving an expansion/retraction command from the expansion/retraction operation switch 861, the control device 820 initiates the expansion/retraction control. The control device 820 first obtains the current expansion amount of the expansion/retraction device 613 based on the signal from the expansion/retraction sensor 867 (S1). The expansion amount of the expansion/retraction device 613 is 0 when the movable member 801 is in the retracted position, and increases in value as the movable member 801 moves toward the expanding side. Next, it is determined whether the expansion/retraction command is an expansion command (S2).

If the extension/retraction command is an expansion command (the determination result in S2 is Yes), the control device 820 obtains the current rotational angle of the rotation device 602 based on the signal from the rotation sensor 865 (S3). Next, the control device 820 determines the first upper limit expansion amount of the expansion/retraction device 613 based on the rotational angle of the rotation device 602 (S4). The control device 820 may determine the first upper limit expansion amount based on the rotational angle by referring to a first upper limit expansion map in which the relationship between the rotational angle and the first upper limit expansion amount is defined. The first upper limit expansion amount is set so that when the rotation device 602 is at each rotational angle, the expansion/retraction device 613 does not interfere with structures such as the center console and the door that are present around the car seat device 601.

Next, the control device 820 determines whether the current amount of protrusion of the expansion/retraction device 613 is less than the first upper limit amount of protrusion (S5). If the current expansion amount of the expansion/retraction device 613 is less than the first upper limit expansion amount (the determination result in S5 is Yes), the control device 820 executes the expansion control of the compressor 817 and the control valve 816 so as to cause the expansion/retraction device 613 to expand by a predetermined amount (S6). The expansion control drives the compressor 817, supplies compressed air to the rear airbag 813B, and discharges the compressed air from the front airbag 813A. As a result, the movable member 801 moves to the expansion side, and the expansion/retraction device 613 expands.

If the current expansion amount of the expansion/retraction device 613 is not less than the first upper limit expansion amount (the determination result in S5 is No), the control device 820 executes maintaining control of the compressor 817 and the control valve 816 in order to maintain the expanded state of the expansion/retraction device 613 (S7). By the maintaining control, the compressor 817 is maintained in a deactivated state, and the control valve 816 cuts off the communication with the front airbag 813A and the rear airbag 813B. As a result, the sizes of the front airbag 813A and the rear airbag 813B are maintained, and the position of the movable member 801 is maintained.

When the expansion/retraction command is a retraction command (the determination result in S2 is No), the control device 820 executes retraction control of the compressor 817 and the control valve 816 in order to retract the expansion/retraction device 613 by a predetermined amount (S8). By the retraction control, the compressor 817 is driven, compressed air is supplied to the front airbag 813A, and compressed air is discharged from the rear airbag 813B. As a result, the movable member 801 moves in the retracting direction, and the expansion/retraction device 613 retracts.

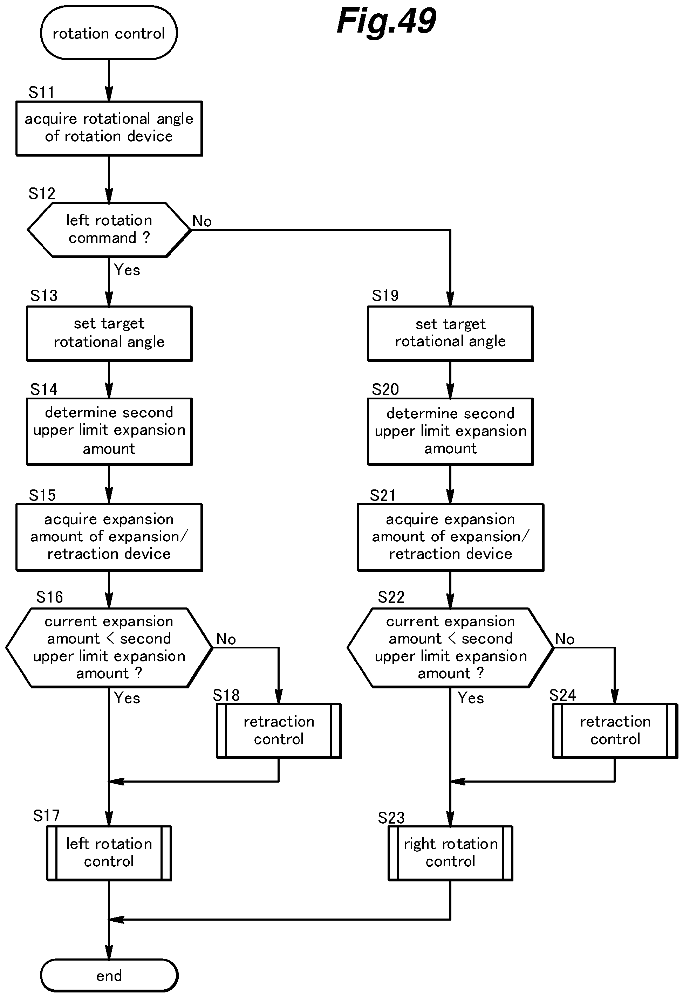

The control device 820 controls the rotation device 602 based on the rotation control process shown in FIG. 49. The control device 820 starts rotation control upon receiving a rotation command from the rotation operation switch 862. The control device 820 first obtains the current rotational angle of the rotation device 602 based on the signal from the rotation sensor 865 (S11). Next, based on the rotation command from the rotation operation switch 862, it is determined whether the rotation command is a left rotation command (S12).

If the rotation command is a left rotation command (the determination result in S12 is Yes), the control device 820 sets the target rotational angle by adding -90 degrees to the current rotational angle (S13).

Next, the control device 820 sets the second upper limit expansion amount of the expansion/retraction device 613 based on the current rotational angle and the target rotational angle (S14). The second upper limit expansion amount may be set for each of the following ranges: 0 to 90 degrees, 90 to 180 degrees, 0 to -90 degrees, and -90 to - 180 degrees. The second upper limit expansion amount is preferably set to be equal to or less than the minimum value of the first upper limit expansion amount in each rotational angle range. The relationship between the current rotational angle, the target rotational angle, and the second upper limit expansion amount is preferably defined in advance in a map.

Next, the control device 820 obtains the current expansion amount of the expansion/retraction device 613 based on the signal from the expansion/retraction sensor 867 (S15). Next, the control device 820 determines whether the current expansion amount of the expansion/retraction device 613 is equal to or less than the second upper limit amount of protrusion (S16).

If the current expansion amount of the expansion/retraction device 613 is equal to or less than the second upper limit expansion amount (determination result in S16 is Yes), the control device 820 executes counterclockwise rotation control until the current rotational angle reaches the target rotational angle (S17).

If the current expansion amount of the expansion/retraction device 613 is greater than the second upper limit expansion amount (the determination result in S16 is No), the control device 820 executes the retraction control until the current expansion amount of the expansion/retraction device 613 reaches the second upper limit expansion amount. (S18). Once the current expansion amount of the expansion/retraction device 613 reaches the second upper limit expansion amount, the control device 820 executes left rotation control until the current rotational angle reaches the target rotational angle (S17).

If the rotation command is a clockwise rotation command (the determination result in S12 is No), the control device 820 sets the target rotational angle by adding 90 degrees to the current rotational angle (S19).

Next, the control device 820 sets the second upper limit expansion amount of the expansion/retraction device 613 based on the current rotational angle and the target rotational angle (S20).

Next, the control device 820 obtains the current expansion amount of the expansion/retraction device 613 based on the signal from the expansion/retraction sensor 867 (S21). Next, the control device 820 determines whether the current expansion amount of the expansion/retraction device 613 is equal to or less than the second upper limit amount of protrusion (S22).

If the current expansion amount of the expansion/retraction device 613 is equal to or less than the second upper limit expansion amount (determination result in S22 is Yes), the control device 820 executes clockwise rotation control until the current rotational angle reaches the target rotational angle (S23).

If the current expansion amount of the expansion/retraction device 613 is greater than the second upper limit expansion amount (the determination result in S22 is No), the control device 820 executes the retraction control until the current expansion amount of the expansion/retraction device 613 reaches the second upper limit expansion amount. (S24). Once the current expansion amount of the expansion/retraction device 613 reaches the second upper limit expansion amount, the control device 820 executes clockwise rotation control until the current rotational angle reaches the target rotational angle (S23).

In the embodiment described above, the control device 820 executes rotation control of the rotation device 602 based on the signal from the rotation operation switch 862, and executes expansion/retraction control of the expansion/retraction device 613 in accordance with the rotation control. According to this aspect, since the control device 820 executes the expansion/retraction control in accordance with the rotation control, it is possible to prevent the expansion/retraction device 613 from interfering with structures inside the vehicle when the rotation device 602 rotates. Thereby, the car seat device 601 can rotate smoothly.

The control device 820 starts rotation control of the rotation device 602 after reducing the horizontal expansion amount of the expansion/retraction device 613 to a preset second upper limit expansion amount or less by the expansion/retraction control. According to this aspect, since the rotation device 602 starts rotating after the expansion/retraction device 613 is retracted, interference between the expansion/retraction device 613 and a structure inside the vehicle can be reliably avoided.

The control device 820 may start the rotation control of the rotation device 602 at the same time as starting the expansion/retraction control for reducing the expansion amount of the expansion/retraction device 613 to a preset second upper limit expansion amount or less. In other words, the control device 820 may start controlling the rotation of the rotation device 602 before the expansion amount of the expansion/retraction device 613 becomes equal to or less than the second upper limit expansion amount. According to this aspect, the rotation device 602 can quickly start rotating. **In** this case, the control device 820 preferably reduces the expansion amount of the expansion/retraction device 613 to the second upper limit expansion amount or less by the expansion/retraction control before the rotation control of the rotation device 602 is completed.

The control device 820 executes the rotation control and the expansion/retraction control such that the expansion amount of the expansion/retraction device 613 is equal to or less than the upper limit expansion amount at each rotational angle based on the map that defines the relationship between the rotational angle of the rotation device 602 and the second upper limit expansion amount of the expansion/retraction device 613. According to this aspect of the present invention, interference between the expansion/retraction device 613 and structures inside the vehicle can be reliably avoided at each rotational angle of the rotation device 602.

The control device 820 may turn on the lighting devices 851 while executing the rotation control. According to this aspect, the lighting devices 851 can alert the user that the seat main body 603 is rotating. Since the lighting device 851 illuminates the floor 605, the user is appropriately alerted.

The present invention is not limited to the above-described embodiments, and can be modified and implemented in a wide range of ways. For example, the control device 820 may start controlling the rotation of the rotation device 602 after the expansion/retraction device 613 is retracted to the most retracted state (initial state) by the expansion/retraction control. Further, the control device 820 may start the rotation control of the rotation device 602 at the same time as starting the expansion/retraction control to retract the expansion/retraction device 613 to the most retracted state (initial state).

Furthermore, the expansion/retraction device 613 may be provided with a proximity sensor that detects the approach state between the expansion/retraction device 613 and a structure inside the vehicle. The control device 820 preferably performs expansion/retraction control based on the signal from the proximity sensor so that the distance between the expansion/retraction device 613 and the structure is kept at a predetermined lower limit or more.

Hereinafter, a car seat according to an embodiment of the present invention as applied to a car seat 1001 will be described in the following with reference to the appended drawings. In the following description, front and rear, left and right, and top and bottom are defined based on the vehicle 1002 in which the seat 1001 is provided.

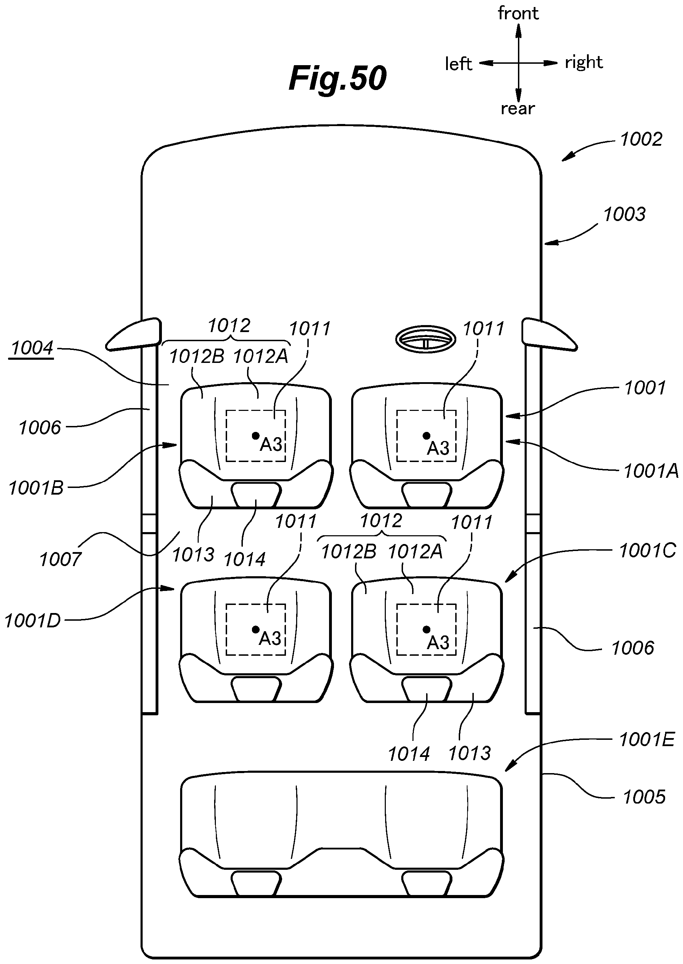

As shown in FIG. 50, the vehicle 1002 includes a vehicle body 1003 and a cabin 1004 defined inside the vehicle body 1003. The vehicle body 1003 may have a per se known configuration including, for example, a frame 1005 of the vehicle 1002 including side sills, and a door 1006 through which a passenger can move into and out of the cabin 1004. The seat 1001 is provided on a floor 1007 that defines the bottom of the cabin 1004. The floor 1007 of the vehicle 1002 is provided with a front row right seat 1001A, a front row left seat 1001B, a middle row right seat 1001C, a middle row left seat 1001D, and a back row seat 1001E. The front row right seat 1001A, the front row left seat 1001B, the middle row right seat 1001C, and the middle row left seat 1001D each consist of a seat 1001 for a single occupant. The back row seat 1001E consists of a seat 1001 for two occupants. The front row right seat 1001A is a driver's seat. The front row right seat 1001A, the front row left seat 1001B, the middle row right seat 1001C, and the middle row left seat 1001D may have the same configuration. The following description of the present embodiment will be directed to the front row left seat 1001B.

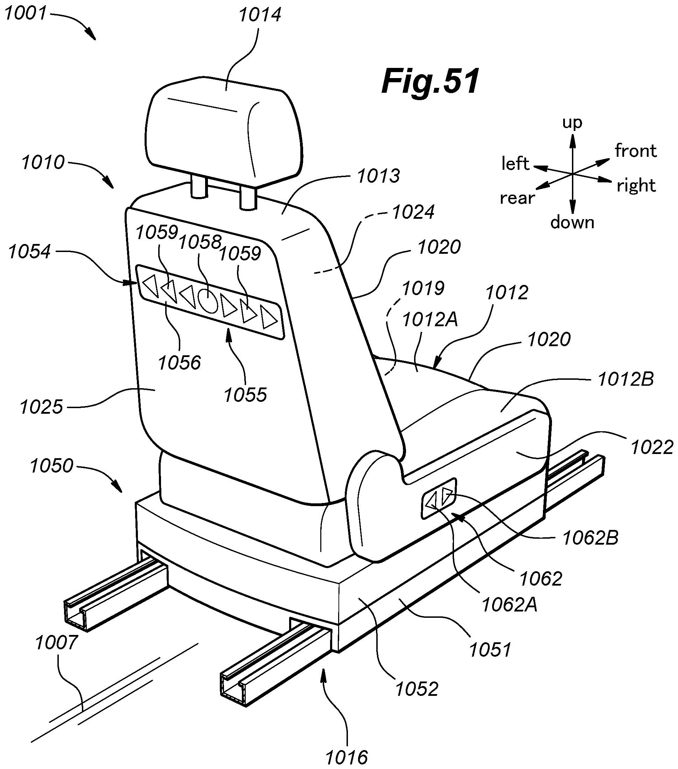

As shown in FIGS. 50 and 51, the seat 1001 includes a seat main body 1010 and a rotation device 1011 that rotatably supports the seat main body 1010 on the floor 1007 about a vertical axis (axis A3). The seat main body 1010 includes a seat cushion 1012 supported by the rotation device 1011 and a seat back 1013 extending upward from a rear part of the seat cushion 1012. The seat main body 1010 further includes a headrest 1014 provided on top of the seat back 1013. The seat main body 1010 has a headrest 1014 connected to the top of the seat back 1013. The seat back 1013 is pivotably supported by the seat cushion 1012.

The seat 1001 further includes a slide device 1016 that supports the seat main body 1010 on the floor 1007 so as to be movable in the fore and aft direction. The slide device 1016 is attached to the floor 1007. The rotation device 1011 is provided on top of the slide device 1016.

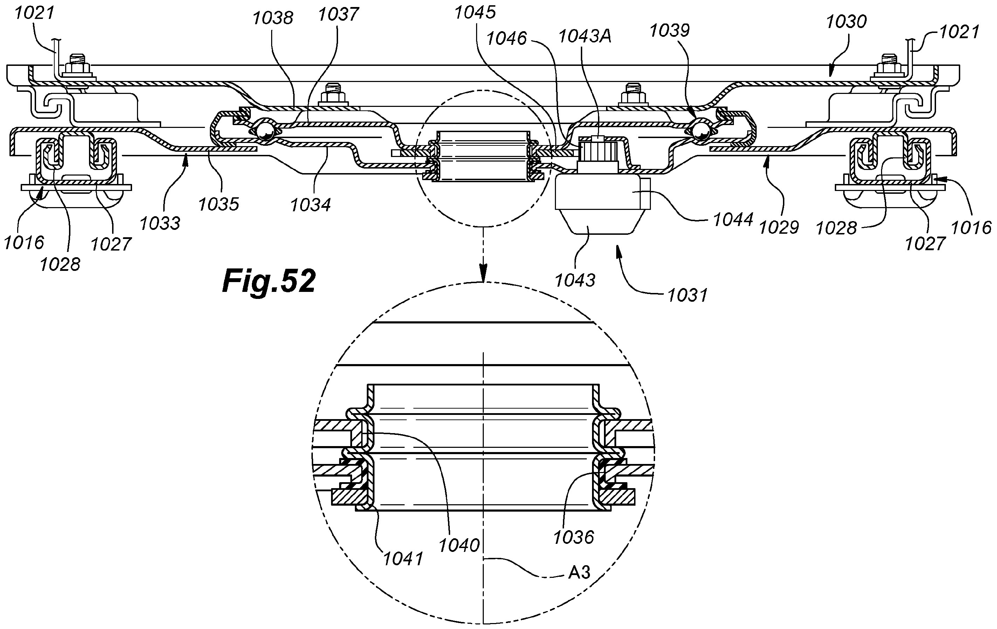

The seat cushion 1012 includes a central portion 1012A and a pair of shoulder portions 1012B that are provided on either side of the central portion 1012A and project upward with respect to the central portion 1012A. The seat cushion 1012 includes, for example, a seat cushion frame forming a skeletal structure, a seat cushion pad 1019 supported by the seat cushion frame, and a skin material 1020 covering the outer surface of the seat cushion pad 1019. The seat cushion frame may have a per se known structure, and may include, for example, a pair of seat cushion side members 1021 (see FIG. 52) located on either side, a front member connected between the front ends of the left and right seat cushion side members 1021, and a rear member connected between the rear ends of the left and right seat cushion side members 1021. The seat cushion 1012 further includes a pair of seat cushion side covers 1022 that cover the left and right seat cushion side members 1021 from either side. The seat cushion side covers 1022 may be made of, for example, a resin material.

The seat back 1013 includes a seat back frame forming a skeletal structure, a seat back pad 1024 supported by the seat back frame, and a skin material 1020 covering the outer surface of the seat back pad 1024. The seat back frame may have a per se known structure, and may include, for example, a pair of seat back side members extending vertically on either side, an upper member connected between the upper ends of the left and right seat back side members, and a lower member connected between the lower ends of the left and right seat back side members.

The seat back 1013 further includes a seat back cover 1025 provided at the rear of the seat back frame. The seat back cover 1025 is attached to the rear side of the seat back frame. The seat back cover 1025 defines the rear outer surface of the seat back 1013. The seat back cover 1025 may be made of, for example, a resin material.

As shown in FIG. 52, the slide device 1016 includes a pair of lower rails 1027 extending in the fore and aft direction on either side, and a pair of upper rails 1028 supported by the respective lower rails 1027 so as to be slidable in the fore and aft direction. The slide device 1016 is, for example, a per se known electric slide device including an electric motor provided on the upper rail 1028, a screw rod rotatably connected to the electric motor, and a screw hole provided on the upper rail 1028 that thread with the screw rod. Each lower rail 1027 is attached to the floor 1007 via a front and a rear foot. Each upper rail 1028 is connected to a rotation device 1011.

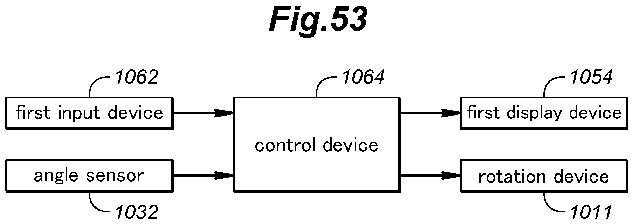

The rotation device 1011 includes a base part 1029 provided on the floor 1007 via the slide device 1016, a rotatable part 1030 provided on the seat cushion 1012 via the seat cushion side members 1021, and an electric actuator 1031 that rotates 1030 the rotatable part relative to the base part 1029. The rotation device 1011 also includes an angle sensor 1032 (see FIG. 53) that detects the angle of the rotatable part 1030 with respect to the base part 1029. The angle sensor 1032 may be, for example, a rotary encoder.

The base part 1029 is provided with a base plate 1033 having a major surface facing vertically and extending laterally. The base plate 1033 includes a disk-shaped center plate 1034 provided at a laterally central part thereof, and a pair of side plates 1035 connected to the left edge and right edge of the center plate 1034, respectively. The base plate 1033 is preferably formed of sheet metal. Each side plate 1035 is fastened to the center plate 1034 with bolts and nuts. In other embodiments, the center plate 1034 and left and right side plates 1035 may be formed of a continuous piece of sheet metal.

A circular first bearing hole 1036 is formed in the center of the center plate 1034 and penetrates in the thickness direction. The first bearing hole 1036 is centered on an axis A3 that extends vertically.

The left end of the base plate 1033 is connected to the left upper rail 1028. The right end of the base plate 1033 is connected to the right upper rail 1028. The base plate 1033 is supported by the slide device 1016 so as to be movable in the fore and aft direction with respect to the floor 1007.

The rotatable part 1030 includes a rotatable plate 1037 rotatably supported on the upper surface of the base plate 1033 and a fixing bracket 1038 that connects the rotatable plate 1037 to the seat cushion 1012. The rotatable plate 1037 and the fixing bracket 1038 are formed of sheet metal. The rotatable plate 1037 and the fixing bracket 1038 are preferably fastened together by using bolts and nuts.

The rotatable plate 1037 is formed into a disk shape having a vertically facing surface. The rotatable plate 1037 is supported on the upper surface of the center plate 1034 via a bearing 1039. The bearing 1039 is formed in an annular shape centered on the axis A3. The bearing 1039 is placed between the upper surface of the outer periphery of the center plate 1034 and the lower surface of the outer periphery of the rotatable plate 1037. The bearing 1039 is preferably a thrust bearing. In this embodiment, the bearing 1039 consists of a ball bearing.

A circular second bearing hole 1040 is passed through the center of the rotatable plate 1037 in the thickness direction. The second bearing hole 1040 is centered on the axis A3. A support tube 1041 is inserted into the first bearing hole 1036 of the center plate 1034 and the second bearing hole 1040 of the rotatable plate 1037.

The fixing bracket 1038 is formed into a plate shape having a vertically facing surface. The fixing bracket 1038 is preferably formed larger than the rotatable plate 1037 when viewed from above. The fixing bracket 1038 faces the left and right side plates 1035 in the vertical direction. The fixing bracket 1038 is connected to the left and right seat cushion side members 1021 with fasteners such as bolts and nuts.

The electric actuator 1031 includes an electric motor 1043. The electric motor 1043 is attached to the lower surface of center plate 1034 via a motor case 1044 thereof. An output shaft 1043A of the electric motor 1043 passes through the center plate 1034 and extends upward.

A gear 1045 centered on the axis A3 is fixed to the rotatable plate 1037. A pinion 1046 that meshes with the gear 1045 is fitted on the output shaft 1043A of the electric actuator 1031. Thereby, when the electric actuator 1031 is driven, the rotatable plate 1037 rotates with respect to the center plate 1034.

As shown in FIG. 51, the seat main body 1010 is provided with a cover 1050 attached to the lower part of the seat cushion 1012 and surrounding the rotation device 1011. The cover 1050 includes a lower cover 1051 and an upper cover 1052. The lower cover 1051 may be connected to the fixing bracket 1038 of the rotatable part 1030. The upper cover 1052 may be connected to the side plates 1035 of the base part 1029. The lower cover 1051 is preferably positioned around the base part 1029 of the rotation device 1011 and the left and right upper rails 1028. The upper cover 1052 is preferably positioned around the rotatable part 1030. The upper cover 1052 is configured to be rotatable with respect to the lower cover 1051 about the axis A3. The lower cover 1051 and the upper cover 1052 may be made of, for example, a resin material.

A first display device 1054 is provided on the seat main body 1010. The first display device 1054 is a device for visually informing the occupant of the state of the seat 1001. The first display device 1054 displays at least one of the rotational direction of the seat main body 1010, the rotational speed of the seat main body 1010, the rotation start timing of the seat main body 1010, and the possibility of collision between the seat main body 1010 and surrounding obstacles during rotation. The first display device 1054 preferably consists of a liquid crystal display or an organic EL display, or a display device having a plurality of light emitting units such as LEDs. In this embodiment, the first display device 1054 includes a plurality of light emitting units 1055 arranged laterally.

The first display device 1054 includes a casing 1056 in which a plurality of light emitting units 1055 are provided. The casing 1056 extends in the lateral direction. The light emitting units 1055 are arranged laterally one next to another on the rear surface of the casing 1056.

The light emitting units 1055 may have a per se known configuration including, for example, a plurality of light sources and a light transmitting unit that transmits light from the light sources. Each of the light sources may have a different emission color. Predetermined characters and symbols are formed on the light transmitting unit. When the light source emits light, the corresponding characters and symbols light up. By combining the emitted light color and characters and symbols, the light emitting units 1055 visually convey the status of the seat 1001 to the occupant.

In this embodiment, seven light emitting units 1055 are provided. Furthermore, each light emitting unit 1055 is configured to emit two different colors. One of the seven light emitting units 1055 has a circular symbol 1058. The remaining six light emitting units 1055 have a triangular symbol 1059. Among the six triangular symbols 1059, three triangular symbols 1059 point to the right. The remaining three triangular symbols 1059 point to the left. The circular symbol 1058 is positioned at the laterally central part of the casing 1056. The three triangular symbols 1059 pointing to the right are arranged one next to another to the right of the circular symbol 1058. The three triangular symbols 1059 pointing to the left are arranged one next to another to the left of the circular symbol 1058.

As shown in FIG. 51, the first display device 1054 is provided on the rear surface of the seat back 1013. The first display device 1054 may be provided such that the symbols 1058 and 1059 provided on the light emitting units 1055 are exposed through an opening provided in the seat back cover 1025. The first display device 1054 may be provided in the seat back 1013 with the casing 1056 fitted into an opening of the seat back 1013. Alternatively, the casing 1056 may be connected to the left and right seat back side members. The symbols provided on the light emitting units 1055 are preferably arranged on the same plane as the surface of the seat back cover 1025. As a result, the symbols 1058 and 1059 illuminated by the light emitted from the light emitting units 1055 are visible to the occupant who is situated behind the seat 1001.

The seat 1001 is provided with a first input device 1062 for accepting a command for the operation of the rotation device 1011. The first input device 1062 may be, for example, a touch panel display or a mechanical switch. In this embodiment, the first input device 1062 is a mechanical switch. The first input device 1062 is provided on the right seat cushion side cover 1022.

As shown in FIG. 53, the seat 1001 further includes a rotation device 1011 and a control device 1064 that controls the first display device 1054. In this embodiment, the first input device 1062, the rotation device 1011, and the first display device 1054 are connected to a control device 1064. The control device 1064 is a computer that includes an arithmetic processing unit (a processor such as a CPU or MPU) and a storage device (memory such as ROM, RAM, etc.) and is configured to execute various processes necessary for rotating the seat 1001. The fact that the control device 1064 is configured to execute various processes means that the arithmetic processing unit (processor) constituting the control device 1064 is programmed to read necessary data and application software from the storage device (memory) according to the operation input from the first input device 1062 and execute predetermined arithmetic processes according to the software.

Referring to FIG. 51 once again, the first input device 1062 includes a right rotation switch 1062A that rotates the seat main body 1010 to the right, and a left rotation switch 1062B that rotates the seat main body 1010 to the left. The first input device 1062 outputs a right rotation signal to the control device 1064 to rotate the seat main body 1010 to the right by a predetermined angle when the right rotation switch 1062A is pressed by the occupant. Furthermore, when the left rotation switch 1062B is pressed by the occupant, the first input device 1062 outputs a left rotation signal to the control device 1064 to rotate the seat main body 1010 to the left by a predetermined angle. The predetermined angle may be 90 degrees.

A method for manufacturing the car seat 1001 configured as described above will be discussed in the following.

First, the seat main body 1010 is prepared. The seat cushion pad 1019 and the seat back pad 1024 are attached to the corresponding frames. More specifically, the seat cushion pad 1019 is placed over the seat cushion frame from above. Further, the seat back pad 1024 is placed over the seat back frame from the front. The skin material 1020 is placed over the pads 1019, 1024, and the frames.

The first display device 1054 is attached to the seat back cover 1025. More specifically, the first display device 1054 is fitted into a pre-formed opening of the seat back cover 1025 from the back side of the seat back cover 1025. The seat back cover 1025 may be placed over the seat back frame from behind with the first display device 1054 attached in advance. The seat cushion side cover 1022 covers the corresponding seat cushion side member 1021 from the lateral direction. The seat main body 1010 fitted with the first display device 1054 is prepared in this manner.

Next, a control device 1064 is attached to the seat main body 1010. The control device 1064 may be attached to the seat cushion frame or may be attached to the seat back frame.

Next, the seat main body 1010 is attached to the floor 1007. More specifically, first, the rotation device 1011 is attached to the seat main body 1010. The fixing bracket 1038 of the rotation device 1011 may be connected to the seat cushion side members 1021 of the left and right seat cushion frames by using fasteners such as bolts and nuts.

Next, the slide device 1016 is attached to the rotation device 1011. More specifically, the left end of the base plate 1033 of the rotation device 1011 may be connected to the left upper rail 1028 of the slide device 1016, and the right end of the base plate 1033 of the rotation device 1011 may be connected to the right upper rail 1028 of the slide device 1016.

Next, the slide device 1016 is attached to the floor 1007. More specifically, the lower rails 1027 of the slide device 1016 are attached to the floor 1007. As described above, the seat main body 1010 is supported by the floor 1007.

Next, the first display device 1054, the rotation device 1011, and the slide device 1016 are connected to the control device 1064.

Note that the procedure for supporting the seat main body 1010 on the floor 1007 is not limited to the one described above. For example, the rotation device 1011 may be attached to the seat main body 1010, and the slide device 1016 may thereafter be attached to the floor 1007. Then, the rotation device 1011 and the slide device 1016 may be joined to each other. Furthermore, the rotation device 1011 may be attached to the floor 1007 via the slide device 1016. Thereafter, the seat main body 1010 may be attached to the rotation device 1011. The control device 1064 may be attached to the seat main body 1010 after the seat main body 1010 is attached to the floor 1007.

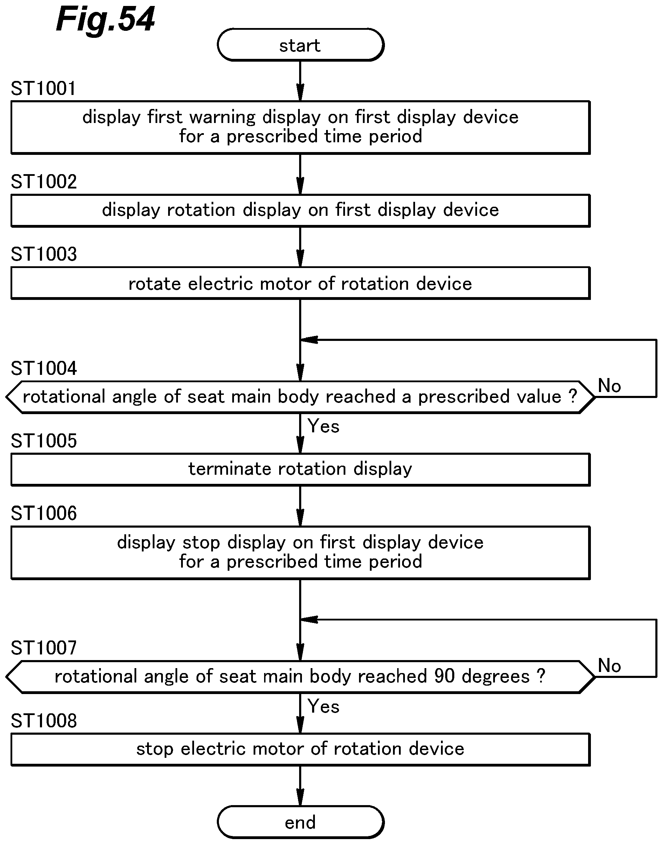

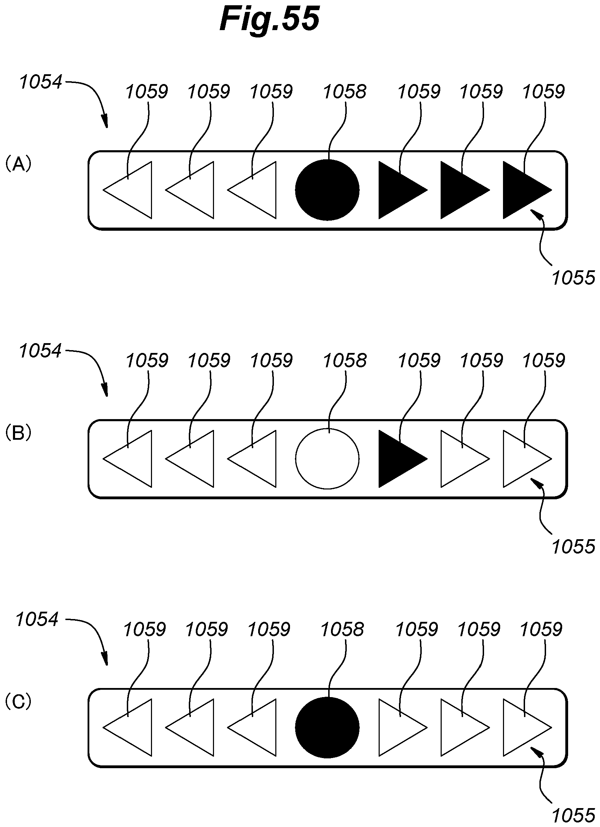

As shown in FIGS. 54 and 55, upon receiving a rotation signal from the first input device 1062, the control device 1064 executes rotation control of the rotation device 1011 that rotates the seat main body 1010. Further, the control device 1064 controls the first display device 1054 according to the operating state of the rotation device 1011. As shown in FIG. 54, first, the control device 1064 causes the first display device 1054 to display a first warning display indicating that the seat main body 1010 has started rotating (ST1001). The first warning display may be displayed for a predetermined period of time. The predetermined time may be, for example, about 1 second to 3 seconds. In this embodiment, as shown in FIG. 55(A), when the control device 1064 receives a clockwise rotation signal to rotate the seat main body 1010 clockwise from the first input device 1062, the first warning display consisting of lighting the circular symbol 1058 and the three triangular symbols 1059 pointing rightward is activated. The illumination color may be one of the two colors. By displaying the first warning display on the first display device 1054 immediately before the rotation device 1011 starts operating, the first display device 1054 can alert the occupant that the seat main body 1010 is about to start rotating.

Next, the control device 1064 causes the first display device 1054 to display the rotational direction of the seat main body 1010 according to the rotational direction of the rotation device 1011. In this embodiment, the control device 1064 causes the first display device 1054 to display a rotation display consisting of sequentially lighting the light emitting units 1055 one after another in the lateral direction (ST1002). The rotating display may be started upon elapsing of a predetermined time period after the first warning display is displayed. In this embodiment, as shown in FIG. 55(B), the clockwise rotation display representing the clockwise rotation of the seat main body 1010 is effected by sequentially lighting the three triangular symbols 1059 pointing rightward from the one closest to the circular symbol 1058 to the one next to the right. After lighting up the triangular symbol 1059 furthest from the circular symbol 1058, the control device 1064 then lights up the triangular symbol 1059 closest to the circular symbol 1058 once again. The illumination color may be the same as the color used for the first warning display. Thereby, the first display device 1054 can perform a display corresponding to the clockwise rotation of the seat main body 1010. Therefore, the direction of rotation of the seat 1001 can be conveyed to the occupant located behind the seat main body 1010.

Further, upon elapsing of a prescribed time period from the start of the first warning display, the control device 1064 starts rotating the electric motor 1043 of the rotation device 1011 in the corresponding rotational direction (ST1003). Thus, when the control device 1064 receives the clockwise rotation signal from the first input device 1062, the control device 1064 rotates the electric motor 1043 so as to rotate the seat main body 1010 clockwise. Conversely, when the control device 1064 receives a left rotation signal from the first input device 1062, the control device 1064 rotates the electric motor 1043 so as to rotate the seat main body 1010 to the left.

When it is determined that the rotational angle of the seat main body 1010 has reached a predetermined angle based on the angle sensor 1032 (YES in ST1004), the control device 1064 stops the rotation display (ST1005). The angle sensor 1032 preferably detects the rotational angle of the seat main body 1010 by using the state before the seat main body 1010 started rotating as a reference. The predetermined angle may be, for example, about 70 degrees to 80 degrees.

After stopping the rotation display, the control device 1064 causes the first display device 1054 to display a stop display indicating that execution of the rotation control has stopped (ST1006). The stop display may be displayed for a predetermined period of time. The predetermined time may be about 1 second to 3 seconds. In this embodiment, as shown in FIG. 55(C), the stop display may consist of lighting the circular symbol 1058. The color of the illuminating light may be the same as the color used for the first warning display and the clockwise rotation display. When the control device 1064 has determined that the rotational angle of the seat main body 1010 has reached 90 degrees based on the angle sensor 1032 (YES in ST1007), the control device 1064 stops the rotation of the electric motor 1043 (ST1008). Thereby, the first display device 1054 can alert the occupant that the rotation control (rotation of the seat main body 1010) has come to a stop.

When the control device 1064 receives a left rotation signal from the first input device 1062, the first warning display may be displayed by lighting up the circular symbol 1058 and three triangular symbols 1059 pointing to the left. The leftward rotation display representing leftward rotation of the seat main body 1010 may consist of sequentially lighting the three triangular symbols 1059 pointing leftward from the one closest to the circular symbol 1058 to the one next to the left. After lighting up the triangular symbol 1059 furthest from the circular symbol 1058, the control device 1064 may light up the triangular symbol 1059 closest to the circular symbol 1058 once again. The stop display may consist of lighting the circular symbol 1058. The color of the illuminating color of these displays in the left rotation control may be the same as the color used for the displays in the right rotation control.

As described above, the control device 1064 causes the first display device 1054 to display the first warning display, rotation display, and stop display according to the rotation status of the seat main body 1010, so that the control device 1064 can alert the occupants situated behind the seat main body 1010 in an appropriate manner.

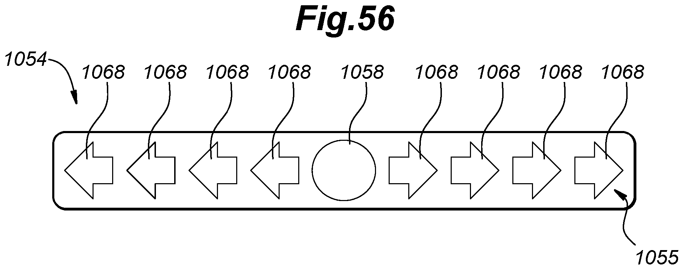

The number the light emitting units 1055 and the symbols that are used may be changed. For example, as shown in FIG. 56, four arrow symbols 1068 pointing to the right may be arranged one next to another to the right of a circular symbol 1058 positioned in the center of the casing 1056. Further, four arrow symbols 1068 pointing to the left may be arranged one next to another to the left of the circular symbol 1058. The control device 1064 may light up the arrow symbols 1068 pointing to the right in the right rotation control. Further, the control device 1064 may light up the arrow symbols 1068 pointing to the left in the left rotation control. As a result, the direction in which the seat main body 1010 rotates can be more clearly communicated to the occupant situated behind the seat main body 1010.

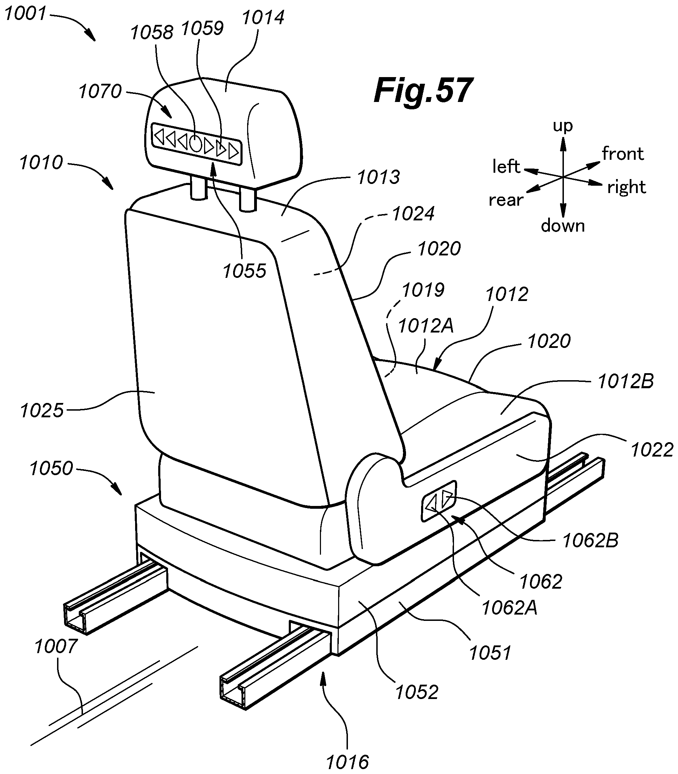

The position of the display device may be changed. For example, as shown in FIG. 57, the display device may include a second display device 1070 provided on the rear surface of the headrest 1014. The configuration of the second display device 1070 may be similar to that of the first display device 1054. The second display device 1070 may be provided on the headrest 1014 such that the casing 1056 is accommodated in a recess provided in the pad of the headrest 1014. The light emitting unit 1055 may be provided so as to be exposed through an opening provided in the skin material 1020 of the headrest 1014. Thereby, the occupant situated behind the seat main body 1010 can be alerted in an appropriate manner.

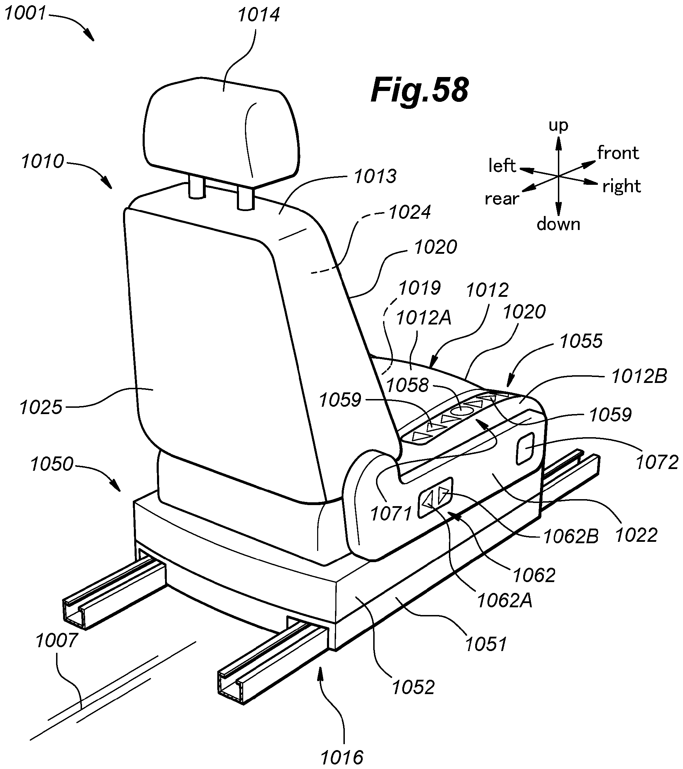

Further, as shown in FIG. 58, the display device may include a third display device 1071 provided on at least one of the left and right shoulder portions 1012B of the seat cushion 1012. The configuration of the third display device 1071 is similar to that of the first display device 1054. The third display device 1071 is provided on the upper surface of the shoulder portion 1012B and extends in the fore and aft direction. In this embodiment, among the six triangular symbols 1059, three triangular symbols 1059 are arranged in a row in front of the circular symbol 1058 pointing forward, and the remaining three triangular symbols 1059 are arranged in a row behind the circular symbol 1058 pointing backward. The third display device 1071 may be provided on the shoulder portion 1012B with the casing 1056 thereof placed into a recess provided in the seat cushion pad 1019. The light emitting unit 1055 may be provided so as to be exposed through an opening provided in the skin material 1020 of the seat cushion 1012.

The clockwise rotation display representing the clockwise rotation of the seat main body 1010 may be displayed by sequentially lighting the three triangular symbols 1059 pointing backward from the one closest to the circular symbol 1058 to the one immediately behind. Further, the counterclockwise rotation display representing counterclockwise rotation of the seat main body 1010 may be displayed by sequentially lighting three triangular symbols 1059 pointing forward from the one closest to the circular symbol 1058 and the one immediately ahead. These modes of lighting allow the occupants present next to the seat main body 1010 to be appropriately alerted. Furthermore, the occupant seated on the seat main body 1010 can also confirm the direction of rotation.

The seat main body 1010 may be provided with a distance sensor 1072 as a sensor that detects the positions of objects around the seat main body 1010. The distance sensor 1072 may be provided at the front end of each of the left and right seat cushion side covers 1022. The distance sensor 1072 may be, for example, a radar sensor, a sonar sensor, a capacitive sensor, a camera, or the like. **In** this embodiment, the distance sensor 1072 consists of a sonar sensor.

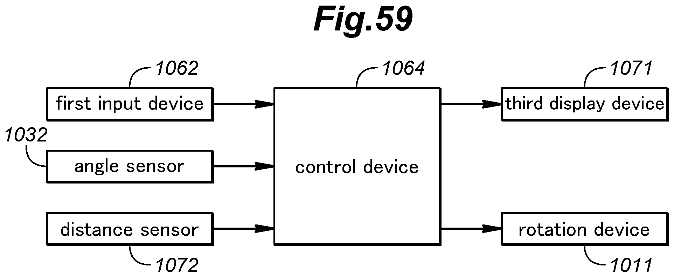

As shown in FIG. 59, the distance sensor 1072 is connected to a control device 1064. The distance sensor 1072 emits ultrasonic waves over a predetermined range around the seat main body 1010 and receives reflected waves reflected by objects. The distance sensor 1072 transmits detection results of detecting the presence or absence of a three-dimensional object and the distance to the three-dimensional object to the control device 1064 based on the time required for the ultrasonic waves to be transmitted and received.

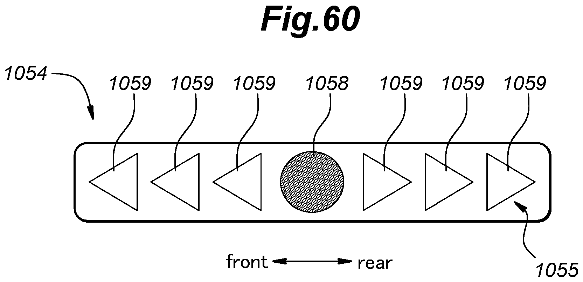

Upon receiving a rotation signal from the first input device 1062, the control device 1064 executes rotation control of the rotation device 1011 that rotates the seat main body 1010. First, the control device 1064 estimates the possibility of a collision between the seat main body 1010 and an object based on the position of the object obtained from the distance sensor 1072. When the control device 1064 detects an object inside the rotation trajectory of the seat main body 1010 when the seat main body 1010 rotates, the control device 1064 may estimate that there is a possibility of a collision between the seat main body 1010 and the object. If the control device 1064 determines that there is a possibility of a collision between the seat main body 1010 and the object, the control device 1064 causes the third display device 1071 to display a second warning display indicating that the seat main body 1010 will collide with an object. In this embodiment, as shown in FIG. 60, the second warning display is displayed by lighting up the circular symbol 1058. At this time, the emitted light color may be the other emitted light color different from the emitted light color used for the first warning display, rotation display, and stop display. Thereby, the third display device 1071 can alert the occupant to the possibility that the seat main body 1010 may collide with another object. When the control device 1064 determines that there is no possibility of a collision between the seat main body 1010 and an object, the control device 1064 may perform the rotation control described above.

The distance sensor 1072 thus allows the display device to alert the occupant that the seat main body 1010 may collide with another object.

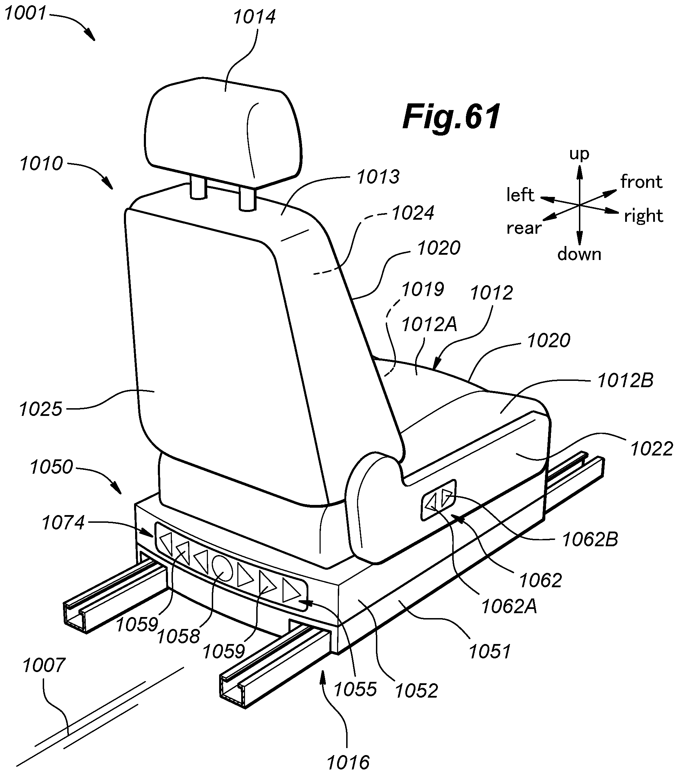

The position of the display device may also be changed. For example, as shown in FIG. 61, the display device may include a fourth display device 1074 provided on the rear surface of a cover 1050 placed around the rotation device 1011. The configuration of the fourth display device 1074 is similar to that of the first display device 1054. The fourth display device 1074 may be provided such that the light emitting portion 1055 is exposed through an opening provided in the upper cover 1052. The fourth display device 1074 can properly alert the occupants situated behind the seat main body 1010.

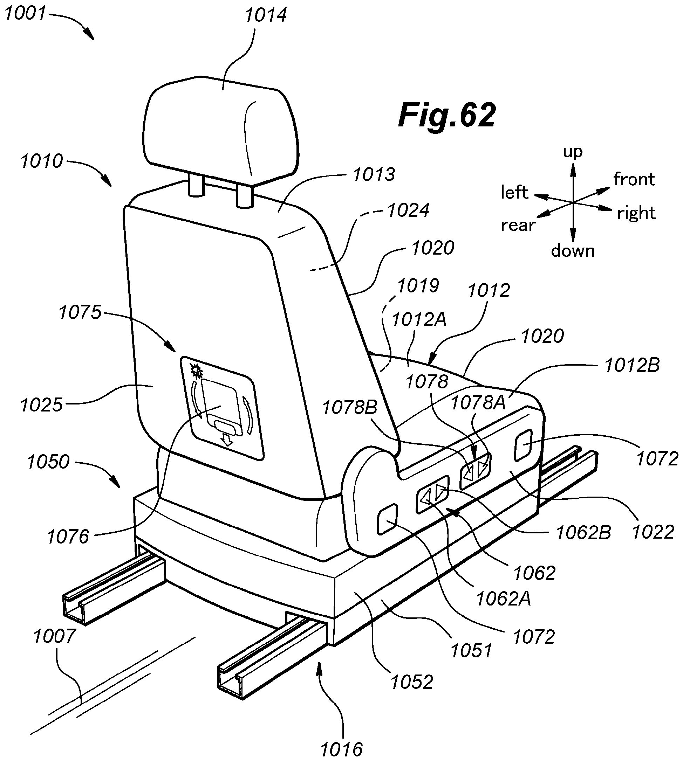

As shown in FIG. 62, the display device may consist of a display 1075 such as a liquid crystal display or an organic EL display. The display 1075 may be located at the bottom of the seat back cover 1025. A seat icon 1076 having a shape of the seat main body 1010 viewed from above may be depicted in the center of the display 1075. Distance sensors 1072 that detect the positions of objects around the seat main body 1010 are provided at the front and rear ends of the left and right seat cushion side members 1021.

The seat 1001 has a second input device 1078 for accepting operations on the slide device 1016. In this embodiment, the second input device 1078 is a mechanical switch. The second input device 1078 is provided on the right seat cushion side cover 1022. The second input device 1078 has a forward movement switch 1078A that moves the seat main body 1010 forward, and a backward movement switch 1078B that moves the seat main body 1010 backward.

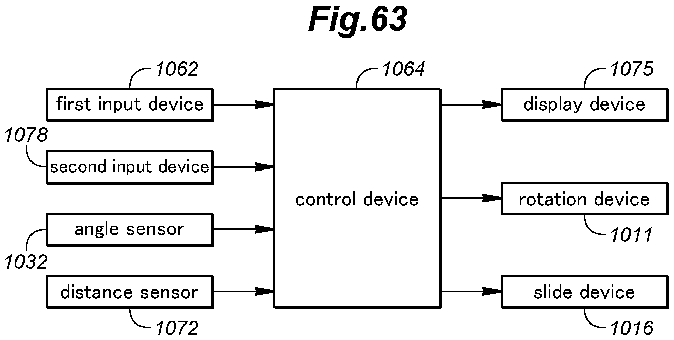

As shown in FIG. 63, the distance sensor 1072, the first input device 1062, the second input device 1078, the rotation device 1011, and the slide device 1016 are connected to the control device 1064. The second input device 1078 forwards a forward movement signal to the control device 1064 while the forward movement switch 1078A is being pressed by the occupant. Further, the second input device 1078 forwards a backward movement signal to the control device 1064 while the backward movement switch 1078B is being pressed by the occupant.

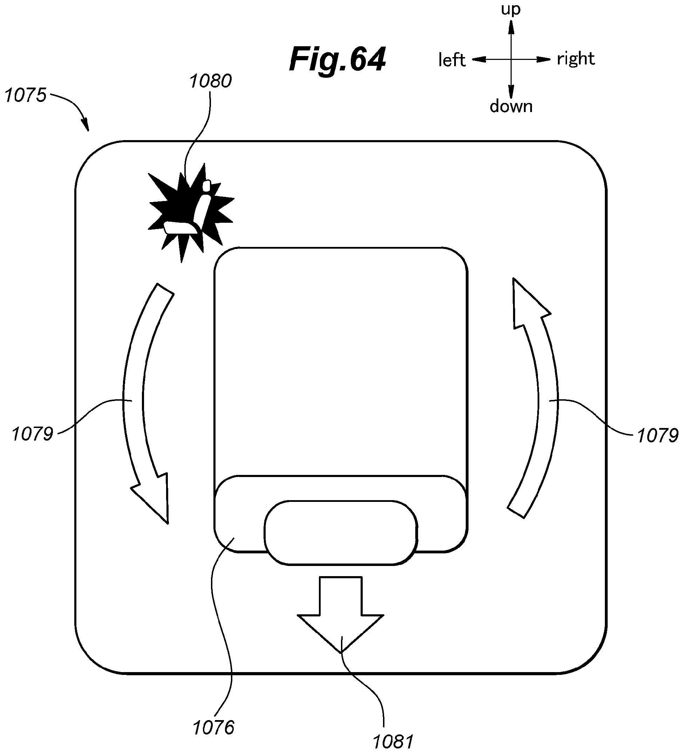

In the first warning display indicating that the seat main body 1010 starts rotating, two arrow icons 1079 indicating the direction of rotation may be displayed on the display 1075 on the left and right sides of the seat icon 1076, respectively. For example, as shown in FIG. 64, when rotating the seat main body 1010 to the left, an arrow icon 1079 pointing upward and to the left is displayed on the right side of the display 1075, and an arrow icon 1079 pointing downward and to the right is displayed on the left side of the display 1075 in the first warning display.

The rotation display indicating that the seat main body 1010 is rotating may be displayed by blinking the arrow icons 1079 displayed on either side of the seat icon 1076.

In the second warning display indicating that the seat main body 1010 may collide with an object, a collision danger icon 1080 may be displayed on the display 1075. Further, the second warning display may indicate a location where a collision between the seat main body 1010 and an object is going to occur by the position of the collision danger icon 1080 displayed on the display 1075. For example, as shown in FIG. 64, if the seat main body 1010 is going to collide with an object on the front and left side of the seat main body 1010, the collision danger icon 1080 may be displayed on the upper and left side of the display 1075.

The stop display indicating that the rotation of the seat main body 1010 is completed may be displayed by turning off the arrow icons 1079 displayed on either side of the seat icon 1076.

The control device 1064 preferably executes movement control to move the seat main body 1010 based on the signal from the second input device 1078. At this time, the control device 1064 preferably causes the display 1075 to display a third warning display indicating that the seat main body 1010 has started moving. For example, as shown in FIG. 64, when moving the seat main body 1010 backward, an arrow icon 1081 pointing downward may be displayed at the bottom of the display 1075 in the third warning display. A movement display indicating that the seat main body 1010 is moving may be displayed by blinking the arrow icon 1081 displayed at the bottom of the display 1075. A movement stop display indicating that the movement of the seat main body 1010 is completed may be displayed by turning off the arrow icon 1081 displayed at the bottom of the display 1075.

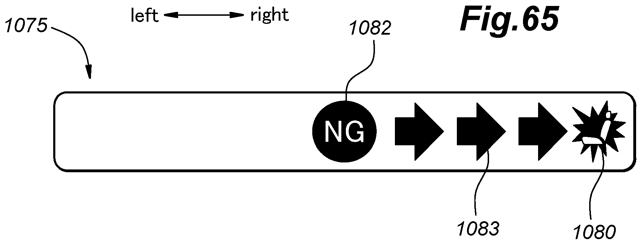

The shape of the display 1075 and the second warning display indicating that the seat main body 1010 may collide with an object may be changed. For example, as shown in FIG. 65, the display 1075 may be elongated in the lateral direction. The second warning display not only informs the occupant of the possibility that the seat main body 1010 may collide with an object but also the approximate position of the object that may collide with the seat main body 1010 and that the seat main body 1010 will not rotate. The second warning display may be displayed, for example, by lighting up a rotation prohibition icon 1082 indicating prohibition of rotation of the seat main body 1010 and the arrow icons 1083 in addition to the collision danger icon 1080. The arrow icons 1083 may be configured to visually convey to the occupant the positional relationship between the seat main body 1010 and that object that may collide with the seat main body 1010.

The rotation prohibition icon 1082 is positioned at the laterally central part of the display 1075. The rotation prohibition icon 1082 may be formed by including the letters "NG" in a circular symbol.

The collision danger icon 1080 may indicate the position of the object that may collide with the seat main body 1010 relative to the seat main body 1010. When the object that may collide is located to the right of the seat main body 1010, the collision danger icon 1080 may be displayed to the right of the rotation prohibition icon 1082. When an object that may collide is located to the left of the seat main body 1010, the collision danger icon 1080 may be displayed to the left of the rotation prohibition icon 1082.

The arrow icons 1083 are preferably displayed between the rotation prohibition icon 1082 and the collision danger icon 1080. The number of the displayed arrow icons 1079 may be changed based on the distance between the seat main body 1010 and an object that may collide with the seat main body 1010 provided by the distance sensor 1072. For example, as shown in FIG. 65, when an object that may collide with the seat main body 1010 is located far from the seat main body 1010, three arrow icons 1079 are displayed between the rotation prohibition icon 1082 and the collision danger icon 1080. Thereby, the occupant is enabled to grasp the approximate position of the object that may collide with the seat main body 1010.

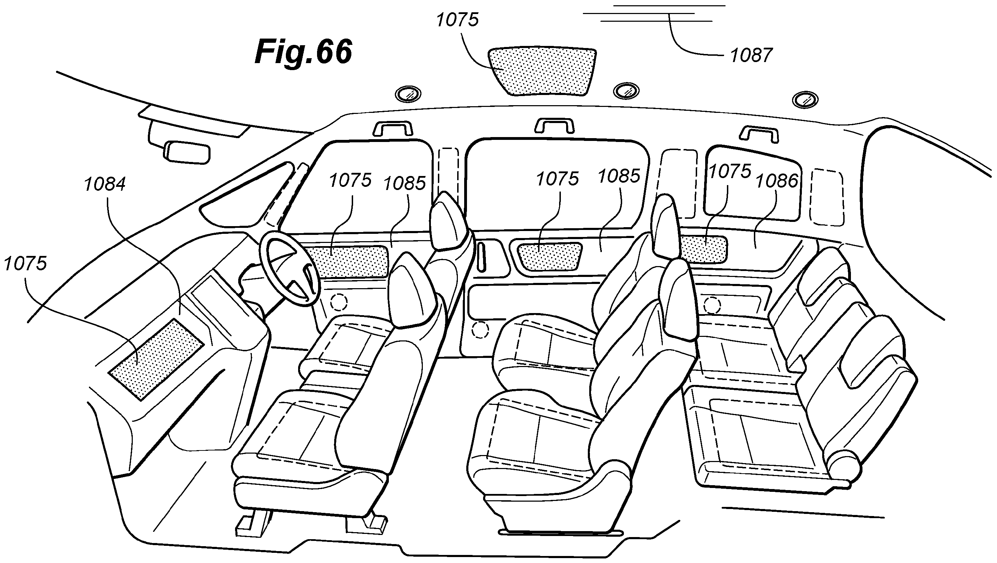

In the foregoing embodiment, the display device is provided in the seat main body 1010, but it may also be provided in any other structure provided around the seat main body 1010. For example, as shown in FIG. 66, the display 1075 may be provided on an instrument panel 1084, a door trim 1085, a rear side trim 1086, or a roof 1087 (ceiling). The display 1075 may display a seat icon 1076 corresponding to the shape of each of the seats 1001 viewed from above. When a particular seat 1001 rotates or moves, various displays may be displayed on the corresponding seat icon 1076. This allows the occupant to recognize the state of each seat 1001.

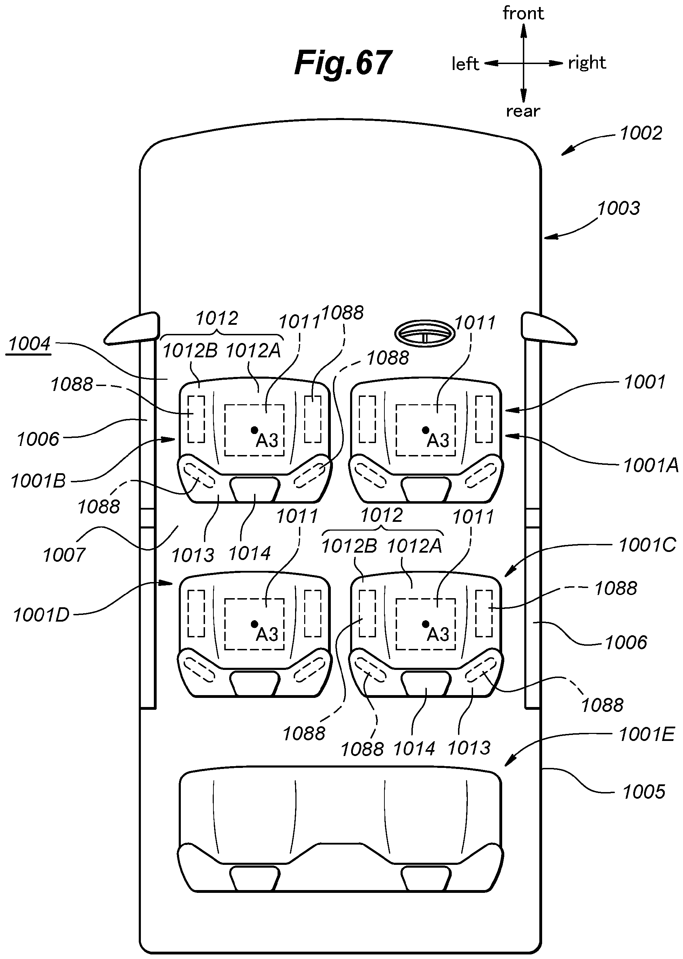

As shown in FIG. 67, each seat main body 1010 may be provided with a support structure for supporting the posture of a seated occupant while the seat main body 1010 is rotating. In this embodiment, the support structure includes a plurality of air cells 1088 that can be inflated by supply of air. The expanded air cells 1088 press the occupant seated on the seat 1001. The air cells 1088 are provided on the left and right shoulder portions 1012B and the left and right sides of the seat back 1013. The upper part of the air cell 1088 provided on each shoulder portion 1012B is configured to expand upward and laterally inwardly by the supply of air. The front part of the air cell 1088 provided in each side of the seat back 1013 is configured to expand forward and laterally inward when air is supplied. The air cells 1088 may be connected to a control device 1064 via a supply device (not shown in the drawings) that supplies air to the air cells 1088.

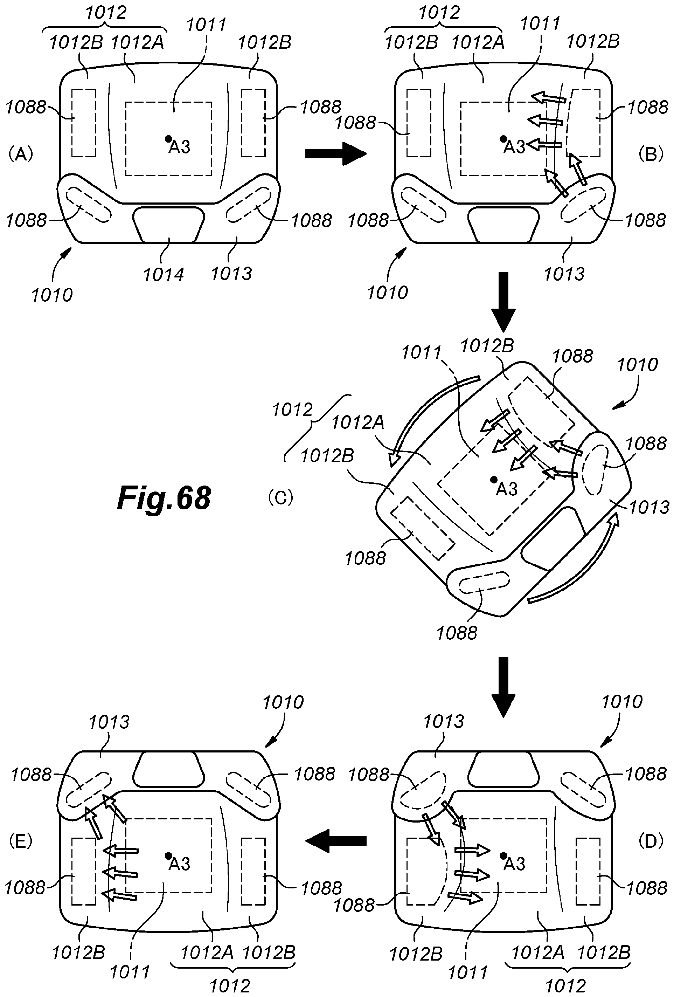

As shown in FIG. 68, the control device 1064 may inflate the air cells 1088 in accordance with the rotation of the seat main body 1010. As shown in FIG. 68(A), when the control device 1064 does not receive the rotation signal from the first input device 1062, the control device 1064 does not inflate the air cells 1088. Upon receiving a predetermined rotation signal from the first input device 1062, the control device 1064 executes the corresponding rotation control. For example, as shown in FIG. 68(B), when executing the left rotation control, the control device 1064 starts inflating the two air cells 1088 provided on the right side of the shoulder portion 1012B and the right side of the seat back 1013. As shown in FIG. 68(C), the control device 1064 starts inflating the two air cells 1088 and then rotates the seat main body 1010 to the left. The control device 1064 may increase the size of the two air cells 1088 on the right side as the rotational angle of the seat main body 1010 increases while the seat main body 1010 is rotating. As shown in FIG. 68(D), the control device 1064 stops the expansion of the two air cells 1088 provided on the right side when the rotation of the seat main body 1010 is ended. As shown in FIG. 68(E), when the rotation of the seat main body 1010 is completed, the air cells 1088 may be deflated.

As described above, when rotating the seat main body 1010, the control device 1064 inflates the air cells 1088 on the opposite side to the direction of rotation of the seat main body 1010. As a result, the air cells 1088 support the posture of the occupant seated on the seat main body 1010 so that the occupant does not tilt in the direction opposite to the direction of rotation of the seat main body 1010 when the seat main body 1010 starts rotating or is rotating.

In other embodiments, the control device 1064 may inflate the air cells 1088 on the same side as the rotational direction of the seat main body 1010 when the rotation of the seat main body 1010 ends. As a result, the air cells 1088 supports the posture of the occupant seated on the seat main body 1010 so that the occupant does not lean toward the same side as the direction of rotation of the seat main body 1010 when the rotation of the seat main body 1010 comes to a stop.

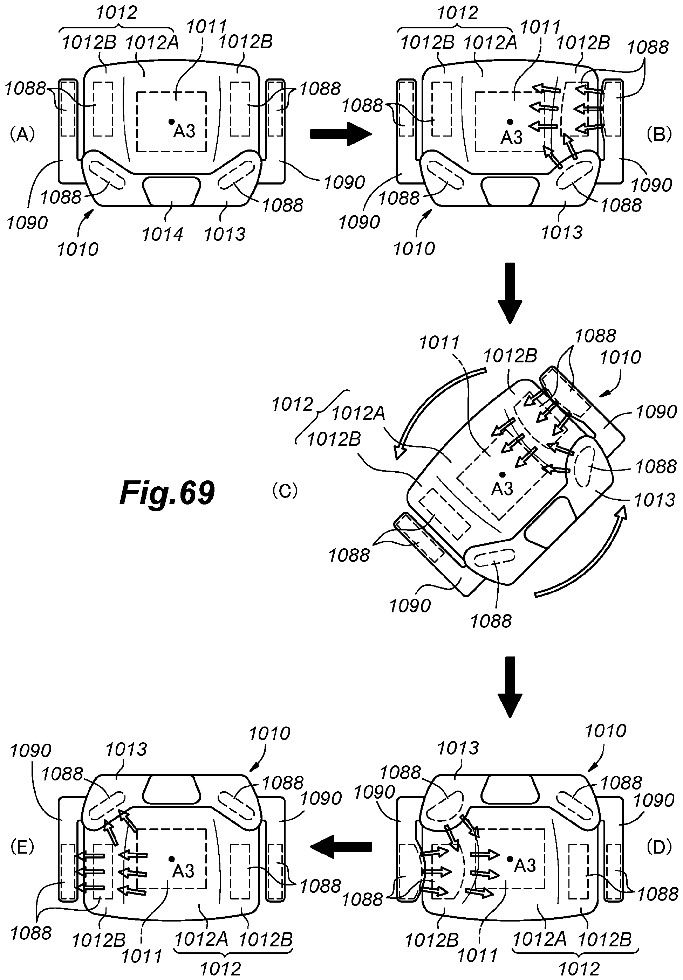

The arrangement of the air cells 1088 may vary. For example, as shown in FIG. 69, the seat main body 1010 may be provided with a pair of armrests 1090 provided on either side of the seat back 1013. Each armrest 1090 may have a per se known configuration including an armrest frame forming a skeletal structure, an armrest pad supported by the armrest frame, and a skin material 1020 covering the outer surface of the armrest pad. An air cell 1088 is provided to each armrest 1090 as well. The inner part of each air cell 1088 provided in the corresponding armrest 1090 expands laterally inwardly by air supply.

As shown in FIG. 69(A), when the control device 1064 does not receive a rotation signal from the first input device 1062, the control device 1064 does not inflate the air cells 1088. As shown in FIG. 69(B), for example, when executing leftward rotation control, the control device 1064 inflates the three air cells 1088 provided on the right shoulder portion 1012B, the right side of the seat back 1013, and the right armrest 1090. As shown in FIG. 69(C), following the inflation of the three air cells 1088 on the right side, the control device 1064 rotates the seat main body 1010 to the left. As shown in FIG. 69(D), upon completion of the rotation of the seat main body 1010, the control device 1064 ends the inflation of the three air cells 1088 on the right side. As shown in FIG. 69(E), upon completion of the rotation of the seat main body 1010, it is preferable that all the air cells 1088 are deflated.

In other embodiments, the support structure may be a device that pushes the seat back pad 1024 forward. For example, the support structure may include a movable frame rotatably supported by each side of the seat back frame and a motor that rotates the movable frame. When the movable frame rotates forward, the seat back pad 1024 may protrude forward so as to push a corresponding side part of the occupant forward. Further, the support structure may be an air cylinder provided between the seat back frame and the seat back pad 1024. By extending the air cylinder forward, the seat back pad 1024 may protrude forward and push the corresponding side of the occupant forward.

The support structure may be incorporated in the armrests 1090. Each armrest 1090 may have a per se known configuration including, for example, a rotation mechanism that rotates the armrest 1090 relative to the seat back 1013 and an armrest angle sensor that detects the angle of the armrest 1090 relative to the seat back 1013. The rotation mechanism and armrest angle sensor may be connected to the control device 1064. When executing the rotation control, the control device 1064 preferably rotates the rotation mechanism based on the armrest angle sensor so that the armrest 1090 is in a position extending in the horizontal direction. At this time, the control device 1064 preferably rotates the rotation mechanism of the armrest 1090 on the opposite side of the rotational direction of the seat main body 1010. As a result, the armrest 1090 supports the posture of the occupant seated on the seat main body 1010 so that the occupant does not tilt in the direction opposite to the direction of rotation of the seat main body 1010 while the seat main body 1010 is rotating.

A plurality of display devices may be provided on the seat 1001 by combining the first display device 1054, the second display device 1070, the third display device 1071, the fourth display device 1074, and the fifth display 1075. A speed sensor that detects the rotational speed of the seat main body 1010 may be connected to the control device 1064. Based on the rotational speed detected by the speed sensor, the control device 1064 may make the rotational speed of the seat main body 1010 at the start of rotation smaller than the rotational speed of the seat main body 1010 during the steady state rotation thereof. Further, the first input device 1062 may include a plurality of speed switches that change the rotational speed of the seat main body 1010. Furthermore, a weight sensor that detects the weight applied to the seat cushion 1012 may be connected to the control device 1064. The control device 1064 may change the rotational speed of the seat main body 1010 depending on the weight of the occupant seated on the seat main body 1010 or the weight of luggage placed on the seat main body 1010. When the weight sensor exceeds a predetermined threshold, the control device 1064 may cause the display device to display a warning message for prohibiting rotation of the seat main body 1010.

Hereinafter, the rotation device 1202 according to an embodiment of the present invention as applied to a car seat will be described in the following with reference to the drawings. In other embodiments, the rotation device 1202 may be applied to seats in other vehicles such as trains, airplanes, ships, etc. Hereinafter, the front and rear, left and right, and up and down directions will be defined in relation to the car.

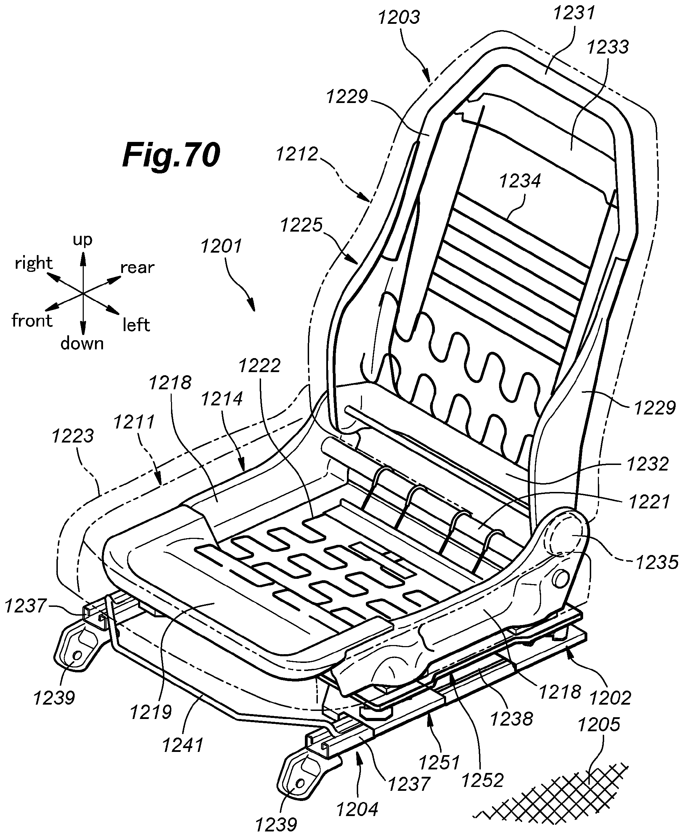

As shown in FIG. 70, a car seat device 1201 includes a rotation device 1202. Further, the car seat device 1201 includes a seat main body 1203 and a slide device 1204. The rotation device 1202 is provided on the floor 1205 via a slide device 1204. The seat main body 1203 includes a seat cushion 1211 and a seat back 1212. The seat cushion 1211 supports the user's buttocks from below. The seat back 1212 extends upward from the rear of the seat cushion 1211. The seat back 1212 supports the user's back from the rear.

The seat cushion 1211 includes a seat cushion frame 1214 forming a skeletal structure, a pad supported by the seat cushion frame 1214, and a skin material covering the surface of the pad. The seat cushion frame 1214 includes a pair of seat cushion side members 1218 that extend in the fore and aft direction on either side, a front member 1219 extending between the front ends of the left and right seat cushion side members 1218, and a rear member 1221 extending between the rear ends of the left and right seat cushion side members 1218. A flexible support member 1222 that supports the user's buttocks is spanned between the front member 1219 and the rear member 1221. The support member 1222 preferably includes a plurality of metal wires and a flexible resin plate attached to the wires. A pair of side covers 1223 are provided on either side of the seat cushion 1211. The side covers 1223 are supported by the respective seat cushion side members 1218 and conceal the ends of the pad and upholstery from view. The side covers 1223 are preferably formed of a resin material.

The seat back 1212 includes a seat back frame 1225 forming a skeletal structure, a pad supported by the seat back frame 1225, and a skin material covering the surface of the pad. The seat back frame 1225 includes a pair of seat back side members 1229 that extend vertically on either side, an upper member 1231 extending between the upper ends of the left and right seat back side members 1229, a lower member 1232 extending between lower ends of the left and right seat back side members 1229, and an intermediate member 1233 extending between the left and right seat back side members 1229 vertically between the upper member 1231 and the lower member 1232. The left and right seat back side members 1229, the upper member 1231, the lower member 1232, and intermediate member 1233 are formed by stamp forming sheet metal. A flexible support member 1234 that supports the user's back is spanned between the left and right seat back side members 1229, the intermediate member 1233, and the lower member 1232. The support member 1234 is preferably formed of a plurality of metal wires. The lower ends of the left and right seat back side members 1229 are connected to the rear ends of the corresponding seat cushion side members 1218 via a reclining device 1235.

As shown in FIGS. 70 to 72, the slide device 1204 includes a pair of lower rails 1237 extending in the fore and aft direction on either side and a pair of upper rails 1238 supported by the corresponding lower rails 1237 so as to be slidable in the fore and aft direction. Each lower rail 1237 is fixed to the floor 1205 via a front and a rear foot 1239. A slide lock device (not shown in the drawings) is provided between each lower rail 1237 and the corresponding upper rail 1238. The left and right slide lock devices are connected to each other by a slide operation lever 1241 extending laterally. The user can slide the upper rails 1238 relative to the lower rails 1237 by operating the slide operation lever 1241.

As shown in FIGS. 70 to 72, the rotation device 1202 is provided between the floor 1205 and the seat cushion 1211, and is configured to rotate the seat cushion 1211 around a first axis A4 (rotational axis) with respect to the floor 1205. The rotation device 1202 includes a base part 1251, a rotatable part 1252, a rotation actuator 1253, and a rotation lock device 1254.

The base part 1251 is provided on the side of the floor 1205. In this embodiment, the base part 1251 is provided on the floor 1205 via the slide device 1204. The base part 1251 is provided with a base plate 1255 having a vertically facing surface. The base plate 1255 consists of a circular plate. The base part 1251 also has a vertical wall 1256 that projects upward from the peripheral edge of the base plate 1255. The base plate 1255 is supported by the left and right upper rails 1238 via a pair of front and rear cross members 1257. Each cross member 1257 extends laterally and is connected to the left and right upper rails 1238 at the respective ends thereof. The left and right ends of the front cross member 1257 are connected to the front ends of the corresponding upper rails 1238. The left and right ends of the rear cross member 1257 are connected to the rear ends of the corresponding upper rails 1238.

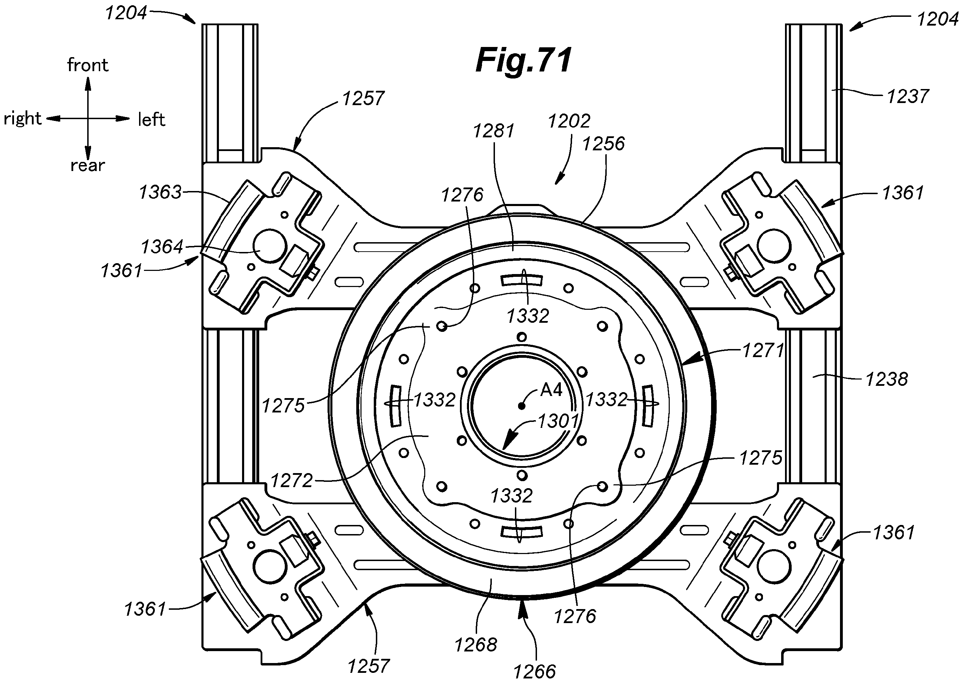

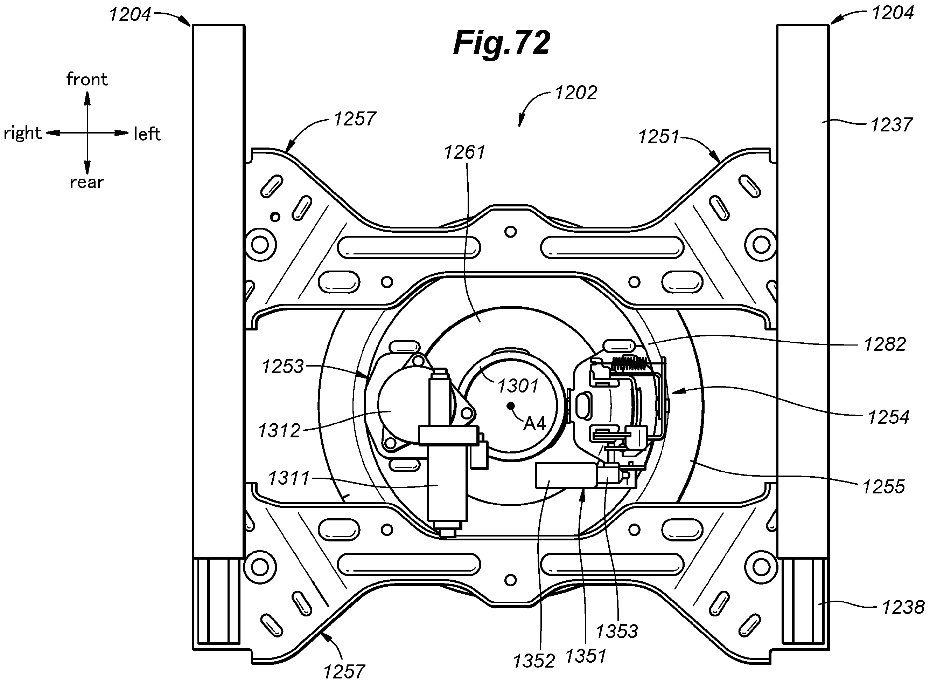

As shown in FIGS. 71 and 72, the front and rear cross members 1257 are positioned at a distance from each other in the fore and aft direction. The base plate 1255 and the front and rear cross members 1257 are preferably formed of sheet metal. A plurality of reinforcing structures extending in the lateral direction may be formed in the center part of each cross member 1257.

As shown in FIG. 72, the front and rear cross members 1257 are connected to each other by the base plate 1255.

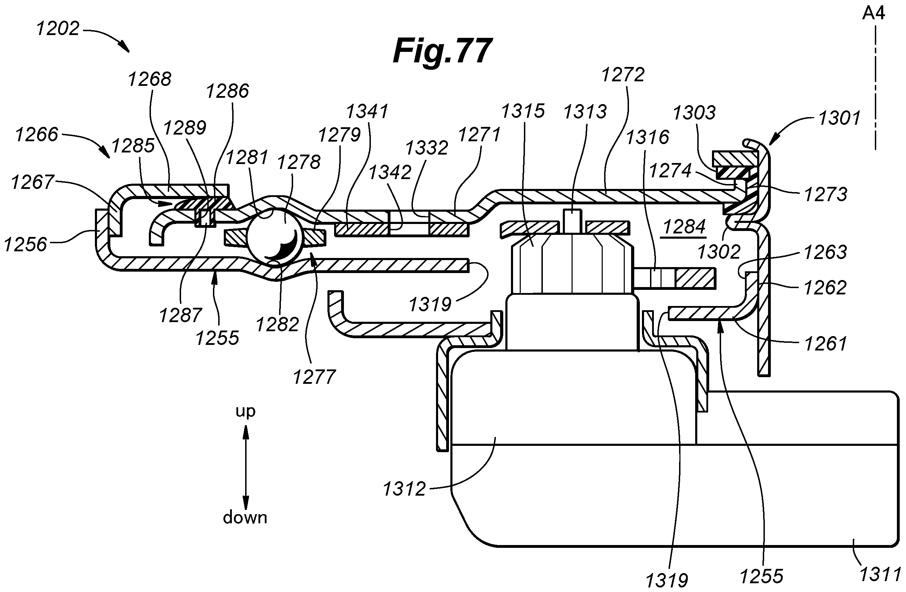

As shown in FIGS. 72 and 76 to 78, a first bulging portion 1261 bulging downward is formed in the center of the base plate 1255. The first bulging portion 1261 is formed in a cylindrical shape with a bottom. A circular first bearing hole 1262 is formed in the center of the first bulging portion 1261 and penetrates in the thickness direction. The first bearing hole 1262 is centered on the first axis A4 that extends vertically. An annular edge wall 1263 protruding upward or downward may be formed at the edge of the first bearing hole 1262 (see FIG. 77).

As shown in FIGS. 71 and 76 to 78, the base part 1251 further includes a fixing member 1266 extending upward from the base plate 1255. The fixing member 1266 has a tube wall 1267 extending upward from the base plate 1255, and an inner flange portion 1268 extending radially inward from the upper end of the tube wall 1267. The inner flange portion 1268 is formed in an annular shape and has a surface facing vertically. The outer circumferential surface of the tube wall 1267 is preferably located inside the inner circumferential surface of the vertical wall 1256 of the base plate 1255. The fixing member 1266 is preferably fixed to the base plate 1255, for example, by welding the lower part of the outer circumferential surface of the tube wall 1267 of the fixing member 1266 to the upper part of the inner circumferential surface of the vertical wall 1256 of the base plate 1255. A gap is formed between the inner flange portion 1268 and the base plate 1255. The fixing member 1266 may be formed by combining a plurality of members. A plurality of reinforcing structures may be provided at the boundary between the tube wall 1267 and the inner flange portion 1268. The reinforcing structure may be, for example, a recess, a rib, or the like.

As shown in FIGS. 71 to 78, the rotatable part 1252 is fixed to the seat cushion 1211 and rotatably supported by the base part 1251. The rotatable part 1252 includes a rotatable plate 1271 rotatably supported on the upper surface of the base plate 1255. The rotatable plate 1271 is formed into a disk shape with a surface facing vertically. The rotatable plate 1271 is formed of sheet metal. The center portion of the rotatable plate 1271 has a second bulging portion 1272 consisting of a convex portion that bulges upward. The second bulging portion 1272 extends in an annular shape centered on the first axis A4. A circular second bearing hole 1273 that penetrates in the thickness direction is defined in the center of the rotatable plate 1271 by the inner peripheral edge of the second bulging portion 1272. The second bearing hole 1273 is centered on the first axis A4. An annular edge wall 1274 protruding upward or downward may be formed on the inner peripheral edge of the second bulging portion 1272 (see FIG. 77).

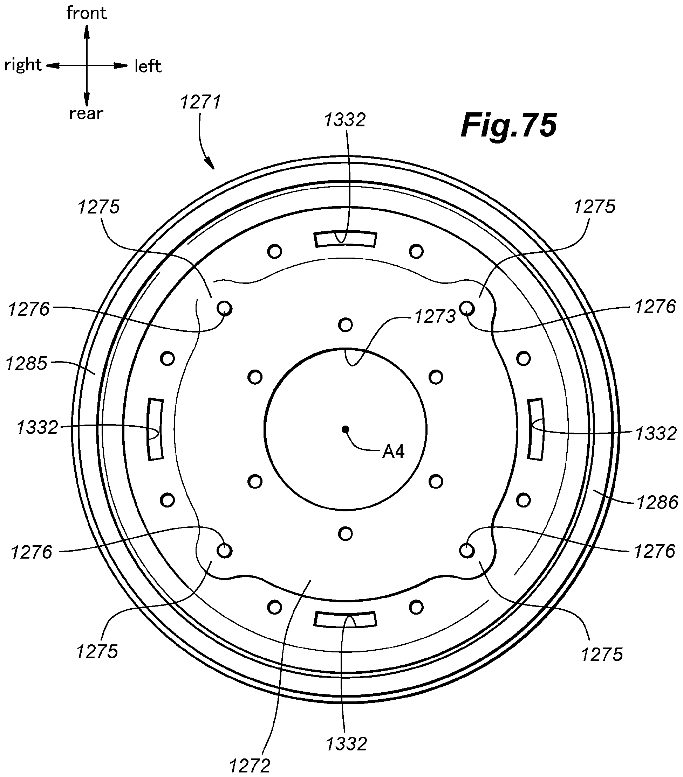

As shown in FIGS. 71 and 75, the rotatable plate 1271 further includes a plurality of third bulging portions 1275 that bulge upward. The third bulging portions 1275 are preferably formed integrally with the second bulging portion 1272. More specifically, the third bulging portions 1275 are provided so as to protrude radially outward from the outer peripheral portion of the second bulging portion 1272. In this embodiment, four of the third bulging portions 1275 are arranged at equal intervals along the periphery of the second bulging portion 1272. A corresponding bolt 1276 extending upward is provided on the upper surface of each third bulging portion 1275. The bolts 1276 may consist of stud bolts.

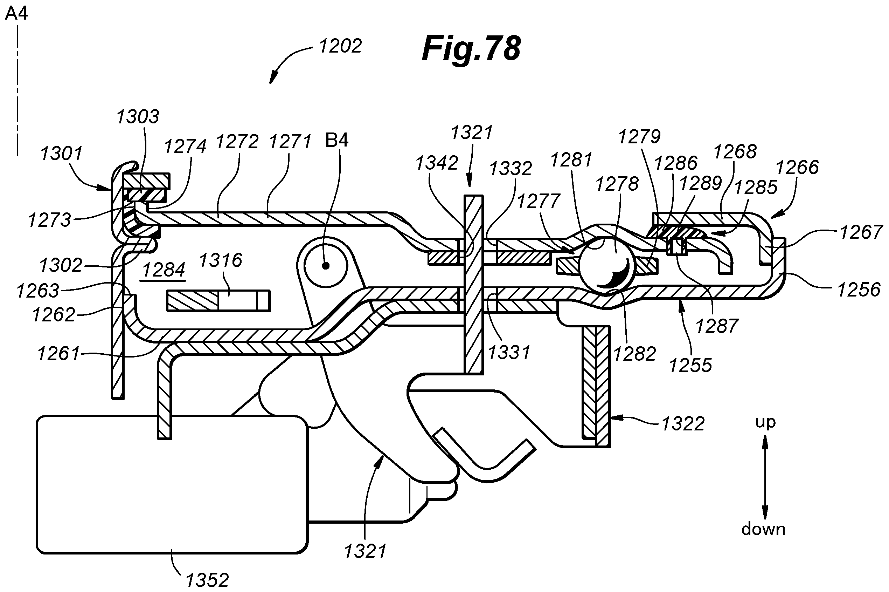

As shown in FIGS. 77 and 78, the upper surface of the peripheral edge of the rotatable plate 1271 opposes the lower surface of the inner flange portion 1268. More specifically, the peripheral edge of the rotatable plate 1271 is positioned in the gap defined between the inner flange portion 1268 of the fixing member 1266 and the base plate 1255.

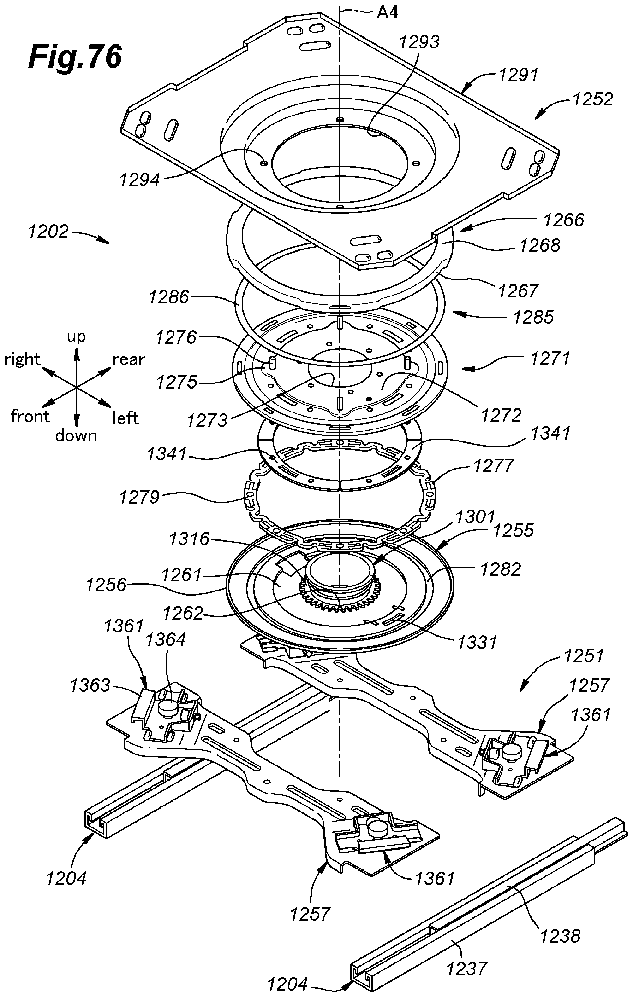

As shown in FIGS. 76 to 78, the rotatable plate 1271 is supported on the upper surface of the base plate 1255 via a bearing 1277. In this embodiment, the bearing 1277 consists of a per se known thrust bearing that includes a plurality of balls 1278 and an annular retainer 1279 that rotatably supports the balls 1278. The retainer 1279 has an annular shape centered on the first axis A4. The bearing 1277 is positioned between the upper surface of the outer periphery of the base plate 1255 and the lower surface of the outer periphery of the rotatable plate 1271. More specifically, the retainer 1279 is located on a part of the rotatable plate 1271 radially more outward than the third bulging portion 1275 and radially more inward than the inner peripheral edge of the inner flange portion 1268 of the fixing member 1266 when viewed from above.

The rotatable plate 1271 has a first bearing groove 1281 that is recessed upward, extends annularly in the circumferential direction centering on the first axis A4 of the rotatable plate 1271, and accommodates the bearing 1277 therein. The first bearing groove 1281 is recessed upward from the lower surface of the outer peripheral portion of the rotatable plate 1271. Further, it is preferable that a second bearing groove 1282 recessed downward is formed on the upper surface of the outer peripheral portion of the base plate 1255 to receive the lower part of the bearing 1277. A space 1284 is defined between the first bulging portion 1261 of the base plate 1255 and the second bulging portion 1272 of the rotatable plate 1271.

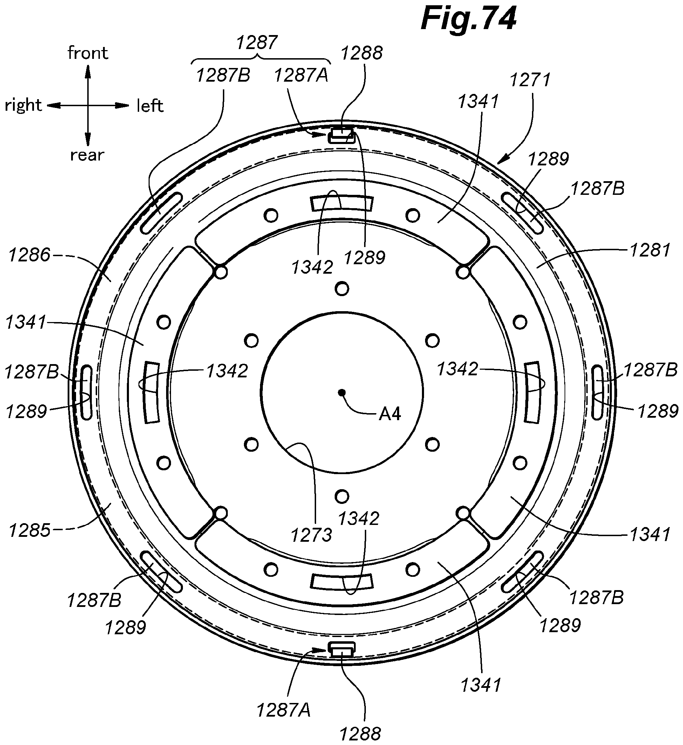

As shown in FIGS. 74 and 76 to 78, the rotatable plate 1271 is provided with a slidable member 1285 that slides on the inner flange portion 1268 of the fixing member 1266. The slidable member 1285 is made of a resin material that has a smaller coefficient of friction than metal. The slidable member 1285 is positioned on the rotatable plate 1271 radially more outward than the bearing 1277. In other words, the slidable member 1285 is provided in a part of the rotatable plate 1271radially more outward than the first bearing groove 1281. The slidable member 1285 includes a ring portion 1286 that extends annularly around the first axis A4 of the rotatable plate 1271 and a plurality of locking portions 1287 provided on the lower surface of the ring portion 1286. The surface of the ring portion 1286 faces in the vertical direction. The upper surface of the ring portion 1286 is in sliding contact with the lower surface of the inner flange portion 1268 of the fixing member 1266. The ring portion 1286 has a vertical thickness that decreases toward the radially outer part of the rotatable plate 1271. In other words, the upper surface of the ring portion 1286 may be inclined downward toward the radially outer side of the rotatable plate 1271. The lower surface of the ring portion 1286 is in contact with the rotatable plate 1271. Since the ring portion 1286 is positioned over the entire circumference of the rotatable plate 1271, direct contact between the rotatable plate 1271 and the inner flange portion 1268 is avoided. The slidable member 1285 may be divided into multiple segments.

The locking portions 1287 project downward from the lower surface of the ring portion 1286. The locking portions 1287 include first locking portions 1287A and second locking portions 1287B. The first locking portions 1287A form a pair, one located at a front part of the ring portion 1286 and the other at a rear part thereof. A lower end of each first locking portion 1287 may be provided with a claw part 1288 extending in a radially outward direction of the rotatable plate 1271. The second locking portions 1287B are preferably arranged at equal intervals in the circumferential direction of the ring portion 1286. In this embodiment, three-second locking portions 1287B are arranged on each lateral side of the first locking portions 1287A.

The rotatable plate 1271 is provided with corresponding lock holes 1289 for receiving the locking portions 1287A, and 1287B of the slidable member 1285. The lock holes 1289 are passed through the rotatable plate 1271 in the vertical direction. Each of the locking portions 1287A and 1287B is passed into the corresponding lock hole 1289 from above and projects below the lock hole 1289. A claw part 1288 provided at the lower end of each first locking portion 1287A is engaged by a lower edge of a corresponding lock hole 1289. Each second locking portion 1287B is preferably fitted into the corresponding lock hole 1289. Thereby, the slidable member 1285 is attached to the rotatable plate 1271.

When the slidable member 1285 is attached to the rotatable plate 1271, the locking portions 1287 overlap with the bearing 1277 when viewed from the radial direction of the rotatable plate 1271 or from a side. Further, the upper surface of the ring portion 1286 is located below the upper end of the second bulging portion 1272, or the upper surface thereof. The rotatable plate 1271 may be provided with a downwardly recessed annular receiving groove for receiving the ring portion 1286.

The inner flange portion 1268 of the fixing member 1266 may press the rotatable plate 1271 toward the base plate 1255 via the slidable member 1285. This suppresses upward displacement of the rotatable plate 1271.

As shown in FIG. 76, the rotatable part 1252 further includes a fixing bracket 1291 that connects the rotatable plate 1271 to the seat cushion frame 1214. The fixing bracket 1291 is formed into a plate shape with a vertically facing surface. The fixing bracket 1291 may be connected to the left and right seat cushion side members 1218. An opening 1293 is vertically passed through the center of the fixing bracket 1291. A plurality of fastening hole 1294 is formed around the opening 1293, and bolts 1276 provided on the third bulging portion 1275 are passed through these fastening holes 1294. The rotatable plate 1271 and the fixing bracket 1291 are fastened to each other by threading nuts with these bolts 1276.

As shown in FIGS. 76 to 78, a support tube 1301 extending vertically is inserted into the first bearing hole 1262 and the second bearing hole 1273. The support tube 1301 is a cylinder with both upper and lower ends open. The support tube 1301 is made of metal. An annular rib 1302 bulging outward is formed on the outer periphery of the support tube 1301. The first bearing hole 1262 of the base plate 1255 is located below the annular rib 1302. A cylindrical bush 1303 is attached to the edge of the second bearing hole 1273 of the rotatable plate 1271. The bush 1303 is supported by a part of the support tube 1301 located above the annular rib 1302. The support tube 1301 is rotatably supported by the second bearing hole 1273 of the rotatable plate 1271 via the bush 1303. The support tube 1301 positions the base plate 1255 and the rotatable plate 1271 on the first axis A4.

The rotation actuator 1253 rotates the rotatable plate 1271 relative to the base plate 1255. As shown in FIGS. 72 and 77, the rotation actuator 1253 is attached to the lower surface of the base plate 1255. The rotation actuator 1253 includes an electric motor 1311 and a speed reduction mechanism 1312. In this embodiment, the speed reduction mechanism 1312 includes a pinion 1315 fitted to the output shaft 1313 of the electric motor 1311 and a gear 1316 attached to the rotatable plate 1271. The pinion 1315 and the gear 1316 consist of spur gears. The gear 1316 is centered on the first axis A4. The gear 1316 is attached to the lower surface of the rotatable plate 1271 via a spacer 1317 and is positioned within the space 1284. The number of teeth of the gear 1316 is greater than the number of teeth of the pinion 1315.

The rotation actuator 1253 may be attached to the lower surface of the base plate 1255. The output shaft 1313 of the rotation actuator 1253 extends upward from the speed reduction mechanism 1312. The output shaft 1313 passes through a through hole 1319 formed in the base plate 1255 and extends into the space 1284. The pinion 1315 fitted to the output shaft 1313 is positioned within the space 1284 and meshes with the gear 1316. The electric motor 1311 and the speed reduction mechanism 1312 are thus positioned under the base plate 1255.

The rotation lock device 1254 selectively inhibits rotation of the rotatable plate 1271 relative to the base plate 1255. As shown in FIGS. 72, 78, and 79, the rotation lock device 1254 is attached to the lower surface of the base plate 1255. The rotation lock device 1254 is, for example, a per se known device having a holder 1322 provided on the lower surface of the base plate 1255, a lock claw 1321 rotatably supported by the holder 1322, and a lock release actuator 1351 that rotates the lock claw 1321. The lock claw 1321 is supported by the holder 1322 so as to be rotatable about a second axis B4.

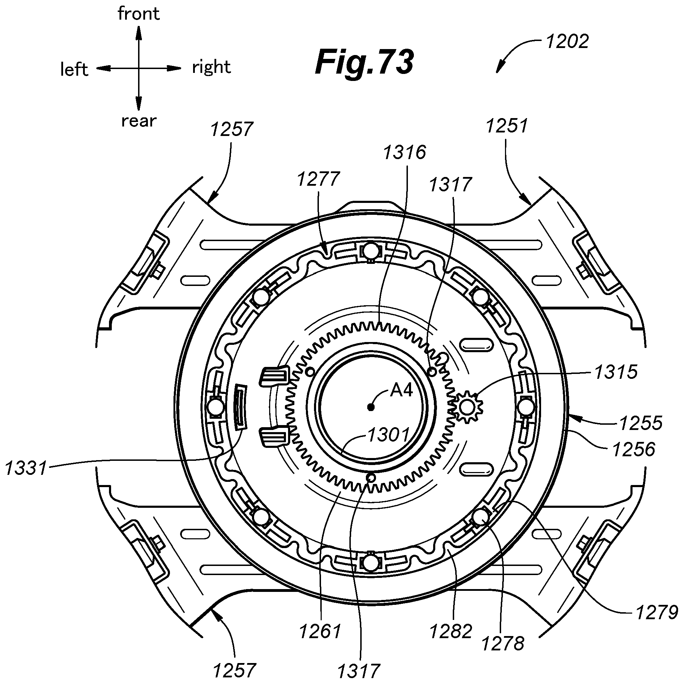

As shown in FIGS. 73 and 78, an insertion hole 1331 is vertically passed through the base plate 1255 to allow the lock claw 1321 to pass therethrough. A plurality of lock holes 1332 are formed in the rotatable plate 1271 and can be selectively engaged with the lock claw 1321. The lock holes 1332 are preferably arranged at 90 degree intervals about the first axis A4. The lock holes 1332 are preferably arranged between the third bulge bulging portions 1275 so as to alternate with the third bulges. When the rotatable plate 1271 is at each predetermined rotational position relative to the base plate 1255, the insertion hole 1331 faces one of the lock holes 1332.

As shown in FIGS. 74 and 76 to 78, a reinforcing plate 1341 is attached to the lower surface of the rotatable plate 1271. The reinforcing plate 1341 has a vertically facing surface and extends in the circumferential direction centered on the first axis A4. The reinforcing plate 1341 may be formed by a plurality of segments that jointly form an annular member centered on the first axis A4. In this embodiment, the reinforcing plate 1341 consists of four segments. A central part of each segment of the reinforcing plate 1341 preferably opposes the corresponding lock hole 1332. The two ends of each segment of the reinforcing plate 1341 in the circumferential direction may cover the opening of the corresponding third bulging portion 1275. The reinforcing plate 1341 may be attached to the rotatable plate 1271 by using fasteners such as bolts and nuts. Alternatively, the reinforcing plate 1341 may be attached to the rotatable plate 1271 by welding. The thickness of the reinforcing plate 1341 is preferably greater than the thickness of the rotatable plate 1271. The reinforcing plate 1341 increases the section modulus and the second moment of inertia of the rotatable plate 1271 around each lock hole 1332 thereof. As shown in FIG. 74, a through hole 1342 facing each lock hole 1332 is formed in the central part of the corresponding segment of the reinforcing plate 1341.

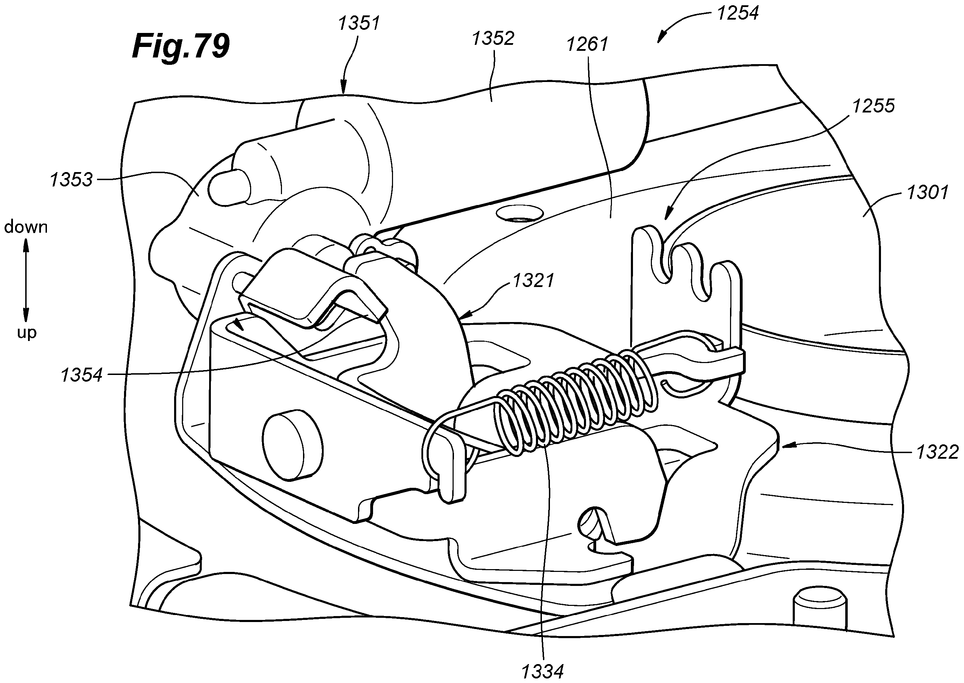

As shown in FIG. 78, the lock claw 1321 is movable between a lock position in which it engages the rotatable plate 1271 and a release position in which it releases the rotatable plate 1271. At the lock position, the lock claw 1321 passes through the insertion hole 1331 and fits into one of the lock holes 1332 and the corresponding through hole 1342. As shown in FIG. 79, a biasing member 1334 is provided between the lock claw 1321 and the holder 1322 to urge the lock claw 1321 toward the lock position. The biasing member 1334 may be a tension coil spring.

The lock release actuator 1351 moves the lock claw 1321 from the lock position to the release position. As shown in FIGS. 78 and 79, the lock release actuator 1351 includes an electric motor 1352, a speed reduction mechanism 1353, and an arm 1354 fitted to the output shaft of the speed reduction mechanism 1353. The arm 1354 is configured to engage the lock claw 1321. When the electric motor 1352 is driven, the arm 1354 rotates against the biasing force of the biasing member 1334, and the arm 1354 moves the lock claw 1321 from the lock position to the release position. When the electric motor 1352 stops, the lock claw 1321 moves from the release position to the lock position under the urging force of the biasing member 1334.

Note that in other embodiments, the rotation lock device 1254 may be changed between the locked state and the released state by manual operation of the user.

As shown in FIG. 71, a plurality of base-side peeling suppression units 1361 may be provided on the upper surfaces of the front and rear cross members 1257. The base-side peeling suppression units 1361 may have a per se known configuration including, for example, a first base-side hook 1363 and a second base-side hook 1364.

A plurality of rotatable-side peeling suppression units may be provided on the lower surface of the fixing bracket 1291. The rotatable-side peeling suppression units may each have a per se known structure that includes a rotatable-side hook that vertically opposes the first base-side hook 1363 at an interval and a locking piece that vertically opposes the second base-side hook 1364 at an interval.

When a load is applied to the seat main body 1203, the first base-side hook 1363 of each base-side peeling suppression unit 1361 engages the rotatable-side hook of the corresponding rotatable-side peeling suppression unit so that the rotatable part 1252 is prevented from moving away or peeling away from the base part 1251. Further, when a further load is applied to the seat main body 1203, the second base-side hook 1364 of each base-side peeling suppression unit 1361 engages the locking piece of the corresponding rotatable-side peeling suppression unit so that the rotatable part 1252 is prevented from moving away or peeling away from the base part 1251.

Next, a method for manufacturing the car seat device 1201 will be described in the following. First, the support tube 1301 is subjected to a bulge forming process to form the annular rib 1302. Next, the bush 1303 is attached to the second bearing hole 1273 of the rotatable plate 1271, and the gear 1316 is attached thereto. After that, the support tube 1301 is inserted into the second bearing hole 1273. In this way, the rotatable plate 1271 is rotatably supported by the support tube 1301.

Next, the base plate 1255, the bearing 1277, and the rotatable plate 1271 are placed one on top of the other, and the fixing member 1266 is placed around the outer periphery of the base plate 1255 and the rotatable plate 1271. First, the slidable member 1285 is attached to the rotatable plate 1271. More specifically, after each of the locking portions 1287A and 1287B of the slidable member 1285 is passed through the corresponding lock hole 1289, the claw part 1288 provided at the lower end of the first locking portion 1287A is engaged by the lower edge of the corresponding lock hole 1289. As a result, each locking portion 1287 is prevented from coming out of the corresponding lock hole 1289 so that the slidable member 1285 is fixed to the rotatable plate 1271 in a stable manner. Next, the lower part of the support tube 1301 is inserted into the first bearing hole 1262 of the base plate 1255. At this time, the bearing 1277 is interposed between the rotatable plate 1271 and the base plate 1255. The fixing member 1266 is then attached to the base plate 1255. Specifically, the lower part of the outer peripheral surface of the fixing member 1266 and the upper part of the inner peripheral surface of the vertical wall 1256 of the base plate 1255 may be welded to each other. At this time, the lower surface of the inner flange portion 1268 comes into contact with the upper surface of the slidable member 1285. In this way, the base plate 1255, the bearing 1277, the rotatable plate 1271, the fixing member 1266, and the slidable member 1285 are assembled.

Thereafter, the rotation actuator 1253 is attached to the base plate 1255, and the pinion 1315 is meshed with the gear 1316. Further, the rotation lock device 1254 including the lock release actuator 1351 is attached to the base plate 1255. In this way, the rotation device 1202 is assembled.

Thereafter, the front and rear cross members 1257 are connected to the left and right upper rails 1238 of the slide device 1204 provided on the floor 1205. Then, the seat main body 1203 is attached to the fixing bracket 1291. The car seat device 1201 is thus assembled in the manner described above.

Since the slidable member 1285 is fixed to the rotatable plate 1271 in this manner, shifting of the slidable member 1285 can be suppressed. Since the locking portions 1287 overlap with the bearing 1277 when viewed from the radial direction of the rotatable plate 1271, the thickness of the rotation device 1202 in the vertical direction can be minimized. Furthermore, since the slidable member 1285 does not overlap with the first bearing groove 1281 and is positioned below the upper surface of the second bulging portion 1272 when viewed from the vertical direction, the thickness of the rotation device 1202 in the vertical direction can be further reduced.

The upper surface of the ring portion 1286 is inclined downward toward the radially outer part of the rotatable plate 1271. This reduces the contact area between the upper surface of the ring portion 1286 and the inner flange portion 1268, thereby reducing the rotational resistance of the rotatable plate 1271. Additionally, when the rotatable plate 1271 is tilted with respect to the base plate 1255 and the fixing member 1266, for example when a load is applied to the seat main body 1203, the contact area between the upper surface of the slidable member 1285 and the inner flange portion 1268 increases so that the fixing member 1266 can retain the rotatable plate 1271 in a stable manner.

**LIST OF REFERENCE NUMERALS**

| | | | |
|---|---|---|---|
| 1: | car seat device | 2: | rotating device |
| 3: | seat main body | 4: | slide device |
| 5: | floor | 11: | seat cushion |
| 37: | lower rail | 38: | upper rail |
| 51: | base part | 52: | rotatable part |
| 53: | rotation actuator | 54: | rotation lock device |
| 56: | base plate | 57: | cross member |
| 66: | fixed member | 67: | tube wall |
| 68: | inner flange | 69: | connecting piece |
| 71: | rotatable plate | 72: | fixing bracket |
| 85: | slidable member | 85A: | vertical wall |
| 85B: | lower wall portion | 85C: | upper wall portion |
| 111: | electric motor | 112: | reduction mechanism |
| 113: | output shaft | 115: | pinion |
| 116: | gear | 121: | lock claw |
| 121A: | arm part | 121B: | beam part |
| 121C: | claw part | 122: | holder |
| 123: | peripheral wall | 124: | end wall |
| 126: | opening | 131: | insertion hole |
| 132: | lock hole | 151: | lock release actuator |
| 152: | electric motor | 153: | reduction mechanism |
| 154: | arm | 155: | reinforcement plate |
| 155A: | through hole | 161: | base-side peeling suppression unit |
| 163: | first base-side hook | 164: | second base-side hook |
| 165: | roller support wall | 166: | roller |
| 181: | contact surface | 183: | rotatable-side peeling suppression unit |
| 185: | rotatable-side hook | 186: | locking piece |

## Claims

1. A rotation device provided between a floor and a seat cushion to rotatably support the seat cushion with respect to the floor, comprising:
a base plate provided on a side the floor;
a rotatable plate provided on a side of the seat cushion and rotatably supported by the base plate;
a rotation actuator that rotates the rotatable plate with respect to the base plate; and
a rotation lock device that selectively prohibits rotation of the rotatable plate with respect to the base plate,
wherein the rotation actuator and the rotation lock device are attached to a lower surface of the base plate.

2. The rotation device according to claim 1, wherein the rotation lock device includes a holder that protrudes downward from a lower surface of the base plate and a lock clawthat is rotatably supported by the holder and configured to pass through the base plate into engagement with the rotatable plate,
the holder includes a peripheral wall extending in a circumferential direction centered on a first axis which is a rotational axis of the rotatable plate, and a pair of end walls extending radially inward from two ends of the peripheral wall toward the first axis, and
the lock claw is rotatably supported by the end walls and provided with a pair of arm parts that are rotatably supported by and in sliding contact with the corresponding end walls.

3. The rotation device according to claim 2, wherein each of the end walls passes through an opening formed in the base plate and extends above the base plate, and a second axis which is a rotational axis of the arm parts is positioned above the base plate.

4. The rotation device according to claim 3, wherein a gear centered on the rotational axis is provided on a lower surface of the rotatable plate, and the rotation actuator has a pinion that meshes with the gear, the second axis being placed above the gear.

5. The rotation device according to claim 4, wherein the rotation actuator includes an electric motor and a speed reduction mechanism that reduces a rotational speed of the electric motor and transmits a rotation of the electric motor to the pinion, and the electric motor and the speed reduction mechanism are positioned below the base plate.

6. The rotation device according to claim 2, wherein the rotation actuator and the rotation lock device are arranged at point-symmetrical positions about the first axis.

7. The rotation device according to claim 2, wherein the base plate is formed in a circular shape, an annular fixing member is attached to an outer peripheral edge of the base plate, a pair of laterally extending cross members are attached to a front end and a rear end of the base plate, respectively, and the cross members are connected to a member on a side of the floor.

8. The rotation device according to claim 7, wherein the fixing member includes a cylindrical tube wall centered on the first axis, an inner flange extending from an upper edge of the tube wall above an upper surface of the rotatable plate, and a plurality of connecting pieces extending from a lower edge of the tube wall below a lower surface of the base plate,
a slidable member is provided on the inner flange, and
the slidable member includes a vertical wall portion that abuts an inner peripheral edge of the inner flange and extends in a vertical direction, a lower wall portion extending radially outward from a lower end of the vertical wall portion with respect to the first axis along a lower surface of the inner flange, and an upper wall portion extending radially outward from an upper end of the vertical wall portion with respect to the first axis along an upper surface of the inner flange,
the lower wall portion being longer than the upper wall portion in a radial direction centering on the first axis.

9. The rotation device according to claim 2, wherein
the rotatable plate is provided with a plurality of lock holes that can be selectively engaged by the lock claw,
a reinforcing plate is provided at a position corresponding to one of the lock holes of the rotatable plate, and
the reinforcing plate is provided with a through holeat a position opposing the lock hole.

10. The rotation device according to claim 9, wherein the lock claw is provided with a claw part that is configured to project into the lock hole from below, and the claw part has a tapered shape having a width getting progressively narrower toward a tip thereof.

11. The rotation device according to claim 10, wherein the reinforcing plate has a greater thickness than the rotatable plate, and the through holeis shorter than the lock hole along a circumferential direction with respect to the first axis.

12. The rotation device according to claim 7, wherein the rotatable plate is attached to the seat cushion via a fixing bracket, and a plurality of rollers are interposed between the cross member and the fixing bracket.

13. The rotation device according to claim 12, wherein the rollers are arranged on an imaginary circle centered on the first axis, the imaginary circle entirely overlapping with the fixing bracket when viewed from a direction of the first axis.

14. A method for manufacturing a rotation device that is provided between a floor and a seat cushion to rotatably support the seat cushion with respect to the floor,
wherein the rotation device comprises a base plate, a rotatable plate opposing the base plate, an annular bearing interposed between the base plate and the rotatable plate, and a fixing member attached to an outer peripheral edge of the base plate,
wherein the fixing member includes a tubular tube wall received by the base plate and the rotatable plate, an inner flange extending from an upper edge of the tube wall above the rotatable plate, and a plurality of connecting pieces provided on a lower edge of the tube wall ,
the method comprising the steps of:
placing the base plate, the bearing, and the rotatable plate in a layered arrangement with the fixing member positioned along outer peripheral edges of the base plate and the rotatable plate;
bending the connecting pieces radially inward with respect to the tube wall with the base plate and the rotatable plate interposed between the inner flange and the connecting pieces,
welding the connecting pieces to the base plate.

15. The method for manufacturing a rotation device according to claim 14, wherein the connecting pieces are bent toward the base plate from a direction perpendicular to the base plate.
